# EUROPEAN PATENT APPLICATION

(11) **EP 4 840 580 A1**
(43) Date of publication of application: **18.11.2026**
(21) Application number: 24956831.2
(22) Date of filing: 28.11.2024
(51) Int. Cl.: B23P 23/04

(54) **MACHINE TOOL AND WORKPIECE MACHINING METHOD**

(30) Priority: 04.10.2024 JP 2024175282
(71) Applicant: Yamazaki Mazak Corporation, Niwa-gun, Aichi 480-0197 (JP)
(72) Inventor: HORIBE, Kazuya, Niwa-gun, Aichi 480-0197 (JP); MATSUBARA, Eiji, Niwa-gun, Aichi 480-0197 (JP); TOONNO, Kaoru, Niwa-gun, Aichi 480-0197 (JP); KITAHARA, Takashi, Niwa-gun, Aichi 480-0197 (JP)
(74) Representative: TBK
(86) International application number: PCT/JP2024/042125
(87) International publication number: WO 2026/074720

(57) **Abstract**

A machine tool includes a work holder, a machining apparatus, and a first robot. The work holder includes a table that supports a workpiece. The machining apparatus includes a machining head capable of supporting a first rotating tool for machining the workpiece supported by the table, and a plurality of linear movers configured to move the machining head three-dimensionally. The first robot includes a laser head configured to irradiate the workpiece supported by the table, and a multi-joint arm configured to change a position and an orientation of the laser head. The first robot is configured to machine the workpiece with the laser beam.

## Description

### Technical Field

The present invention relates to a machine tool and a workpiece machining method.

### Background Art

In order to improve production efficiency, using a machine tool including a plurality of heads is known.

As a related art, Patent Literature 1 discloses a machining center. The machining center described in Patent Literature 1 includes a first machining head and a second machining head.

In addition, Patent Literature 2 discloses a machine working system. The machine working system described in Patent Literature 2 includes a platform formed by connecting a plurality of orbit modules and a plurality of machining units, which move on an orbit of the platform.

### Citation List

### Patent Literature

PTL1: JP 2000-296429 A
PTL2: JP 2023-134393 A

### Summary of Invention

### Technical Problem

It is an object of the present invention to provide a machine tool and a workpiece machining method, which are capable of improving machining efficiency, preventing an increase in installation space, and maintaining precision in machining.

According to some embodiments, the present invention relates to a machine tool and a workpiece machining method to be described below.
(1) A machine tool includes a work holder, a machining apparatus, and a first robot. The work holder includes a table that supports a workpiece. The machining apparatus includes a machining head capable of supporting a first rotating tool for machining the workpiece supported by the table, and a plurality of linear movers configured to move the machining head three-dimensionally. The first robot includes a laser head configured to irradiate the workpiece supported by the table, and a multi-joint arm configured to change a position and an orientation of the laser head. The first robot is configured to machine the workpiece with the laser beam.
(2) A workpiece machining method includes an attaching step, a first machining step, and a second machining step. In the attaching step, a workpiece is attached either directly or indirectly to a table of a work holder. In the first machining step, the workpiece supported by the table is machined with a laser beam emitted from a laser head supported by a multi-joint arm of a first robot. In the second machining step, the workpiece supported by the table is machined with a first rotating tool supported by a machining head movable three-dimensionally. The first machining step includes moving the laser head using the multi-joint arm. The second machining step includes moving the machining head using a plurality of linear movers.

### Effects of Invention

According to the present invention, it becomes possible to provide a machine tool and a workpiece machining method, which are capable of improving machining efficiency, preventing an increase in installation space, and maintaining precision in machining.

### Brief Description of Drawings

[FIG. 1] FIG. 1 is a schematic perspective view of a machine tool according to a first embodiment, schematically illustrating the machine tool.
[FIG. 2] FIG. 2 is a schematic perspective view of the machine tool according to the first embodiment, schematically illustrating the machine tool.
[FIG. 3] FIG. 3 is a schematic perspective view of the machine tool according to the first embodiment, schematically illustrating the machine tool.
[FIG. 4] FIG. 4 is a schematic plan view of the machine tool according to the first embodiment, schematically illustrating the machine tool.
[FIG. 5] FIG. 5 is a schematic cross-sectional view of a state in which a tip end portion of a laser head is inserted into a recess portion of a protector, schematically illustrating the state.
[FIG. 6] FIG. 6 is a schematic cross-sectional view of a state in which the recess portion of the protector is covered with a cover, schematically illustrating the state.
[FIG. 7] FIG. 7 is a schematic cross-sectional view of a state in which the tip end portion of the laser head is inserted into the recess portion of the protector according to a modification, schematically illustrating the state.
[FIG. 8] FIG. 8 is a schematic cross-sectional view of a state in which the protector according to a modification is positioned at a retracted position, schematically illustrating the state.
[FIG. 9] FIG. 9 is a schematic plan view of the machine tool according to the first embodiment, schematically illustrating the machine tool.
[FIG. 10] FIG. 10 is a schematic front view of a movable wall, illustrating a part of the movable wall in an enlarged manner.
[FIG. 11] FIG.11 is a schematic plan view of a machine tool according to a first modification of the first embodiment, schematically illustrating the machine tool.
[FIG. 12] FIG. 12 is a schematic plan view of the machine tool according to the first embodiment, schematically illustrating the machine tool.
[FIG. 13] FIG. 13 is a schematic plan view of the machine tool according to the first embodiment, schematically illustrating the machine tool.
[FIG. 14] FIG. 14 is a schematic plan view of the machine tool according to the first embodiment, schematically illustrating the machine tool.
[FIG. 15] FIG. 15 is a schematic plan view of a machine tool according to a second modification of the first embodiment, schematically illustrating the machine tool.
[FIG. 16] FIG. 16 is a schematic side view of the machining head, schematically illustrating a part of the machining head.
[FIG. 17] FIG. 17 is a schematic perspective view of a first robot and a base stand, schematically illustrating examples of the first robot and the base stand.
[FIG. 18] FIG. 18 is a schematic perspective view of the laser head attached to a multi-joint arm, illustrating an example of the laser head in an enlarged manner.
[FIG. 19] FIG. 19 is a schematic plan view of the machine tool according to the first embodiment, schematically illustrating the machine tool.
[FIG. 20] FIG. 20 is an enlarged view of a region surrounded by a rectangle RC of a dashed-dotted line in FIG. 19.
[FIG. 21] FIG. 21 is a schematic plan view of the machine tool according to the first embodiment, illustrating a part of the machine tool in an enlarged manner.
[FIG. 22] FIG. 22 is a schematic perspective view of a state in which a cutout mode is performed, schematically illustrating the state.
[FIG. 23] FIG. 23 is a schematic perspective view of a state in which a laser marking mode is performed, schematically illustrating the state.
[FIG. 24] FIG. 24 is a schematic perspective view of a machine tool according to a second embodiment, schematically illustrating the machine tool.
[FIG. 25] FIG. 25 is a schematic plan view of the machine tool according to the second embodiment, schematically illustrating the machine tool.
[FIG. 26] FIG. 26 is a schematic perspective view of a state in which a workpiece is supported by a table, schematically illustrating the state.
[FIG. 27] FIG. 27 is a schematic plan view of the machine tool according to the second embodiment, schematically illustrating the machine tool.
[FIG. 28] FIG. 28 is a schematic perspective view of a second robot and a base stand, schematically illustrating examples of the second robot and the base stand.
[FIG. 29] FIG. 29 is a schematic perspective view of a tool holder attached to a second multi-joint arm, schematically illustrating an example of the tool holder in an enlarged manner.
[FIG. 30] FIG. 30 is a schematic side view of a machining head according to a modification, schematically illustrating the machining head.
[FIG. 31] FIG. 31 is a schematic plan view of the machine tool according to the second embodiment, schematically illustrating the machine tool.
[FIG. 32] FIG. 32 is a schematic plan view of a machine tool system according to the second embodiment, schematically illustrating the machine tool system.
[FIG. 33] FIG. 33 is a view of a state in which at least one tool changer is capable of changing a first rotating tool supported by a machining head to another first rotating tool, schematically illustrating the state.
[FIG. 34] FIG. 34 is a view of a state in which at least one tool changer is capable of changing a second rotating tool supported by the tool holder of the second robot to another second rotating tool, schematically illustrating the state.
[FIG. 35] FIG. 35 is a diagram of a state in which a controller is capable of controlling a plurality of pieces of to-be-controlled equipment, schematically illustrating the state.
[FIG. 36] FIG. 36 is a schematic perspective view of a state in which a first machining mode is performed, schematically illustrating the state.
[FIG. 37] FIG. 37 is a schematic perspective view of the state in which the first machining mode is performed, schematically illustrating the state.
[FIG. 38] FIG. 38 is a schematic perspective view of a state after a rotation mode is performed, schematically illustrating the state.
[FIG. 39] FIG. 39 is a schematic perspective view of a state in which a second machining mode and a third machining mode are performed, schematically illustrating the state.
[FIG. 40] FIG. 40 is a schematic perspective view of the state in which the second machining mode and the third machining mode are performed, schematically illustrating the state.
[FIG. 41] FIG. 41 is a schematic plan view of a machine tool according to a first modification of the second embodiment, schematically illustrating the machine tool.
[FIG. 42] FIG. 42 is a schematic plan view of a machine tool according to the first modification of the second embodiment, schematically illustrating the machine tool.
[FIG. 43] FIG. 43 is a flowchart of a workpiece machining method according to a third embodiment, illustrating an example of the workpiece machining method.
[FIG. 44] FIG. 44 is a flowchart of the workpiece machining method according to the third embodiment, illustrating another example of the workpiece machining method.
[FIG. 45] FIG. 45 is a schematic plan view of an arrangement relationship between the machining apparatus and at least one robot, schematically illustrating an example of the arrangement relationship.
[FIG. 46] FIG. 46 is a schematic plan view of the arrangement relationship between the machining apparatus and at least one robot, schematically illustrating an example of the arrangement relationship.

### Description of Embodiments

Hereinafter, a machine tool 1 and a workpiece machining method according to embodiments will be described with reference to the drawings. It is to be noted that in the following description of the embodiments, portions and members having the same function are denoted by the same reference numerals, and repeated description of the portions and members denoted by the same reference numerals will be omitted.

### (Definition of Terms)

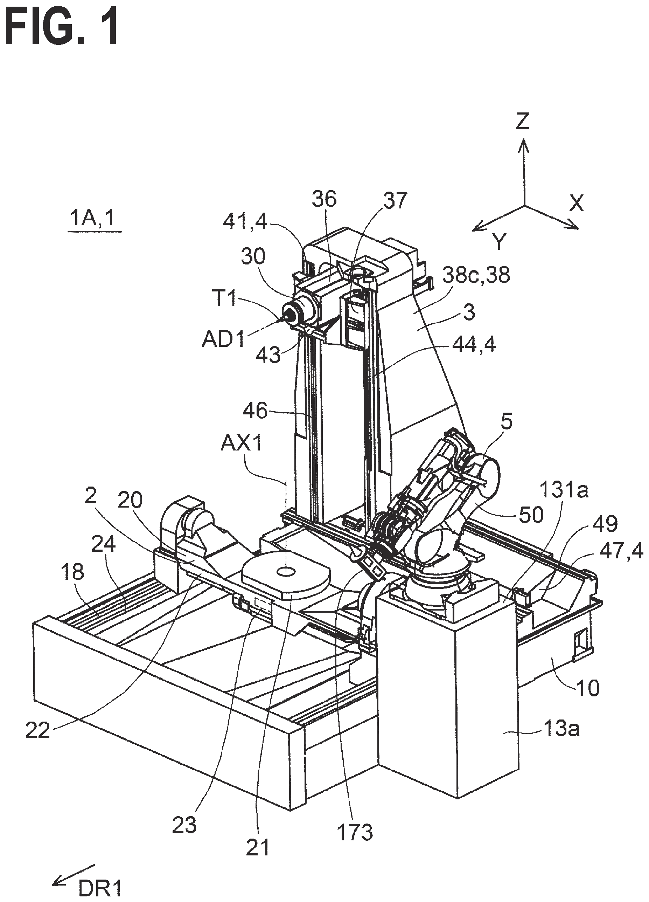

In an example illustrated in FIG. 1, a machining head 30 of a machining apparatus 3 is capable of supporting a rotating tool. Herein, the rotating tool supported by the machining head 30 will be collectively referred to as a first rotating tool.

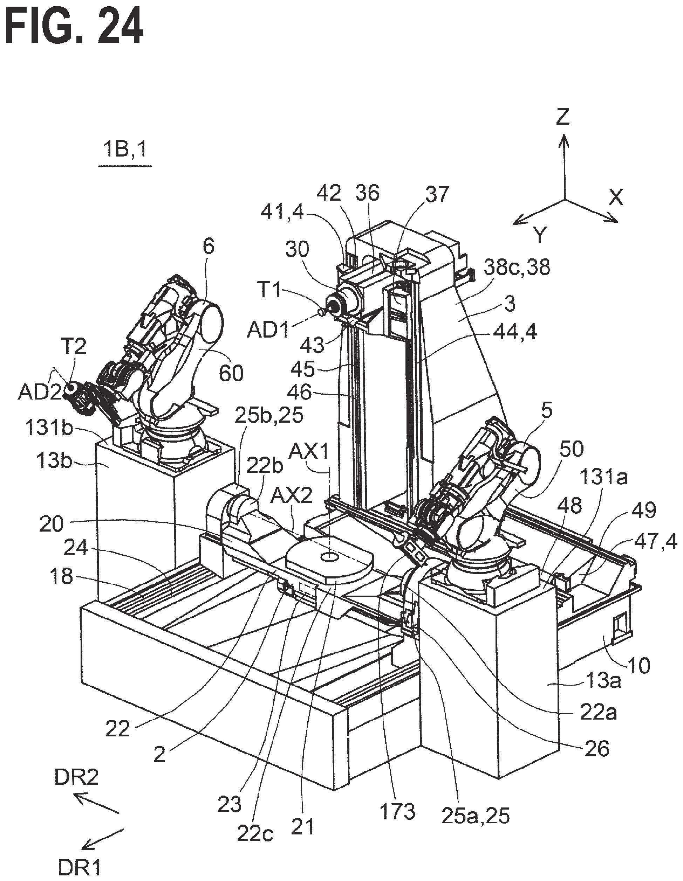

In an example illustrated in FIG. 24, a second multi-joint arm 60 of a second robot 6 is capable of supporting a rotating tool. Herein, the rotating tool supported by the second multi-joint arm 60 will be collectively referred to as a second rotating tool.

Herein, even in a case where "substantially" is not explicitly described, "parallel" includes substantially parallel. Exact mathematical parallelism is difficult to achieve due to tolerances, manufacturing errors, wear, and play between components. Hence, herein, the term "parallel" without the description of "substantially" can be all read as "substantially parallel".

Herein, even in a case where "substantially" is not explicitly described, "perpendicular" includes substantially perpendicular. Exact mathematical perpendicularity is difficult to achieve due to tolerances, manufacturing errors, wear, and play between components. Hence, herein, the term "perpendicular" without the description of "substantially" can be all read as "substantially perpendicular".

### (Definition of Directions)

Herein, the direction from the machining apparatus 3 toward a work holder 2 in a plan view (more specifically, the direction from the machining apparatus 3 toward a table apparatus 20 in the plan view) is defined as a first direction DR1. As illustrated in FIG. 24, herein, the direction from a first stationary support 25a toward a second stationary support 25b is defined as a second direction DR2. In the example illustrated in FIG. 24, the second direction DR2 is perpendicular to the first direction DR1.

### (First Embodiment)

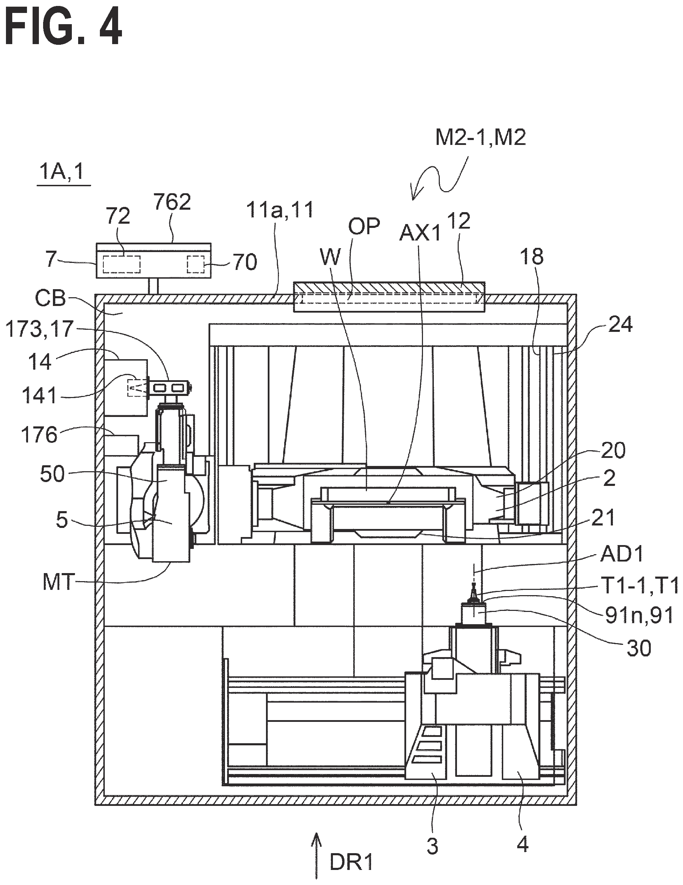

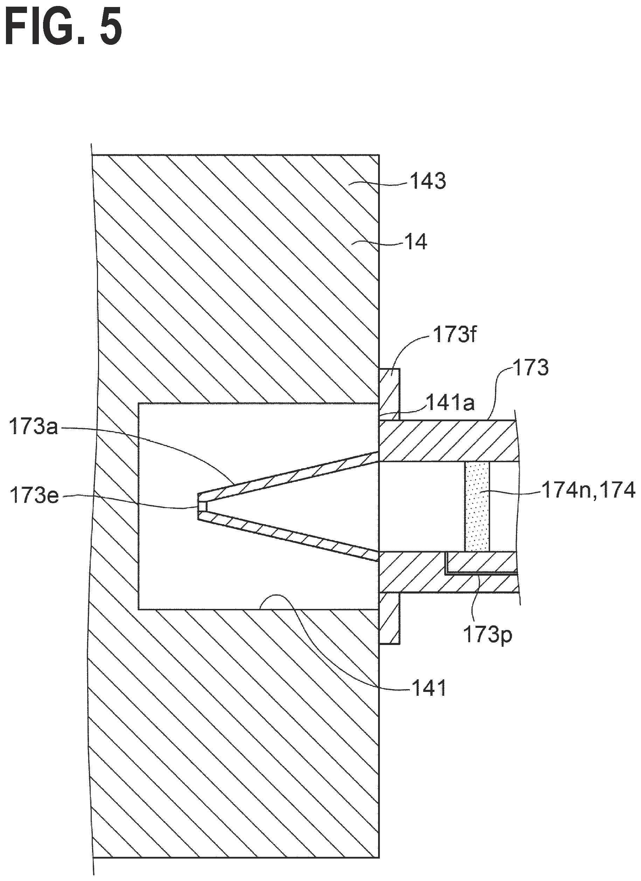

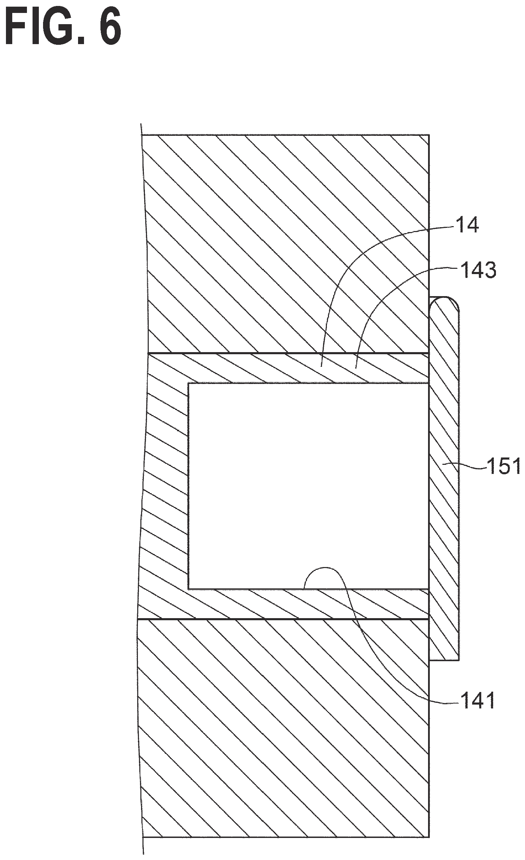

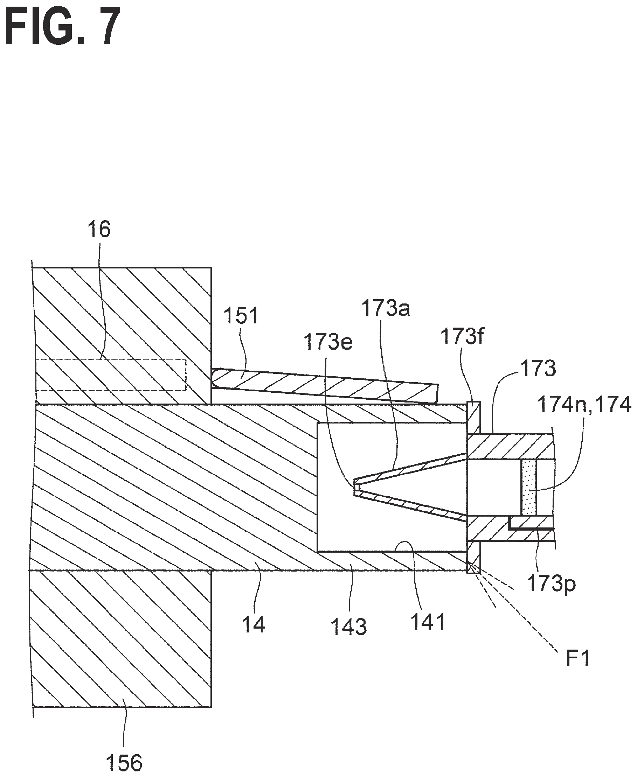

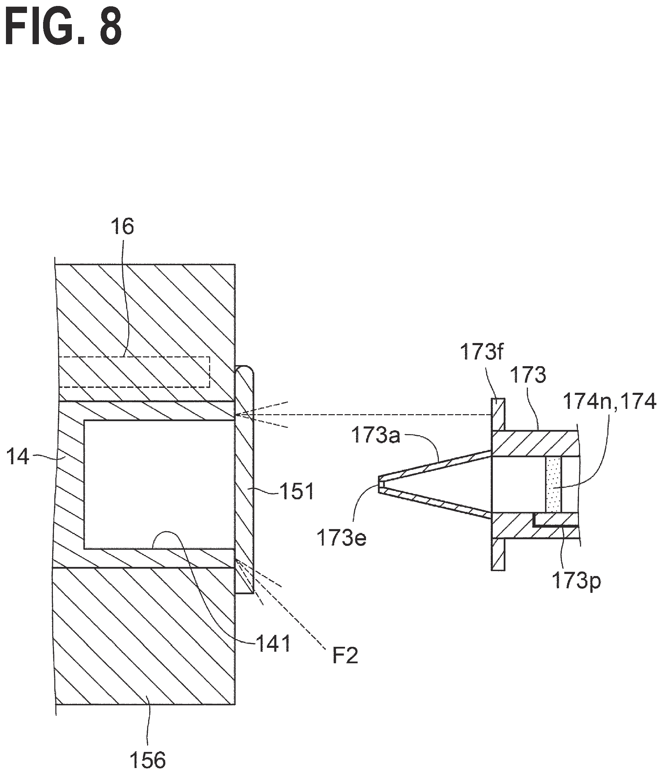

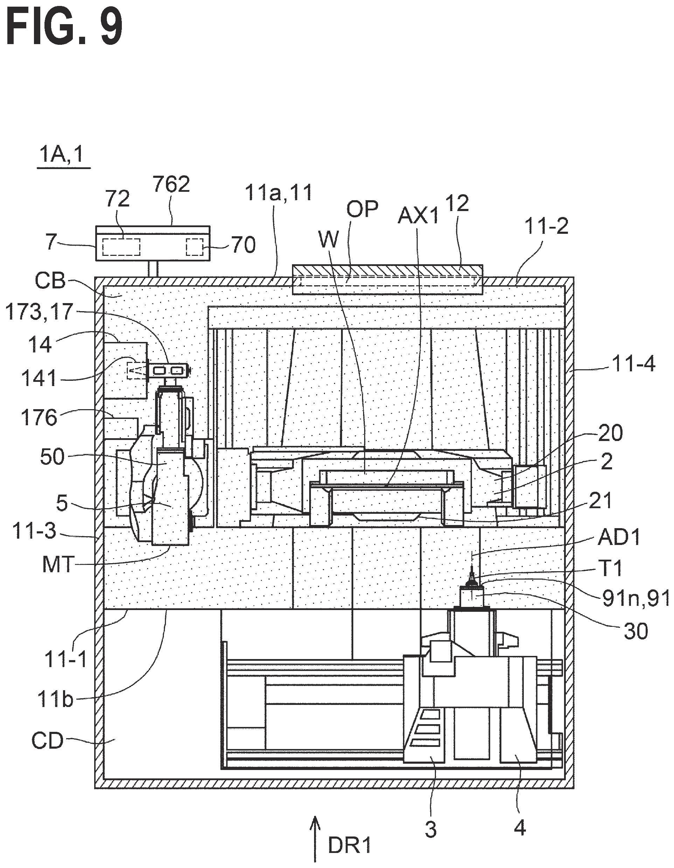

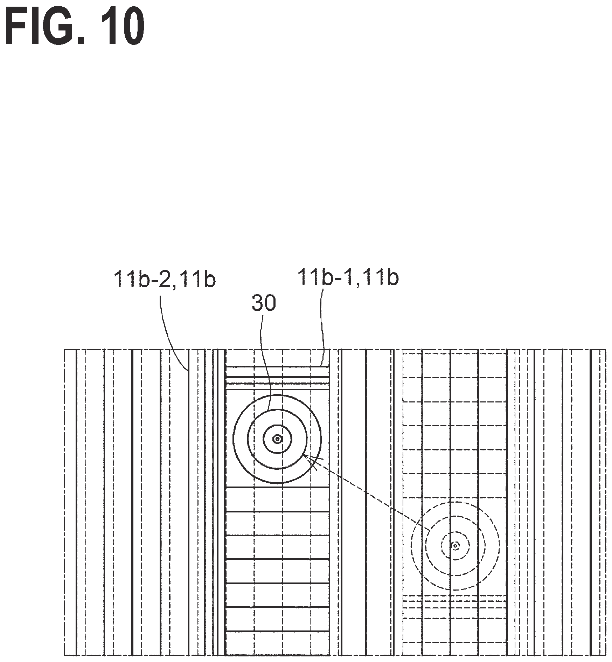

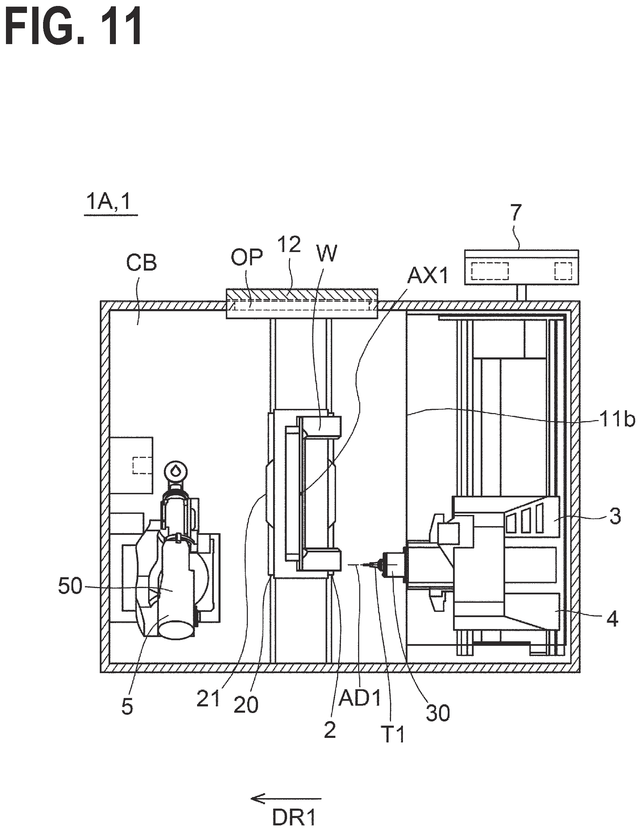

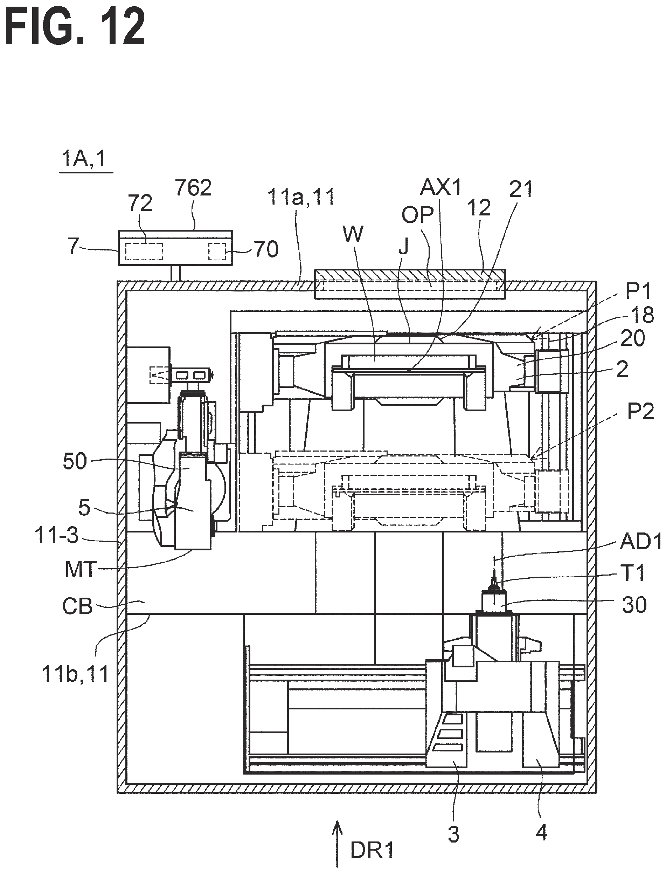

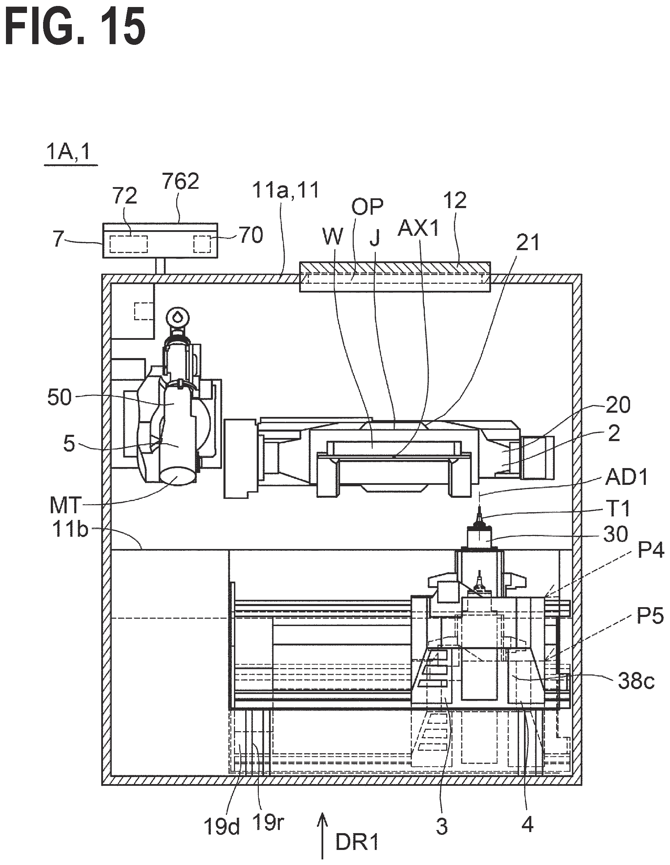

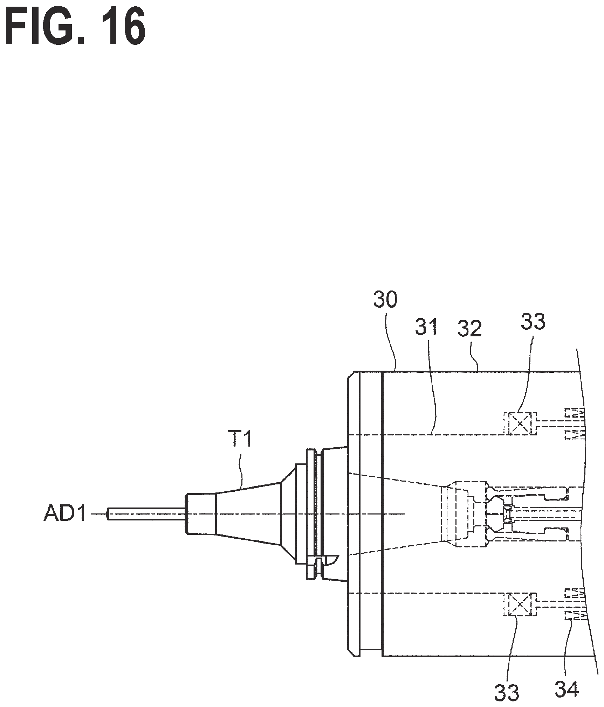

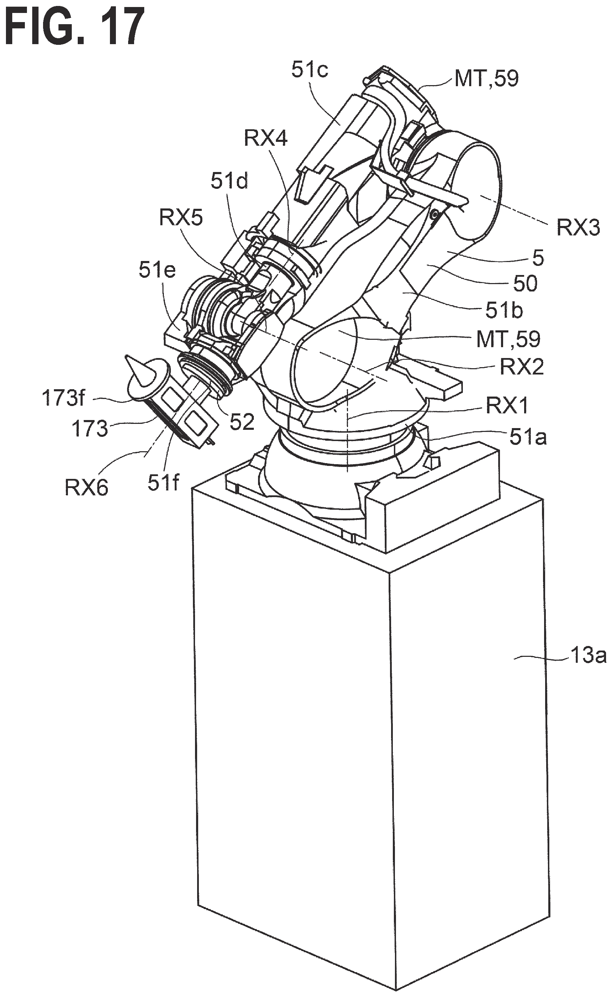

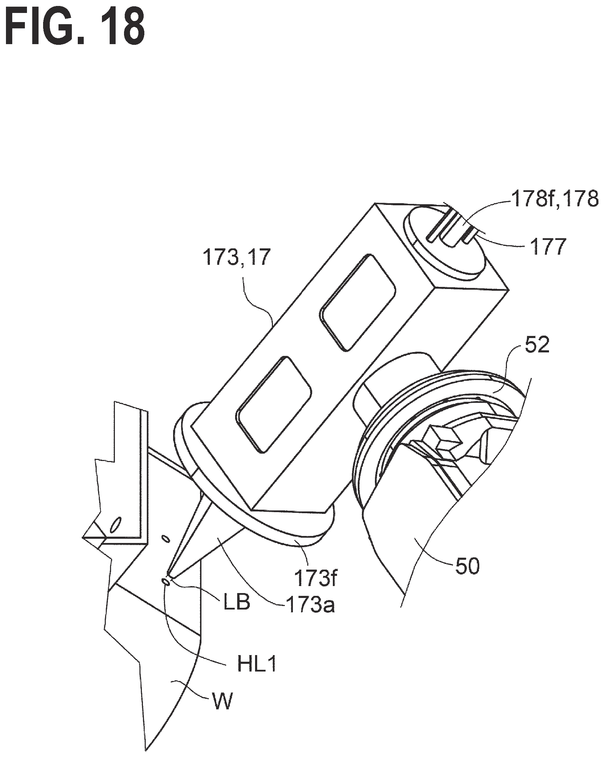

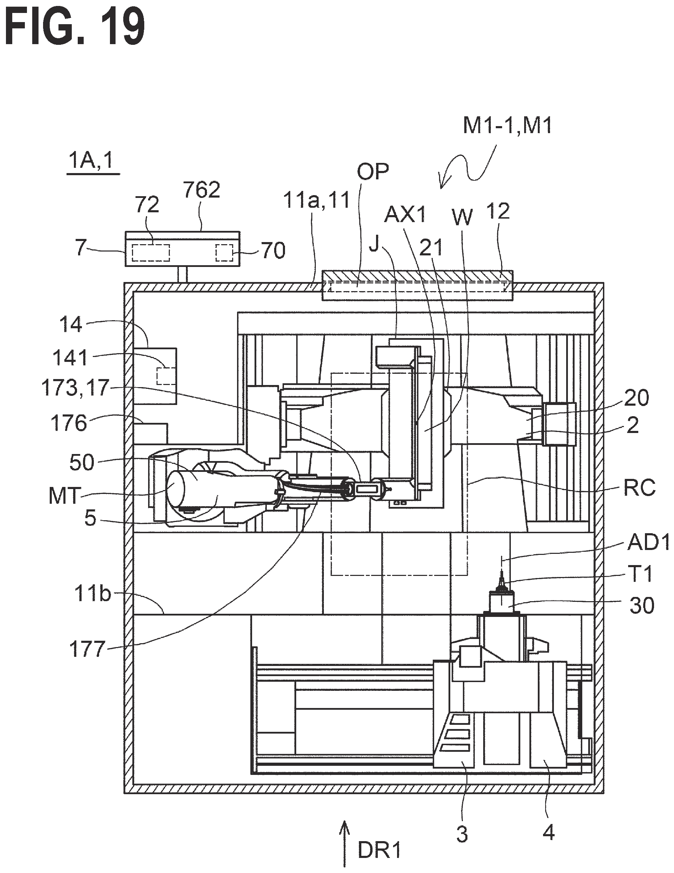

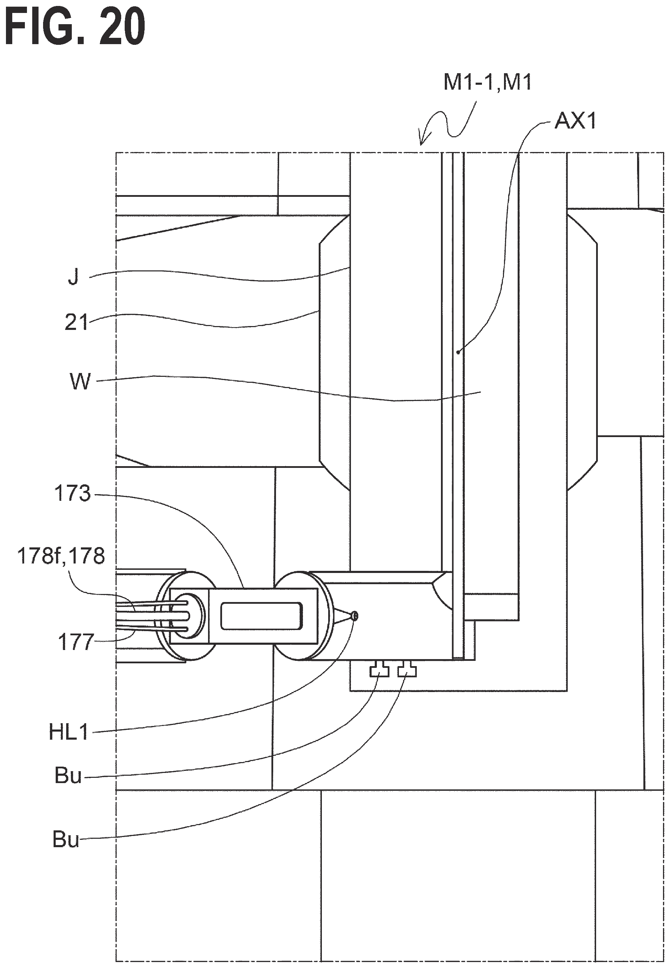

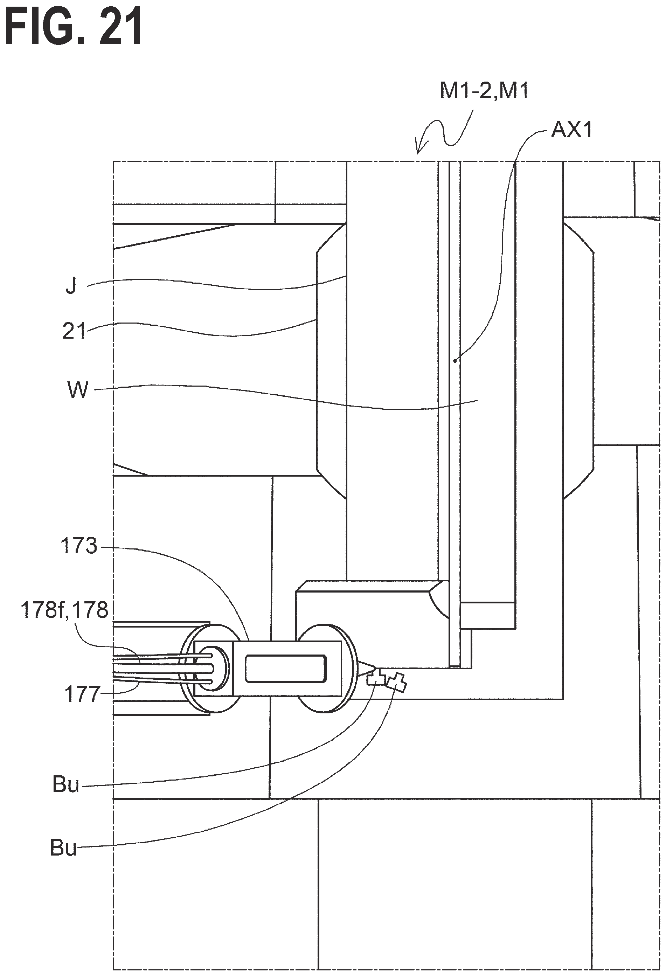

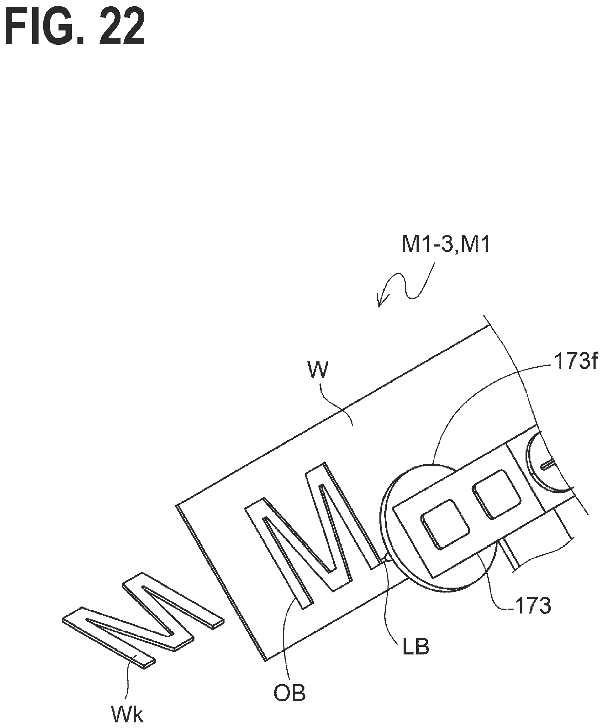

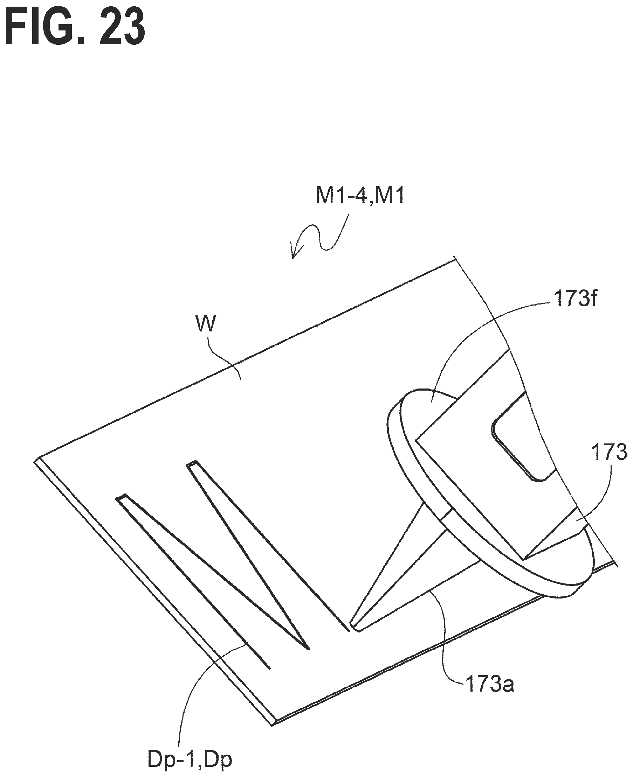

Referring to FIGs. 1 to 23, a machine tool 1A according to the first embodiment will be described. FIGs. 1 to 3 are schematic perspective views of the machine tool 1A according to the first embodiment, schematically illustrating the machine tool 1A. FIG. 4 is a schematic plan view of the machine tool 1A according to the first embodiment, schematically illustrating the machine tool 1A. FIG. 5 is a schematic cross-sectional view of a state in which a tip end portion 173a of a laser head 173 is inserted into a recess portion 141 of a protector 14, schematically illustrating the state. FIG. 6 is a schematic cross-sectional view of a state in which the recess portion 141 of the protector 14 is covered with a cover 151, schematically illustrating the state. FIG. 7 is a schematic cross-sectional view of a state in which the tip end portion 173a of the laser head 173 is inserted into the recess portion 141 of the protector 14 according to a modification, schematically illustrating the state. FIG. 8 is a schematic cross-sectional view of a state in which the protector 14 according to a modification is positioned at a retracted position F2, schematically illustrating the state. FIG. 9 is a schematic plan view of the machine tool 1A according to the first embodiment, schematically illustrating the machine tool. FIG. 10 is a schematic front view of a movable wall 11b, illustrating a part of the movable wall 11b in an enlarged manner. FIG.11 is a schematic plan view of a machine tool 1A according to a first modification of the first embodiment, schematically illustrating the machine tool 1A. FIGs. 12 to 14 are schematic plan views of the machine tool 1A according to the first embodiment, schematically illustrating the machine tool 1A. FIG. 15 is a schematic plan view of a machine tool 1A according to a second modification of the first embodiment, schematically illustrating the machine tool 1A. FIG. 16 is a schematic side view of the machining head 30, schematically illustrating a part of the machining head 30. FIG. 17 is a schematic perspective view of a first robot 5 and a base stand 13a, schematically illustrating examples of the first robot 5 and the base stand 13a. FIG. 18 is a schematic perspective view of the laser head 173, which is attached to a multi-joint arm 50, illustrating an example of the laser head 173 in an enlarged manner. FIG. 19 is a schematic plan view of the machine tool 1A according to the first embodiment, schematically illustrating the machine tool 1A. FIG. 20 is an enlarged view of a region surrounded by a rectangle RC of a dashed-dotted line in FIG. 19. FIG. 21 is a schematic plan view of the machine tool 1A according to the first embodiment, illustrating a part of the machine tool 1A in an enlarged manner. FIG. 22 is a schematic perspective view of a state in which a cutout mode M1-3 is performed, schematically illustrating the state. FIG. 23 is a schematic perspective view of a state in which a laser marking mode M1-4 is performed, schematically illustrating the state.

As illustrated in FIG. 1, the machine tool 1A according to the first embodiment includes a work holder 2, a machining apparatus 3, and a first robot 5.

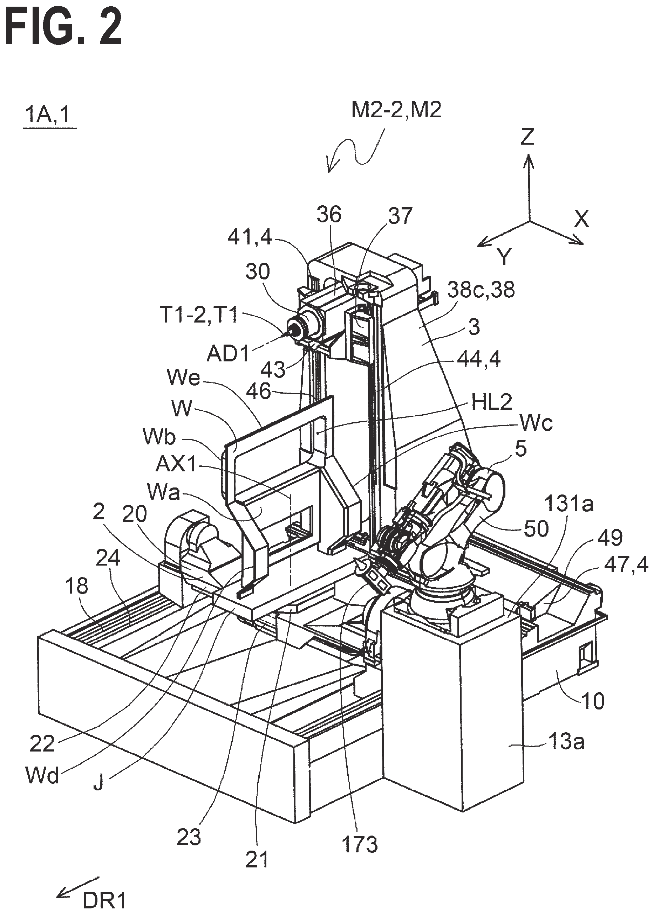

As illustrated in FIG. 2, the work holder 2 includes a table 21, which supports a workpiece W. More specifically, the work holder 2 includes the table 21, which directly or indirectly supports the workpiece W. In an example illustrated in FIG. 2, the table 21 supports the workpiece W via a jig J. Alternatively, the table 21 may directly support the workpiece W.

The machining apparatus 3 includes a machining head 30 and a plurality of linear movers 4. The machining head 30 is capable of supporting the first rotating tool T1 for machining the workpiece W supported by a table 21.

The plurality of linear movers 4 move the machining head 30 three-dimensionally. More specifically, the plurality of linear movers 4 move the machining head 30 in a direction parallel to each of three different axes.

In the example illustrated in FIG. 2, the first robot 5 includes a laser head 173, which irradiates the workpiece W supported by the table 21 with a laser beam. In addition, the first robot 5 includes a multi-joint arm 50, which changes the position and the orientation of the laser head 173. It can also be said that the first robot 5 is a multi-joint robot. The first robot 5 machines the workpiece W with the laser beam.

In the machine tool 1A according to the first embodiment, it is possible to machine the workpiece W supported by the table 21 with the first rotating tool T1, which is supported by the machining apparatus 3, and the laser head 173, which is supported by the first robot 5. This configuration eliminates the need for moving the workpiece between the table of the machine tool for machining the workpiece with the first rotating tool T1 and the table of the laser beam machine, and thus improves the machining efficiency of the workpiece W.

In addition, in the machine tool 1A according to the first embodiment, the machining apparatus 3 and the first robot 5 are both disposed at positions where it is possible to machine the workpiece W supported by the table 21. This configuration prevents an increase in installation space of the machine tool 1A.

In the first embodiment, the machining apparatus 3 includes the plurality of linear movers 4, which move the machining head 30 three-dimensionally. Thus, the machining apparatus 3 is capable of performing high-precision machining as compared with a case where the machining head 30 is supported by a robot. For example, the machining apparatus 3 may be in charge of the machining that demands high precision, and the first robot 5 may be in charge of the machining that demands relatively low precision. The machining apparatus 3 may be in charge of surface cutting of the workpiece W, and the first robot 5 may be in charge of laser beam cutting of the workpiece W or laser beam marking of the workpiece W. The machining of forming a plurality of holes in the workpiece W may be performed by both the machining apparatus 3 and the first robot 5.

### (Optional and Additional Configuration)

Next, optional and additional configurations that can be adopted in the first embodiment (a second embodiment or a third embodiment to be described later) will be described with reference to FIGs. 1 to 23.

### (Workpiece W)

In the first embodiment, the second embodiment, or the third embodiment, the workpiece W to be machined by the machine tool 1 is, for example, a metal workpiece. In a case where the workpiece W is a metal workpiece, the term "machine tool" herein can be read as a "metal machining apparatus". The workpiece W to be machined by the machine tool 1 may be an aluminum workpiece. The workpiece W to be machined by the machine tool 1 may be a cast component made of aluminum.

The workpiece W to be machined by the machine tool 1 may be an automotive component or any other workpiece. The workpiece W may be a part of a vehicle body frame of an automobile. The workpiece W to be machined by the machine tool 1 may be a small-sized workpiece, or may be a large-sized workpiece. As illustrated in FIG. 2, in a case where the workpiece W is a large-sized workpiece, the height of the workpiece W (more specifically, the length from the bottom surface to a top surface We of the workpiece W) may be, for example, equal to or greater than 1000 millimeters, or equal to or greater than 1500 millimeters. In a case where the workpiece W is a large-sized workpiece, the width of the workpiece W (more specifically, the maximum value of the distance between a first side surface Wc of the workpiece W and a second side surface Wd of the workpiece W) may be, for example, equal to or greater than 1000 millimeters, or equal to or greater than 1500 millimeters. In the case where the workpiece W is the large-sized workpiece, the depth of the workpiece W (more specifically, the maximum value of the distance between a first main surface Wa and a second main surface Wb) may be, for example, equal to or greater than 300 millimeters, or equal to or greater than 500 millimeters.

### (Protector 14)

In an example illustrated in FIG. 4, the machine tool 1A includes a protector 14, which protects a tip end portion 173a of the laser head 173. The protector 14 includes a recess portion 141, which receives the tip end portion 173a of the laser head 173. In the example illustrated in FIG. 4, the protector 14 (more specifically, the recess portion 141) is provided in a machining chamber CB. The protector 14 (more specifically, the recess portion 141) may be fixed in position to the machining chamber CB, or may be movably supported by a support component 156 (see FIG. 7), which is fixed in position to the machining chamber CB.

As illustrated in FIG. 5, in a state in which the tip end portion 173a of the laser head 173 is received in the recess portion 141, an optical component 174 (for example, a lens 174n), which is disposed inside the laser head 173, and/or a laser emission port 173e of the laser head 173 are/is protected. More specifically, when the tip end portion 173a of the laser head 173 is received in the recess portion 141, the protector 14 isolates the optical component 174 (more specifically, the lens 174n), which is disposed inside the laser head 173, and the laser emission port 173e of the laser head 173 from machining atmosphere. Thus, when the tip end portion 173a of the laser head 173 is received in the recess portion 141, cutting chips and/or a coolant liquid are prevented from adhering to the optical component 174 (more specifically, the lens 174n), which is disposed inside the laser head 173, and the laser emission port 173e of the laser head 173.

For example, while the machining apparatus 3 is cutting the workpiece W, the tip end portion 173a of the laser head 173 is disposed inside the recess portion 141. In this manner, while the machining apparatus 3 is cutting the workpiece W, the cutting chips and/or the coolant liquid are/is prevented from adhering to the optical component 174 and the laser emission port 173e. On the other hand, before the laser beam is emitted from the laser head 173, the tip end portion 173a of the laser head 173 is taken out of the recess portion 141.

In an example illustrated in FIG. 5, the protector 14 includes a wall 143, which defines the recess portion 141. The laser head 173 may include a flange 173f, which abuts the wall 143. In the example illustrated in FIG. 5, the flange 173f is capable of closing an opening 141a of the recess portion 141. In this case, the recess portion 141 and the flange 173f prevent the cutting chips and/or the coolant liquid from adhering to the optical component 174 (more specifically, the lens 174n), which is disposed inside the laser head 173, and/or the laser emission port 173e of the laser head 173.

As illustrated in FIG. 6, the machine tool 1A may include a cover 151, which covers the recess portion 141. The cover 151 covers the recess portion 141 when the protector 14 is not used (more specifically, when the tip end portion 173a of the laser head 173 is not inserted into the recess portion 141). By covering the recess portion 141, the cover 151 prevents dirt from adhering to the recess portion 141 when the protector 14 is not used.

As illustrated in FIGs. 7 and 8, the machine tool 1A may include a mover 16, which moves the protector 14 between an extended position F1 (see FIG. 7) and a retracted position F2 (see FIG. 8). In the example illustrated in FIGs. 7 and 8, the machine tool 1A includes the support component 156, which supports the protector 14 to be movable. In the example illustrated in FIG. 7, when the protector 14 is positioned at the extended position F1, the cover 151 opens the recess portion 141. After the cover 151 opens the recess portion 141, the tip end portion 173a of the laser head 173 is inserted into the recess portion 141. In the example illustrated in FIG. 8, when the protector 14 is positioned at the retracted position F2, the cover 151 covers the recess portion 141. Also, in the example illustrated in FIG. 8, when the protector 14 is positioned at the retracted position F2, the protector 14 is retracted inside the support component 156. It is to be noted that in the examples illustrated in FIGs. 7 and 8, the mover 16, which moves the protector 14, may be omitted, and a driver for opening and closing the cover 151 may be provided.

### (Coolant Supplier 91)

In the example illustrated in FIG. 4, the machine tool 1A includes a coolant supplier 91, which supplies a coolant liquid toward the workpiece W supported by the table 21.

In a case where the machine tool 1A includes the coolant supplier 91, an excessive temperature rise of the first rotating tool T1 due to frictional heat is prevented, and in addition, a lubrication property between the workpiece W and the first rotating tool T1 is improved. Furthermore, the cutting chips are prevented from remaining on the workpiece W. In a case where it is possible to supply the coolant liquid to the workpiece W, it is also possible to perform heavy-duty cutting on the workpiece W made of metal by using the machining apparatus 3.

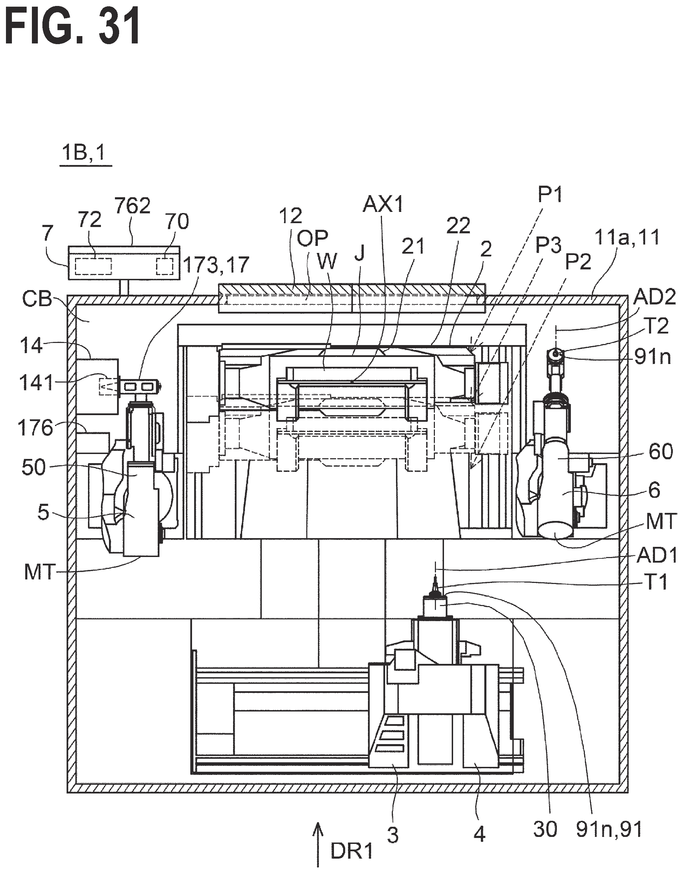

The coolant supplier 91 preferably includes a nozzle 91n, which discharges the coolant liquid. In the example illustrated in FIG. 4, the nozzle 91n is disposed on the machining head 30. Alternatively, or additionally, the nozzle 91n, which discharges the coolant liquid, may be disposed on a top portion or a similar position of the machine tool 1A. Alternatively, or additionally, the nozzle 91n, which discharges the coolant liquid, may be disposed on the second robot 6 (see FIG. 31).

The laser beam machining and the coolant liquid are incompatible with each other. For example, if the laser beam is emitted with the coolant liquid adhering to the optical component of the laser head 173, the optical component might be damaged. In the example illustrated in FIG. 4, since the machine tool 1A includes the above-described protector 14, the coolant liquid is prevented from adhering to the optical component of the laser head 173.

The joint portion of the multi-joint arm 50 or substantially entirety of the multi-joint arm 50 may be covered with a flexible cover. In this case, the coolant liquid is prevented from adhering to the joint portion of the multi-joint arm 50.

### (Machining chamber CB)

In an example illustrated in FIG. 9, the machine tool 1A includes a machining chamber CB, which is defined by a wall 11. In FIG. 9, the machining chamber CB is hatched with dots for facilitating visual recognition of the machining chamber CB.

In the example illustrated in FIG. 9, the machine tool 1A includes the wall 11, which defines the machining chamber CB, and the machining head 30 and the multi-joint arm 50 of the first robot 5 are disposed in the machining chamber CB. In the example illustrated in FIG. 9, a part of the wall 11 (more specifically, a movable wall 11b, which is the part of the wall 11) serves as a partition wall, which separates the machining chamber CB from a second chamber CD, where all or most of the plurality of linear movers 4 for moving the machining head 30 three-dimensionally are disposed.

In the example illustrated in FIG. 9, the wall 11, which defines the machining chamber CB, include a fixed wall 11a and the movable wall 11b. The movable wall 11b moves following the movement of the machining head 30.

As illustrated in FIG. 10, the movable wall 11b may include a first movable wall 11b-1 and a second movable wall 11b-2. The first movable wall 11b-1 expands and contracts following the movement of the machining head 30 in a direction parallel to a vertical direction. The second movable wall 11b-2 expands and contracts following the movement of the machining head 30 in a direction parallel to a horizontal plane.

### (Workpiece Passage Opening OP, Door 12)

In the example illustrated in FIG. 9, a workpiece passage opening OP, through which the workpiece W passes, is formed in the wall 11, which defines the machining chamber CB. In the example illustrated in FIG. 9, the workpiece passage opening OP is formed in the fixed wall 11a.

In the example illustrated in FIG. 9, the machine tool 1A includes: the wall 11, which defines the machining chamber CB; and a door 12 for opening and closing the workpiece passage opening OP, which is formed in the wall 11. When the door 12 is in an open position, it is possible to carry the workpiece W into the machining chamber CB from the outside of the machine tool 1A. When the door 12 is in the open position, it is also possible to carry out the workpiece W (more specifically, a machined workpiece) from the table 21 of the work holder 2 to the outside of the machine tool 1A. The door 12 may be a single opening door, a double opening door, or a door of any other type.

In the example illustrated in FIG. 9, the work holder 2 (more specifically, the table apparatus 20, which includes a table 21 and a first driver 23 to be described later) is disposed between the machining apparatus 3 and the workpiece passage opening OP in a plan view. Thus, when the workpiece W is carried in and out, the machining apparatus 3 is not in the way. For example, when the workpiece W is carried in and out, a collision of the workpiece W with the machining apparatus 3 is prevented, and damage to the machining apparatus 3 due to such a collision is prevented.

In the example illustrated in FIG. 9, in the plan view, the workpiece passage opening OP, the first robot 5, and the machining apparatus 3 are disposed around the work holder 2 (more specifically, the table apparatus 20).

More specifically, in the example illustrated in FIG. 9, the workpiece passage opening OP, the first robot 5, and the machining apparatus 3 are disposed in this order counterclockwise around the work holder 2 in the plan view. Alternatively, the workpiece passage opening OP, the first robot 5, and the machining apparatus 3 may be disposed in this order clockwise around the work holder 2 in the plan view. In a case where the workpiece passage opening OP, the first robot 5, and the machining apparatus 3 are disposed to be centered around the work holder 2, it becomes possible to make the size of the machine tool 1A compact in the plan view.

In the example illustrated in FIG. 9, the machining apparatus 3 and the first robot 5 are positioned in regions different by approximately 90 degrees from each other with respect to the work holder 2 in the plan view.

In the example illustrated in FIG. 9, the wall 11, which defines the machining chamber CB, includes a first wall 11-1, a second wall 11-2, a third wall 11-3, and a fourth wall 11-4. The second wall 11-2 faces the first wall 11-1. The third wall 11-3 connects one side portion of the first wall 11-1 with one side portion of the second wall 11-2. The fourth wall 11-4 faces the third wall 11-3. The machining head 30 of the machining apparatus 3 is disposed in the vicinity of the first wall 11-1, the workpiece passage opening OP is formed in the second wall 11-2, and the first robot 5 is disposed in the vicinity of the third wall 11-3.

Alternatively, as illustrated in FIG. 11, the machining apparatus 3 and the first robot 5 may be disposed to interpose the work holder 2 in a plan view. In other words, the work holder 2 may be interposed between the machining apparatus 3 and the first robot 5 in the plan view. In an example illustrated in FIG. 11, the table apparatus 20 may be movable in a direction toward the workpiece passage opening OP.

### (Work holder 2)

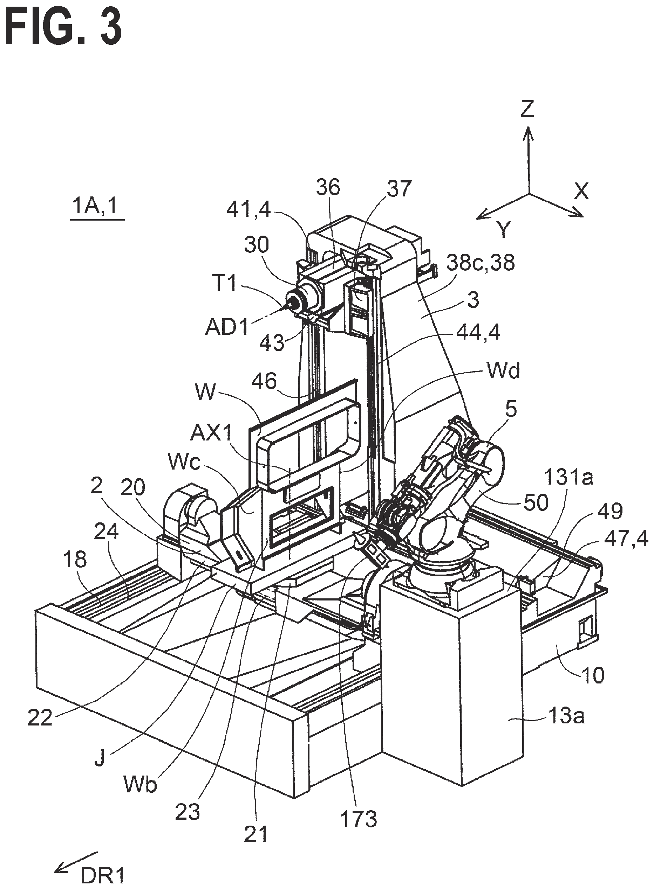

As illustrated in FIGs. 2 and 3, the work holder 2 may include a first driver 23 (for example, a motor), which turns the table 21 around a first axis AX1. The first driver 23 may be capable of turning the table 21 by 360 degrees around the first axis AX1.

In a case where the work holder 2 includes the first driver 23, the machining apparatus 3 is capable of machining both the first main surface Wa of the workpiece W (more specifically, the front surface of the workpiece W) and the second main surface Wb of the workpiece W (more specifically, the back surface of the workpiece W) with at least one first rotating tool T1. In addition, the first robot 5 is capable of machining both the first main surface Wa of the workpiece W (more specifically, the front surface of the workpiece W) and the second main surface Wb of the workpiece W (more specifically, the back surface of the workpiece W) with a laser beam.

In the example illustrated in FIG. 1, the work holder 2 includes: the table 21; a block 22, which supports the table 21 to be capable of turning around the first axis AX1; and a first driver 23, which turns the table 21 around the first axis AX1. It is to be noted that the table 21 and the block 22 each may be made up of a single component, or may be made up of an assembly of a plurality of components. In the example illustrated in FIG. 1, the first axis AX1 is substantially perpendicular to a horizontal plane. Alternatively, the first axis AX1 may be inclined with respect to the horizontal plane. Further alternatively, the first axis AX1 may be substantially parallel to the horizontal plane. In a case where the table 21 is tiltable, the angle between the first axis AX1 and the horizontal plane may change in accordance with a tilt of the table 21.

In the example illustrated in FIG. 1, the table 21 and the first driver 23 are included in the table apparatus 20. In other words, the machine tool 1A (more specifically, the work holder 2) includes the table apparatus 20, and the table apparatus 20 includes: the table 21; and the first driver 23, which turns the table 21 around the first axis AX1. Additionally, the table apparatus 20 may include the block 22, which supports the table 21 to be capable of turning.

As illustrated in FIG. 1, the machine tool 1A may include guide rail(s) 24, which support the table apparatus 20 to be movable in the first direction DR1.

In the example illustrated in FIG. 1, the machine tool 1A includes a third driver 18 (for example, a motor), which moves the work holder 2 (more specifically, the table apparatus 20, which includes the table 21 and the first driver 23) in a direction parallel to the first direction DR1. The third driver 18 moves the table apparatus 20 along the guide rail(s) 24.

In an example illustrated in FIG. 12, the table apparatus 20 is movable in the direction parallel to the first direction DR1 at least between a receiving position P1 and a forward position P2. The receiving position P1 denotes a position where the table apparatus 20 (more specifically, the table 21) receives the workpiece W to be carried in from the outside of the machine tool 1A. The forward position P2 denotes a position where it is possible to machine the workpiece W supported by the table 21 by using the machining apparatus 3. The receiving position P1 is located further away than the forward position P2 in the first direction DR1.

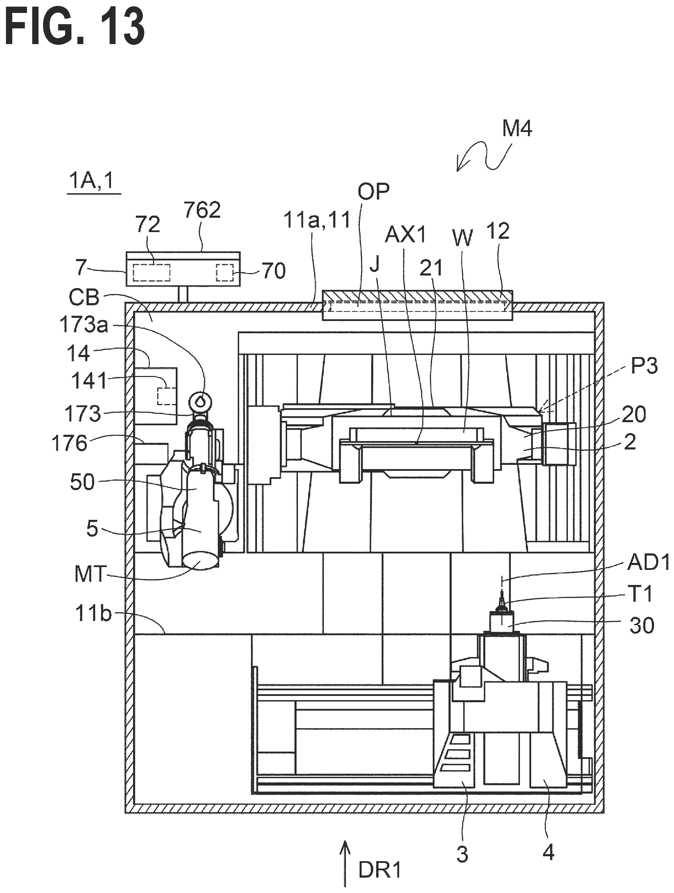

In examples illustrated in FIGs. 12 and 13, the table apparatus 20 is movable in the direction parallel to the first direction DR1 at least between the receiving position P1 (see FIG. 12) and a turnable position P3 (see FIG. 13). The turnable position P3 denotes a position where it is possible to turn the workpiece W supported by the table 21 around the first axis AX1 without allowing the machining apparatus 3 (more specifically, the machining apparatus 3 and the door 12) to interfere with. The receiving position P1 is located further away than the turnable position P3 in the first direction DR1.

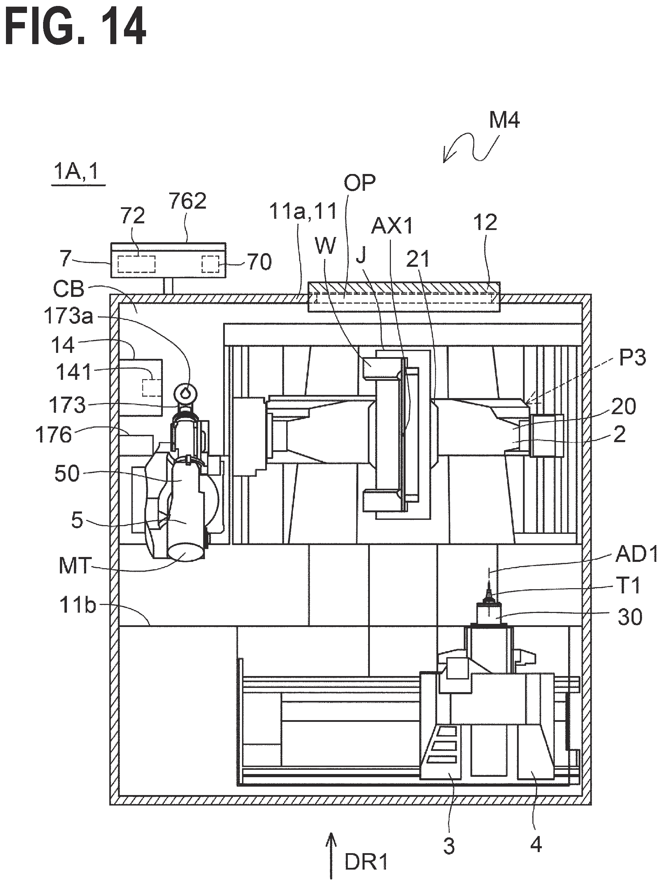

In a case where the table apparatus 20 is movable to the turnable position P3, it is possible to turn the table 21 around the first axis AX1 with a large-sized workpiece W supported by the table 21 (see FIGs. 13 and 14).

Alternatively, or additionally, as illustrated in FIG. 15, the machine tool 1A may include a fourth driver 19d (for example, a motor), which moves the machining apparatus 3 in the direction parallel to the first direction DR1. The fourth driver 19d moves the entirety of the machining apparatus 3 or a structural body including a column 38c, which supports the machining head 30, in the direction parallel to the first direction DR1. The machine tool 1A may include guide rail(s) 19r, which extend in the direction parallel to the first direction DR1. The guide rail(s) 19r guide the movement of the entirety of the machining apparatus 3 or the structural body including the column 38c, which supports the machining head 30.

In the example illustrated in FIG. 15, the machining apparatus 3 is movable in the direction parallel to the first direction DR1 between a forward position P4 and a backward position P5. The forward position P4 denotes a position where it is possible to machine the workpiece W supported by the table 21 by using the machining apparatus 3. The backward position P5 denotes a position where it is possible to turn the workpiece W supported by the table 21 around the first axis AX1 without allowing the machining apparatus 3 to interfere with.

### (Machining Head 30)

As illustrated in FIG. 16, the machining head 30 includes a spindle 31, a support 32, and a bearing 33.

The spindle 31 is capable of holding the first rotating tool T1. The spindle 31 is rotatable about a first rotation axis AD1.

The support 32 supports the spindle 31 to be rotatable about the first rotation axis AD1 via the bearing 33.

The machining apparatus 3 (more specifically, the machining head 30) includes a first rotational driver 34. The first rotational driver 34 rotates the first rotating tool T1 about the first rotation axis AD1. More specifically, the first rotational driver 34 rotates the spindle 31 about the first rotation axis AD1, and thus rotates the first rotating tool T1, which is held by the spindle 31, about the first rotation axis AD1.

In the example illustrated in FIG. 1, the first rotation axis AD1 is not parallel to the vertical direction, and more specifically, the first rotation axis AD1 is substantially perpendicular to the vertical direction. In this case, the cutting chips generated by the first rotating tool T1, which rotates about the first rotation axis AD1, coming into contact with the workpiece W are easily discharged downward.

In the example illustrated in FIG. 1, the first axis AX1 (in other words, the turn axis of the table 21) is disposed to be substantially perpendicular to a direction parallel to the first rotation axis AD1. In this case, by turning the table 21, which supports the workpiece W, around the first axis AX1, it becomes possible to make a to-be-machined surface of the workpiece W face the first rotating tool T1. More specifically, by turning the table 21 to each indexing position around the first axis AX1, it becomes possible to make each to-be-machined surface, parallel to the first axis AX1, of the workpiece W directly face the first rotation axis AD1.

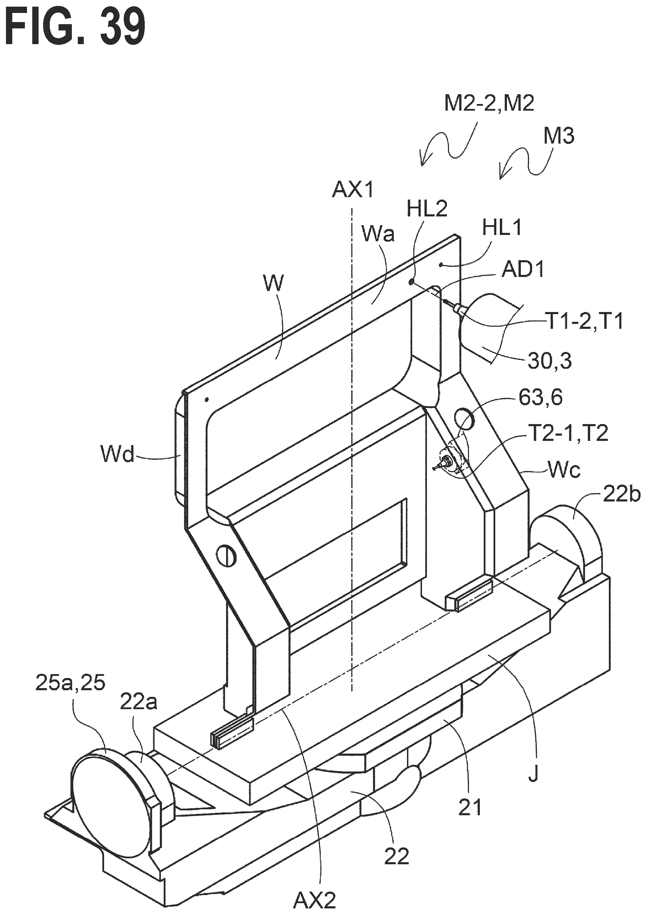

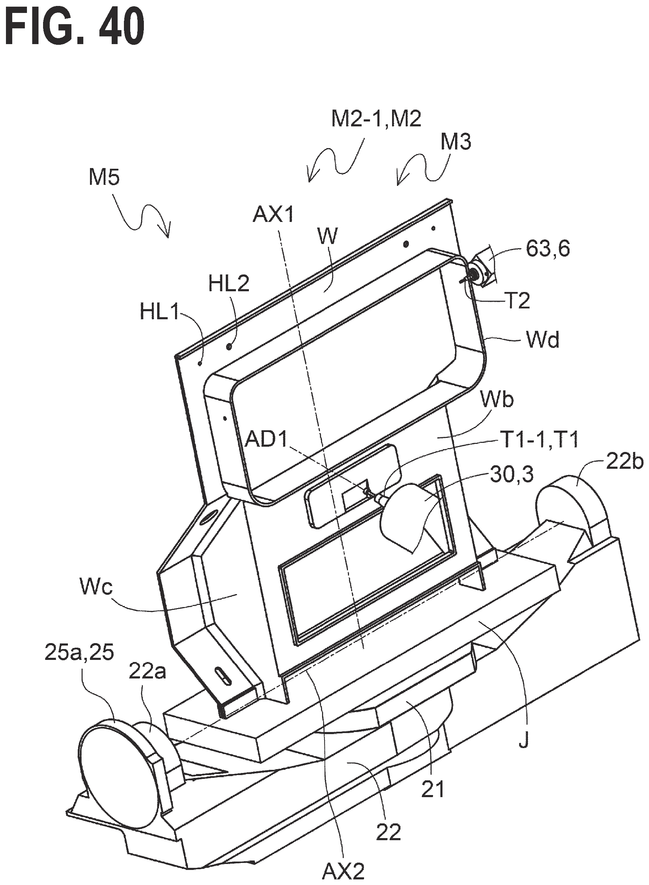

It is to be noted that the table 21 may be tiltable so that the first axis AX1 is substantially perpendicular to the direction parallel to the first rotation axis AD1 (see FIGs. 39 and 40 if necessary). Also in this case, by turning the table 21 to each indexing position around the first axis AX1, it becomes possible to make each to-be-machined surface, parallel to the first axis AX1, of the workpiece W directly face the first rotation axis AD1. Additionally, in a case where the table 21 is tiltable around a second axis AX2, which is different from the first axis AX1 (see FIGs. 39 and 40, if necessary), by combining turning the table 21 around the first axis AX1 and tilting the table 21 around the second axis AX2, it becomes possible for any to-be-machined surface of the workpiece W to directly face the first rotation axis AD1.

### (First Robot 5)

In an example illustrated in FIG. 17, the first robot 5 includes a multi-joint arm 50. The multi-joint arm 50 has at least six rotation axes (RX1, RX2, RX3, RX4, RX5, and RX6). More specifically, the multi-joint arm 50 includes: a first portion 51a, which is turnable around a first rotary axis RX1 relative to a base stand 13a; a second portion 51b, which is tiltable around a first tilt axis RX2 relative to the first portion 51a; a third portion 51c, which is tiltable around a second tilt axis RX3 relative to the second portion 51b; a fourth portion 51d, which is turnable around a second rotary axis RX4 relative to the third portion 51c; a fifth portion 51e, which is tiltable around a third tilt axis RX5 relative to the fourth portion 51d; and a sixth portion 51f, which is turnable around a third rotary axis RX6 relative to the fifth portion 51e. In an example illustrated in FIG. 17, the multi-joint arm 50 has at least three tilt axes and at least three rotary axes.

In the example illustrated in FIG. 17, the laser head 173 is disposed at a tip end portion of the multi-joint arm 50. In other words, the first robot 5 includes the laser head 173, which is disposed at the tip end portion of the multi-joint arm 50. The multi-joint arm 50 is capable of freely changing the position and orientation of the laser head 173. As illustrated in FIG. 18, the laser head 173 emits the laser beam LB toward the workpiece W.

In the example illustrated in FIG. 17, the laser head 173 is attached to the multi-joint arm 50 through a wrist 52. The wrist 52 is made up of the above-described sixth portion 51f.

In the example illustrated in FIG. 17, the first robot 5 includes a plurality of arm drivers 59 (for example, a plurality of motors MT), which move a plurality of joints of the multi-joint arm 50.

In the example illustrated in FIG. 1, the machine tool 1A includes the base stand 13a, which supports the first robot 5. In the example illustrated in FIG. 1, an upper surface 131a of the base stand 13a is higher than the upper surface of the table 21. The upper surface 131a of the base stand 13a is also higher than an uppermost end of the table apparatus 20. In the example illustrated in FIG. 1, the base stand 13a is not movable relative to the base 10 of the machine tool 1A. Alternatively, the base stand 13a may be movable relative to the base 10 of the machine tool 1A. In other words, the entirety of the first robot 5 may be movable relative to the base 10.

In the example illustrated in FIG. 4, the machine tool 1A includes a laser irradiator 17. The laser irradiator 17 includes the laser head 173 and a laser light source 176. The laser head 173 constitutes a part of the first robot 5. In other words, the first robot 5 includes the laser head 173. In the example illustrated in FIG. 18, the laser irradiator 17 includes a component 178 (for example, an optical fiber 178f), which transmits the laser beam to the laser head 173 from the laser light source 176.

In an example illustrated in FIG. 19, the machine tool 1 (more specifically, the laser irradiator 17) includes a gas supplier 177. The gas supplier 177 supplies gas (for example, nitrogen gas, oxygen gas, or air) to the laser head 173 so that the gas is discharged from a laser emission port 173e to the outside of the laser head 173. In the example illustrated in FIG. 5, a gas flow channel 173p, which supplies the gas supplied from the gas supplier 177 toward the laser emission port 173e, is provided the laser head 173. When the laser beam is emitted from the laser emission port 173e, the gas is discharged from the laser emission port 173e toward the workpiece W. In this manner, dross generated by laser beam machining is blown off by the gas. In addition, the gas prevents adhesion of the dross generated by laser beam machining to the laser emission port 173e of the laser head. The gas supplier 177 may supply the gas to the laser head 173 in order to prevent the cutting chips or the coolant liquid from entering the laser head 173 through the laser emission port 173e. For example, when cutting by the machining apparatus 3 and laser beam machining by the first robot 5 are performed simultaneously, the gas may be discharged from the laser emission port 173e.

### (Controller 7)

In the example illustrated in FIG. 4, the machine tool 1A includes a controller 7. The controller 7 may be configured with a single computer, or may be configured with a plurality of computers. For example, the machine tool 1A may include: a first computer, which controls the machining apparatus 3 and the work holder 2; and a second computer, which controls the first robot 5. In this case, the first computer and the second computer communicate with each other, and the first computer and the second computer work in cooperation to function as the controller 7 of the machine tool 1A.

The controller 7 controls the machining apparatus 3 and the first robot 5. The controller 7 may control the work holder 2 (more specifically, the first driver 23). The controller 7 may also control the third driver 18, which moves the table apparatus 20 in the direction parallel to the first direction DR1, and/or the fourth driver 19d, which moves the machining apparatus 3 in the direction parallel to the first direction DR1 (see FIG. 15, if necessary).

In the example illustrated in FIG. 4, the controller 7 includes: a memory 72, which stores a machining program and data; and a processor 70, which executes the machining program stored in the memory 72. When the processor 70 executes the machining program, the controller 7 generates a plurality of control commands. The controller 7 also transmits the plurality of generated control commands to a plurality of pieces of to-be-controlled equipment (for example, the machining apparatus 3, the first robot 5, the work holder 2, the third driver 18, and/or the fourth driver 19d, which is illustrated in FIG. 15).

### (First Machining Mode M1)

By controlling the first robot 5, the controller 7 is capable of performing a first machining mode M1 of machining the workpiece W supported by the table 21 with the laser beam emitted from the laser head 173, which is supported by the multi-joint arm 50.

As illustrated in FIGs. 19 and 20, the first machining mode M1 may include a first hole forming mode M1-1 of forming a hole HL1 in the workpiece W with the laser beam emitted from the laser head 173.

More specifically, in performing the first hole forming mode M1-1, the controller 7 transmits a first group of control commands to at least the first robot 5 and the laser irradiator 17 (for example, the laser light source 176) so as to form the hole HL1 in the workpiece W with the laser beam emitted from the laser head 173.

In performing the first hole forming mode M1-1, the laser head 173 may irradiate a portion, which is difficult for the rotating tool to access, of the workpiece W with the laser beam to form the hole HL1. For example, by irradiating a deep bottom portion of the workpiece W with the laser beam, the laser head 173 may form the hole HL1 in such a deep bottom portion of the workpiece W.

As illustrated in FIG. 21, the first machining mode M1 may include a trimming mode M1-2 of removing a burr Bu (more specifically, a casting burr, a sprue burr, and/or a similar burr) from the workpiece W with the laser beam emitted from the laser head 173.

More specifically, in performing the trimming mode M1-2, the controller 7 transmits a second group of control commands to at least the first robot 5 and the laser irradiator 17 (for example, the laser light source 176) so as to remove the burr Bu (more specifically, a casting burr, a sprue burr, and/or a similar burr) from the workpiece W with the laser beam emitted from the laser head 173.

As illustrated in FIG. 22, the first machining mode M1 may include a cutout mode M1-3 of cutting out a portion Wk of the workpiece from the workpiece W with the laser beam LB, which is emitted from the laser head 173.

More specifically, in performing the cutout mode M1-3, the controller 7 transmits a third group of control commands to at least the first robot 5 and the laser irradiator 17 (for example, the laser light source 176) so that the laser beam emitted from the laser head 173 moves along a closed orbit OB on the workpiece W.

The portion Wk of the workpiece W to be cut out from the workpiece W in performing the cutout mode M1-3 may have a character shape or a logo shape.

As illustrated in FIG. 23, the first machining mode M1 may include a laser marking mode M1-4 of engraving at least one of a character, a symbol, and a barcode on a surface of the workpiece W with the laser beam emitted from the laser head 173. More specifically, the laser marking mode M1-4 includes forming a depression Dp, which indicates at least one of a character Dp-1, the symbol, and the barcode on the surface of the workpiece W with the laser beam.

More specifically, in performing the laser marking mode M1-4, the controller 7 transmits a fourth group of control commands to at least the first robot 5 and the laser irradiator 17 (for example, the laser light source 176) so as to engrave at least one of the character, the symbol, and the barcode on the surface of the workpiece W with the laser beam emitted from the laser head 173. It is to be noted that herein, a barcode includes a one-dimensional barcode and a two-dimensional barcode (in other words, a QR code (registered trademark)).

### (Second Machining Mode M2)

By controlling the machining apparatus 3, the controller 7 is capable of performing a second machining mode M2 of machining the workpiece W supported by the table 21 using the first rotating tool T1, which is supported by the machining head 30.

As illustrated in FIG. 4 (or FIG. 40), the second machining mode M2 may include a surface machining mode M2-1 of machining a surface of the workpiece W with the first rotating tool T1.

More specifically, in performing the surface machining mode M2-1, the controller 7 transmits a fifth group of control commands to at least the plurality of linear movers 4 and the first rotational driver 34 (see FIG. 16) so that a surface machining tool T1-1 (for example, a milling tool such as a face mill), which is supported by the machining head 30, rotates about the first rotation axis AD1 and moves in a direction substantially perpendicular to the first rotation axis AD1.

In the example illustrated in FIG. 4, the machining apparatus 3 is capable of performing the surface machining (for example, milling) on the workpiece W with the first rotating tool T1 (more specifically, a surface machining tool T1-1), which is supported by the machining head 30. The machining apparatus 3 is capable of performing high-precision machining, and is thus capable of performing the surface machining of the workpiece W suitably. The controller 7, which executes the machining program, may cause the machining apparatus 3 to perform entire surface machining of the workpiece W.

As illustrated in FIG. 2 (or FIG. 39), the second machining mode M2 may include a second hole forming mode M2-2 of forming a hole HL2 in the workpiece W with the first rotating tool T1.

More specifically, in performing the second hole forming mode M2-2, the controller 7 transmits a sixth group of control commands to at least the plurality of linear movers 4 and the first rotational driver 34 (see FIG. 16) so that a hole forming tool T1-2, which is supported by the machining head 30, rotates about the first rotation axis AD1 and moves along the first rotation axis AD1. It is to be noted that herein, forming a hole in the workpiece W includes both drilling a hole in the workpiece W and forming a thread on a hole portion of the workpiece W. Therefore, the first rotating tool T1 (more specifically, the hole forming tool T1-2), which is supported by the machining head 30, when the second hole forming mode M2-2 is performed, may be a drill or a tapping tool.

### (Rotation Mode M4)

As illustrated in FIGs. 13 and 14, by controlling the work holder 2 (more specifically, the first driver 23), the controller 7 may be capable of performing a rotation mode M4 of turning the table 21 around the first axis AX1.

The controller 7 is capable of performing the rotation mode M4, and thus the machine tool 1 is capable of changing the orientation of the workpiece W with respect to the first robot 5 and the machining apparatus 3. In this manner, the first robot 5 and the machining apparatus 3 are each easily machining the first main surface Wa of the workpiece W (for example, a front surface of the workpiece W), and in addition, a first side surface Wc of the workpiece W (for example, a right side surface of the workpiece W), a second main surface Wb of the workpiece W (for example, a back surface of the workpiece W), and a second side surface Wd of the workpiece W (for example, a left side surface of the workpiece W).

### (Second Embodiment)

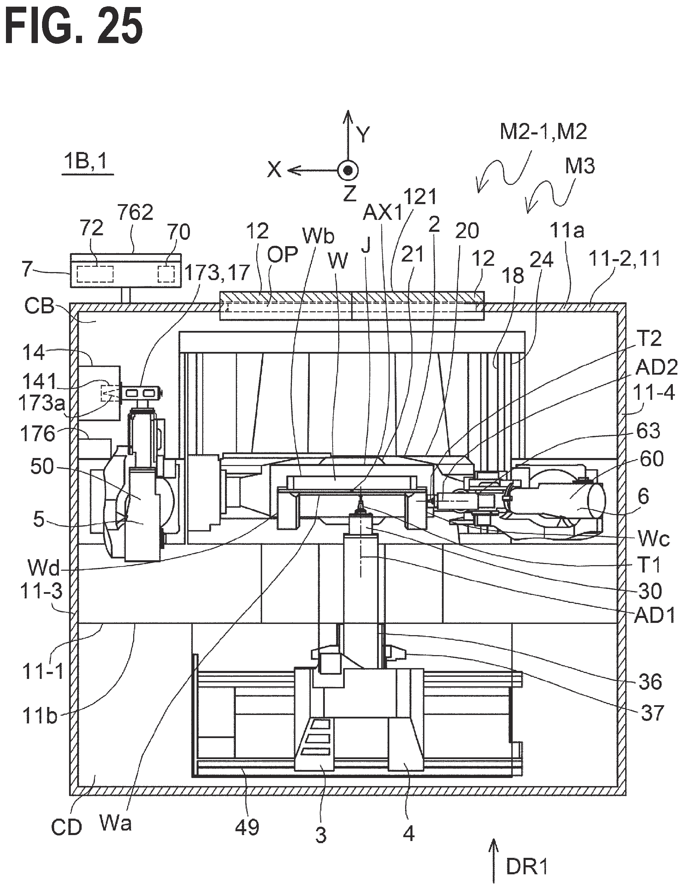

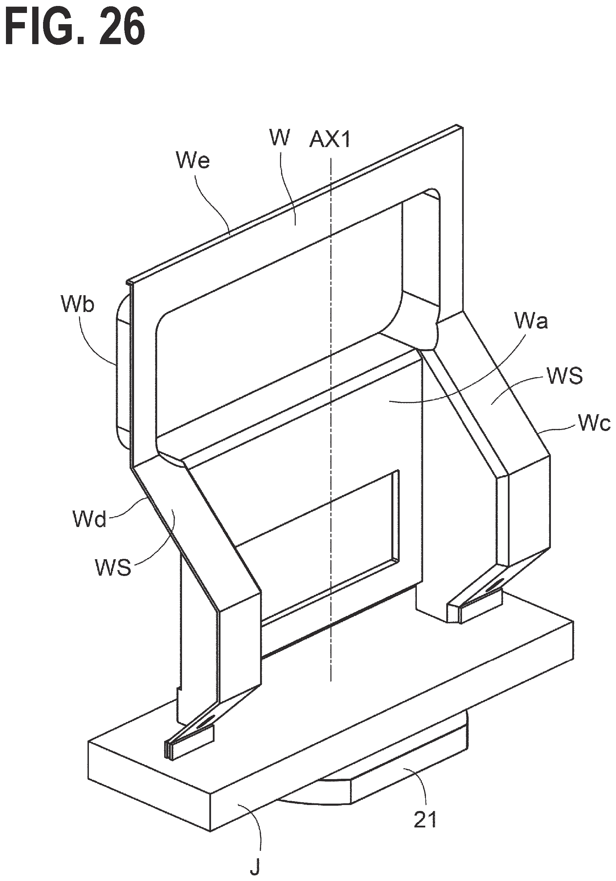

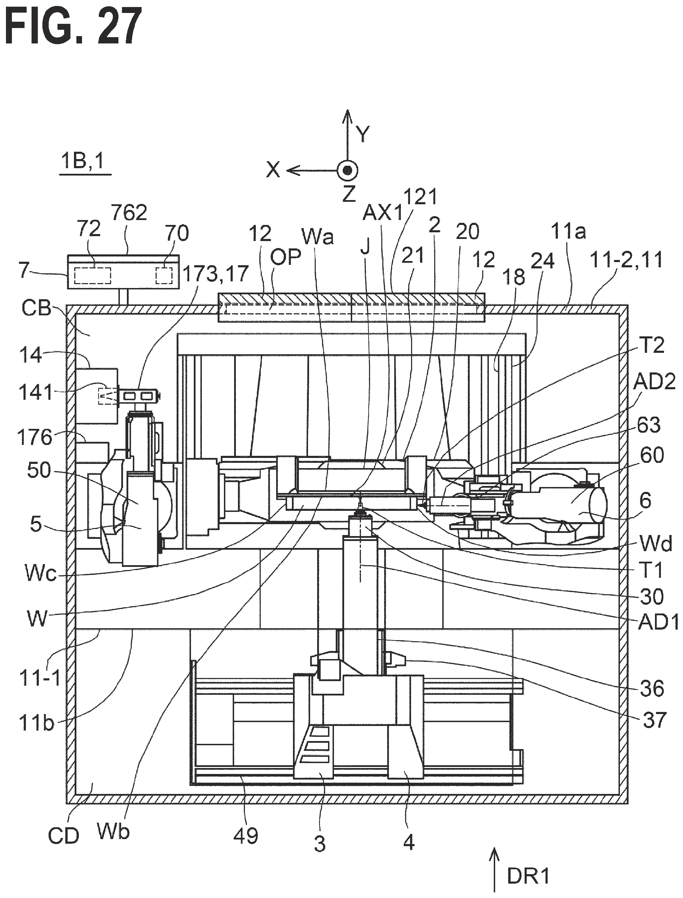

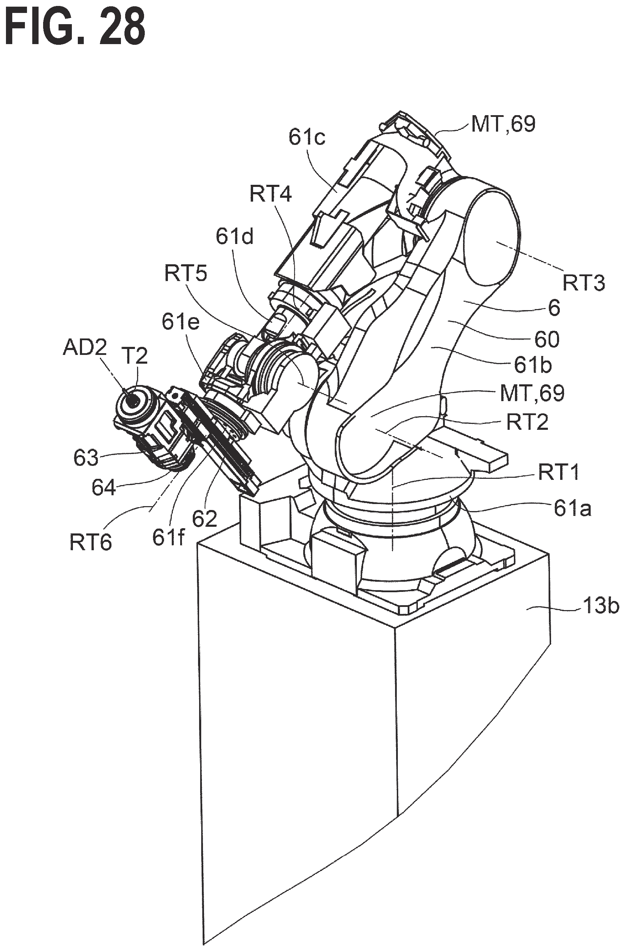

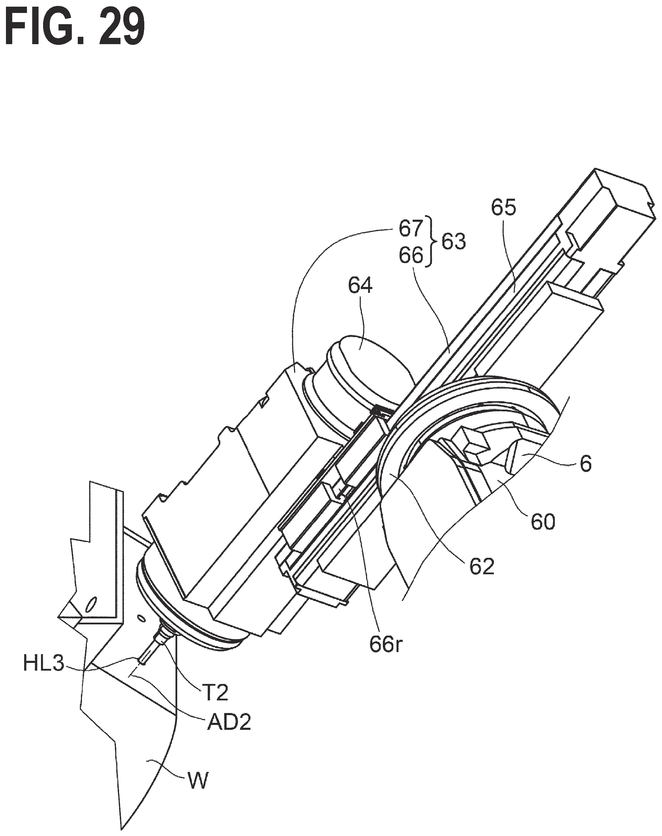

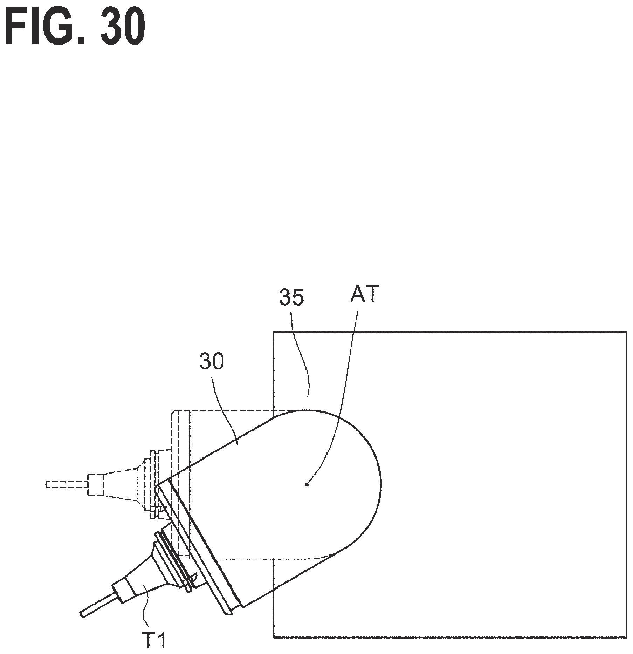

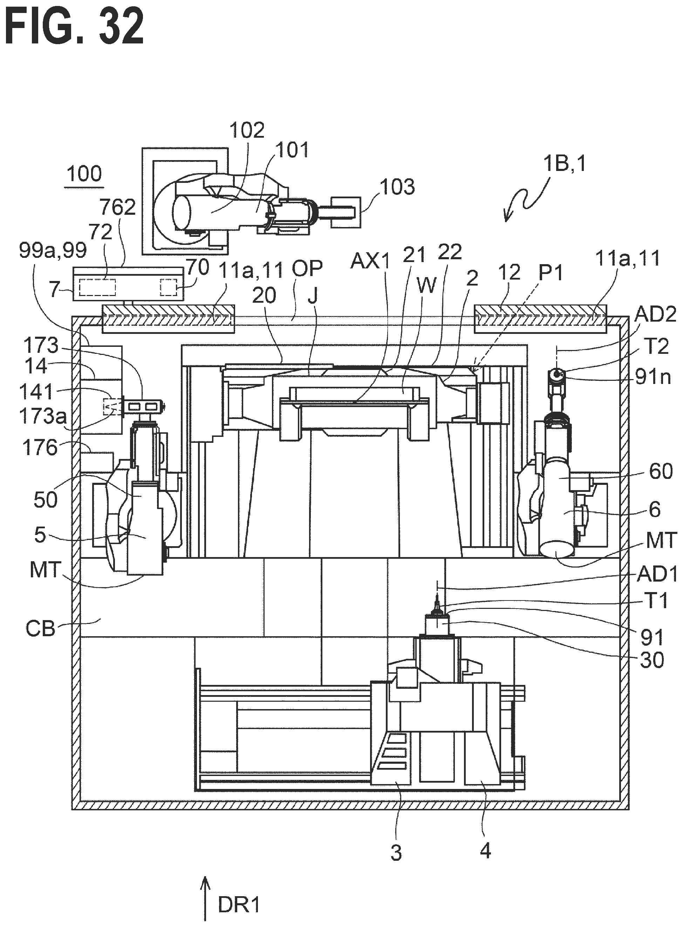

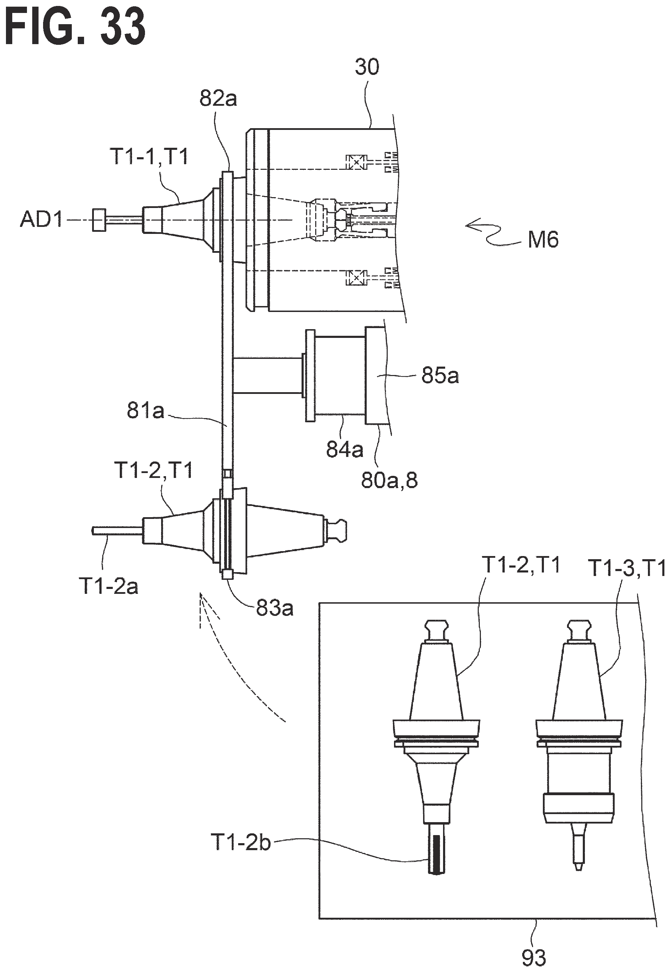

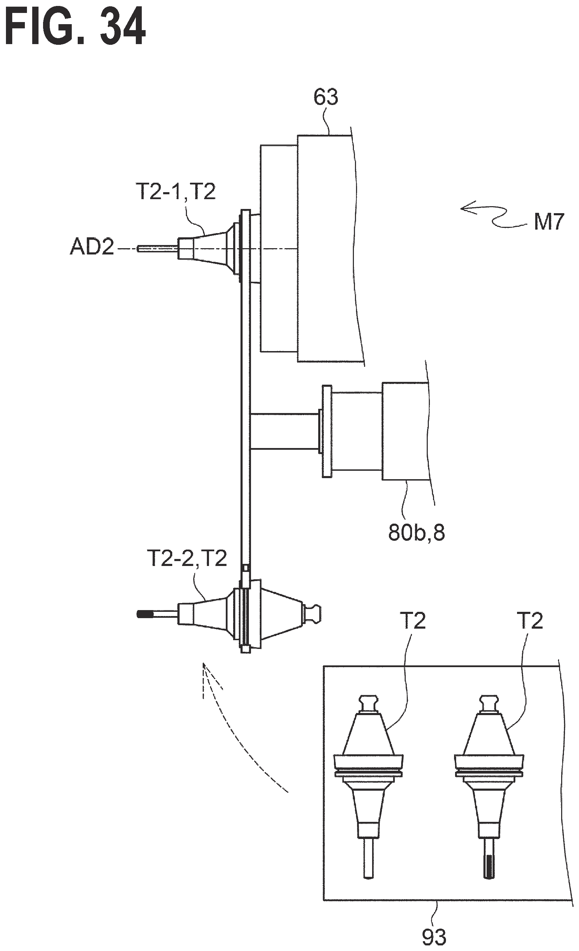

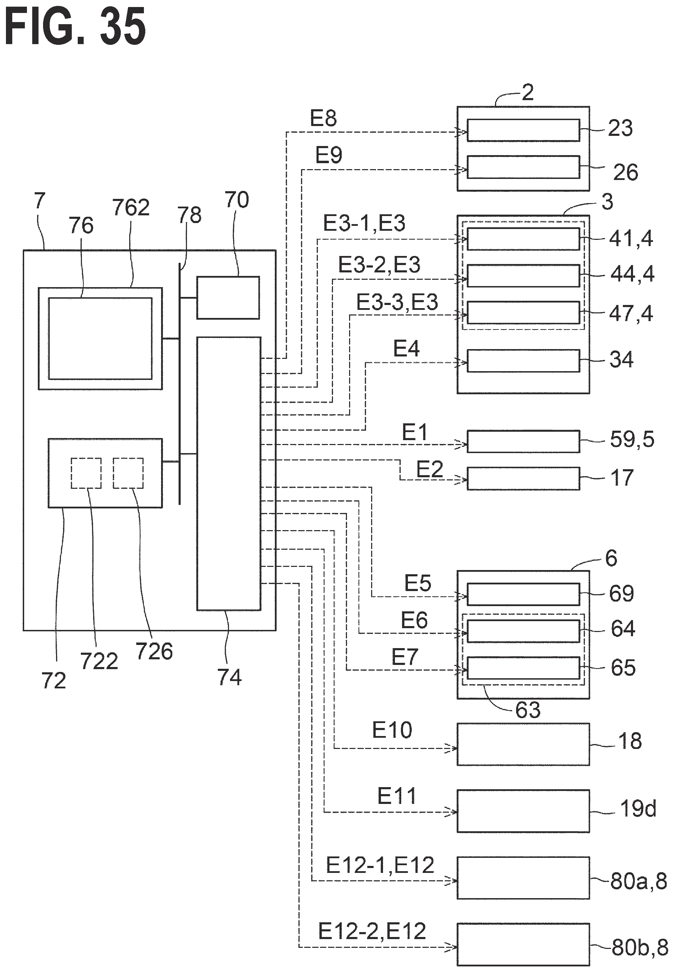

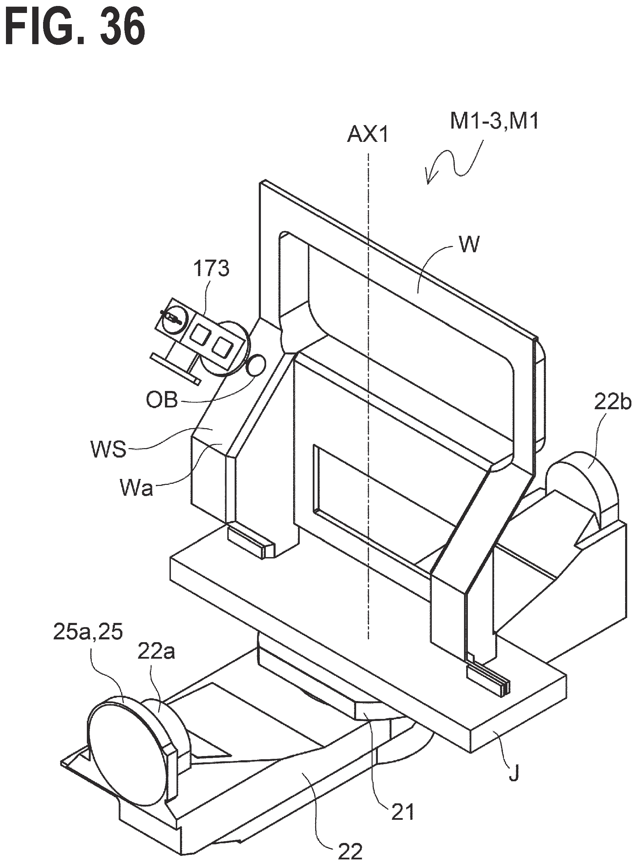

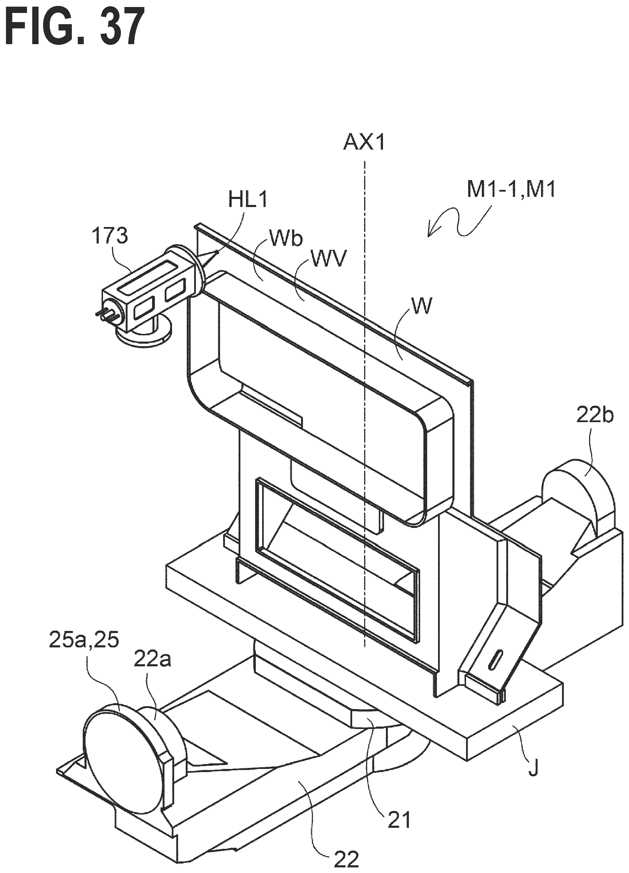

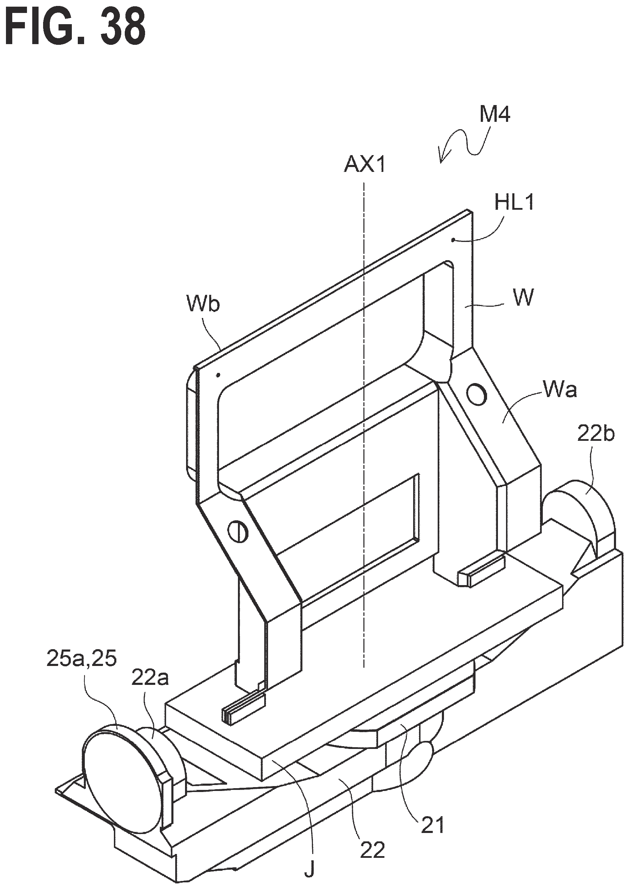

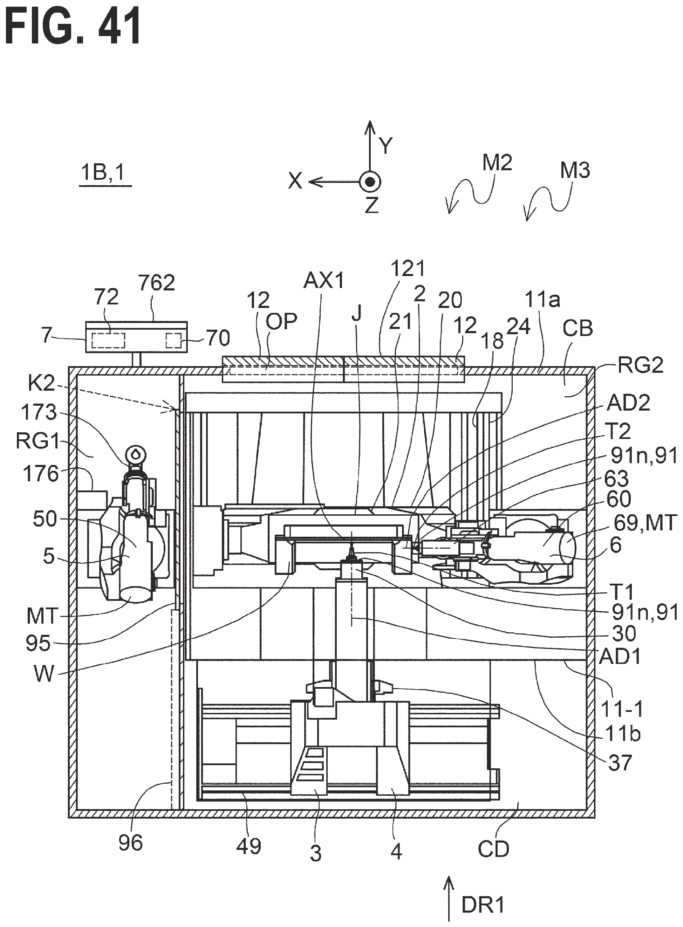

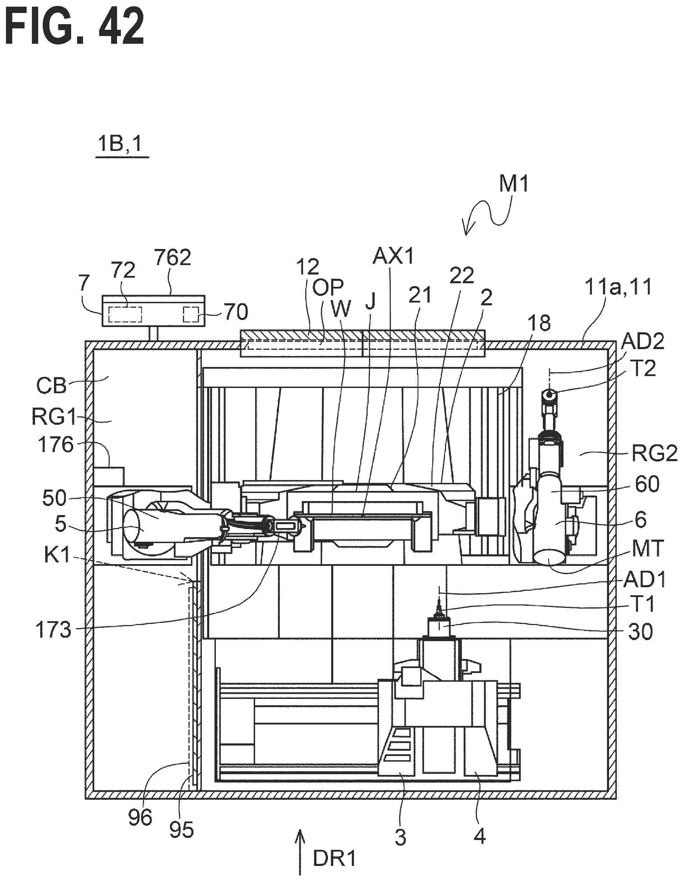

Referring to FIGs. 24 to 42, a machine tool 1B according to the second embodiment will be described. FIG. 24 is a schematic perspective view of a machine tool 1B according to the second embodiment, schematically illustrating the machine tool 1B. FIG. 25 is a schematic plan view of the machine tool 1B according to the second embodiment, schematically illustrating the machine tool 1B. FIG. 26 is a schematic perspective view of a state in which a workpiece W is supported by the table 21, schematically illustrating the state. FIG. 27 is a schematic plan view of the machine tool 1B according to the second embodiment, schematically illustrating the machine tool 1B. FIG. 28 is a schematic perspective view of a second robot 6 and a base stand 13b, schematically illustrating examples of the second robot 6 and the base stand 13b. FIG. 29 is a schematic perspective view of a tool holder 63, which is attached to a second multi-joint arm 60, illustrating an example of the tool holder 63 in an enlarged manner. FIG. 30 is a schematic side view of a machining head 30 according to a modification, schematically illustrating the machining head 30. FIG. 31 is a schematic plan view of the machine tool 1B according to the second embodiment, schematically illustrating the machine tool 1B. FIG. 32 is a schematic plan view of a machine tool system 100 according to the second embodiment, schematically illustrating the machine tool system 100. FIG. 33 is a view of a state in which at least one tool changer 8 is capable of changing a first rotating tool T1 supported by a machining head to another first rotating tool, schematically illustrating the state. FIG. 34 is a view of a state in which at least one tool changer 8 is capable of changing a second rotating tool T2 supported by the tool holder 63 of the second robot 6 to another second rotating tool, schematically illustrating the state. FIG. 35 is a diagram of a state in which a controller 7 is capable of controlling a plurality of pieces of to-be-controlled equipment, schematically illustrating the state. FIGs. 36 and 37 are schematic perspective views of a state in which a first machining mode M1 is performed, schematically illustrating the state. FIG. 38 is a schematic perspective view of a state after a rotation mode M4 is performed, schematically illustrating the state. FIGs. 39 and 40 are schematic perspective views of a state in which a second machining mode M2 and a third machining mode M3 are performed, schematically illustrating the state. FIGs. 41 and 42 are schematic plan views of a machine tool 1B according to a first modification of the second embodiment, schematically illustrating the machine tool 1B.

As illustrated in FIG. 24, in the second embodiment, the work holder 2 includes a second driver 26, which tilts the table 21 around a second axis AX2. Alternatively, or additionally, the machine tool 1B according to the second embodiment includes a second robot 6.

In the second embodiment, differences from the first embodiment will be mainly described. On the other hand, in the second embodiment, repeated description of the matters that have been already described in the first embodiment will be omitted. Hence, even if not explicitly described in the second embodiment, it is needless to say that the matters that have been already described in the first embodiment are applicable to the second embodiment. On the contrary, all matters to be described in the second embodiment are applicable to the first embodiment.

As illustrated in FIG. 24, the machine tool 1B according to the second embodiment includes: (1) a work holder 2, which includes a table 21 for supporting a workpiece; (2) a machining apparatus 3, which includes: a machining head 30, which is capable of supporting a first rotating tool T1 for machining the workpiece supported by the table 21; and a plurality of linear movers 4, which move the machining head 30 three-dimensionally; and (3) a first robot 5, which includes: a laser head 173 for irradiating the workpiece supported by the table 21 with a laser beam; and a multi-joint arm 50 for changing the position and orientation of the laser head 173, and the first robot 5 machines the workpiece with the laser beam.

Thus, the machine tool 1B according to the second embodiment has effects equivalent to those of the machine tool 1A according to the first embodiment.

### (Optional and Additional Configuration)

Subsequently, optional and additional configurations that can be adopted in the second embodiment (or the first embodiment that has been described above or a third embodiment to be described later) will be described with reference to FIGs. 1 to 42.

### (Second Robot 6)

In the example illustrated in FIG. 24, the machine tool 1 includes the second robot 6. The second robot 6 machines the workpiece supported by the table 21 using the second rotating tool T2. The second robot 6 includes a second multi-joint arm 60, which changes the position and orientation of the second rotating tool T2. The second robot 6 can also be referred to as a second multi-joint robot.

In an example illustrated in FIG. 25, the machine tool 1 is capable of machining the workpiece W supported by the table 21 using the first rotating tool T1, which is supported by the machining apparatus 3, the laser head 173, which is supported by the first robot 5, and the second rotating tool T2, which is supported by the second robot 6. This further increases the machining efficiency of the workpiece W.

In the example illustrated in FIG. 25, the machining apparatus 3, the first robot 5, and the second robot 6 are respectively disposed at positions that enable machining the workpiece W supported by the table 21. This prevents an increase in the installation space of the machine tool 1.

In the example illustrated in FIG. 25, the machining apparatus 3, the first robot 5, and the second robot 6 are disposed around the work holder 2 (more specifically, the table apparatus 20) in a plan view. In this case, the size of the machine tool 1 in the plan view can be made compact.

The machining apparatus 3 includes a plurality of linear movers 4, which move the machining head 30 three-dimensionally. Therefore, the machining apparatus 3 enables machining with higher in precision than the second robot 6, which includes the second multi-joint arm 60. For example, it becomes possible to cause the machining apparatus 3 to perform cutting for which high precision is demanded and to cause both the machining apparatus 3 and the second robot 6 to perform cutting for which relatively low precision is demanded.

As illustrated in FIG. 26, a case is assumed where the workpiece W includes a first main surface Wa, a second main surface Wb, a first side surface Wc (for example, a right side surface), and a second side surface Wd (for example, a left side surface). In the example illustrated in FIG. 25, when the machining apparatus 3 machines the first main surface Wa of the workpiece W, the second robot 6 is capable of machining the first side surface Wc of the workpiece W.

After the table 21 is turned, the machining apparatus 3 is capable of machining the second main surface Wb, which is positioned at an opposite end of the first main surface Wa (see FIG. 27). In addition, after the table 21 is turned, the second robot 6 is capable of machining the second side surface Wd, which is positioned at an opposite end of the first side surface Wc.

In the example illustrated in FIGs. 25 and 27, the machine tool 1 is sequentially capable of cutting the workpiece W supported by the table 21 by using the machining apparatus 3 and the second robot 6 simultaneously, then turning the table 21, which supports the workpiece W, by a predetermined angle (examples of the predetermined angle including 45 degrees, 90 degrees, and 180 degrees) around the first axis AX1, and again cutting the workpiece W supported by the table 21 by using the machining apparatus 3 and the second robot 6 simultaneously.

In the example illustrated in FIG. 25, the work holder 2 is disposed between the machining apparatus 3 and the workpiece passage opening OP in the plan view. Thus, when the workpiece W is carried in and out, the machining apparatus 3 is not in the way.

In the example illustrated in FIG. 25, the workpiece passage opening OP, the first robot 5, the machining apparatus 3, and the second robot 6 are disposed around the work holder 2 (more specifically, the table apparatus 20). More specifically, the workpiece passage opening OP, the first robot 5, the machining apparatus 3, and the second robot 6 are disposed around the work holder 2 to be centered around the work holder 2 in the plan view. In this case, it is easy to carry the workpiece W into the work holder 2 through the workpiece passage opening OP. In addition, each of the laser head 173 of the first robot 5, the first rotating tool T1, which is supported by the machining apparatus 3, and the second rotating tool T2, which is supported by the second robot 6, easily approaches the workpiece W supported by the table 21.

As illustrated in FIG. 25, the workpiece passage opening OP, the first robot 5, the machining apparatus 3, and the second robot 6 may be disposed in this order counterclockwise (or clockwise) around the work holder 2.

In the example illustrated in FIG. 25, the machining apparatus 3 and the first robot 5 are positioned in regions different by approximately 90 degrees from each other with respect to the work holder 2 in the plan view. In the example illustrated in FIG. 25, the machining apparatus 3 and the second robot 6 are positioned in regions different by approximately 90 degrees from each other with respect to the work holder 2 in the plan view.

In the example illustrated in FIG. 25, the work holder 2 (for example, the table apparatus 20 or the guide rail(s) 24, which support the table apparatus 20 to be movable) is disposed between the first robot 5 and the second robot 6 in the plan view.

In the example illustrated in FIG. 25, the machining head 30 of the machining apparatus 3 is disposed in the vicinity of a first wall 11-1, the first robot 5 is disposed in the vicinity of a third wall 11-3, and the second robot 6 is disposed in the vicinity of a fourth wall 11-4.

Alternatively, in the example illustrated in FIG. 25, the position of the machining apparatus 3 and the position of the first robot 5 may be exchanged with each other. Alternatively, in the example illustrated in FIG. 25, the position of the machining apparatus 3 and the position of the second robot 6 may be exchanged with each other.

In an example illustrated in FIG. 28, the second robot 6 includes a second multi-joint arm 60, and the second multi-joint arm 60 has at least six rotation axes (RT1, RT2, RT3, RT4, RT5, and RT6). More specifically, the second multi-joint arm 60 includes: a first portion 61a, which is turnable around a first rotary axis RT1 relative to the base stand 13b; a second portion 61b, which is tiltable around a first tilt axis RT2 relative to the first portion 61a; a third portion 61c, which is tiltable around a second tilt axis RT3 relative t to the second portion 61b; a fourth portion 61d, which is turnable around a second rotary axis RT4 relative to the third portion 61c; a fifth portion 61e, which is tiltable around a third tilt axis RT5 relative to the fourth portion 61d; and a sixth portion 61f, which is turnable around a third rotary axis RT6 relative to the fifth portion 61e. In the example illustrated in FIG. 28, the second multi-joint arm 60 has at least three tilt axes and at least three rotary axes.

In the example illustrated in FIG. 28, a wrist 62 is disposed at a tip end portion of the second multi-joint arm 60. In other words, the second robot 6 includes the wrist 62, which is disposed at the tip end portion of the second multi-joint arm 60. In the example illustrated in FIG. 28, the wrist 62 is made up of the above-described sixth portion 61f. The second multi-joint arm 60 is capable of freely changing the position and orientation of the wrist 62.

The second robot 6 includes a plurality of arm drivers 69 (for example, a plurality of motors MT), which move the plurality of joints of the second multi-joint arm 60.

In the example illustrated in FIG. 28, the second robot 6 includes a tool holder 63, which is attached to the second multi-joint arm 60 (more specifically, the wrist 62). The tool holder 63 is capable of supporting the second rotating tool T2.

The tool holder 63 includes a second rotational driver 64 (more specifically, a motor), which rotates the second rotating tool T2 about a second rotation axis AD2.

In an example illustrated in FIG. 29, the tool holder 63 includes: a fixed part 66, which is attached to the second multi-joint arm 60 (more specifically, the wrist 62); and a movable portion 67, which is linearly movable relative to the fixed part 66 in a direction parallel to the second rotation axis AD2. The fixed part 66 may include a linear guide 66r, which guides the movement of the movable portion 67 in the direction parallel to the second rotation axis AD2. The second rotating tool T2 is attached to a spindle disposed on the movable portion 67.

In the example illustrated in FIG. 29, the tool holder 63 includes a tool mover (hereinafter, referred to as a "tool linear mover 65"). which moves the second rotating tool T2 in the direction parallel to the second rotation axis AD2. The tool linear mover 65 includes a motor, an electric cylinder, or a similar component, as a drive source. In addition, in the example illustrated in FIG. 29, the tool linear mover 65 includes a linear guide 66r, which guides the movement of the movable portion 67 of the tool holder 63 relative to the fixed part 66 of the tool holder 63. The tool linear mover 65 may include a ball screw, a rack and pinion, or a similar component.

In a case where the tool holder 63 includes the second rotational driver 64 and the tool linear mover 65, it is possible to move the second rotating tool T2 in the direction parallel to the second rotation axis AD2 while rotating the second rotating tool T2 about the second rotation axis AD2. Thus, after the second rotating tool T2 comes into contact with the workpiece W, it becomes possible to form a hole HL3 in the workpiece W with the second rotating tool T2 without changing the position of the wrist 62. This maintains the precision in machining for forming a hole in the workpiece W. In other words, although a decrease in precision in machining due to the presence of multiple joints in the second robot 6 is inevitable, the machining for forming the hole in the workpiece W is performed with the angles of the multiple joints fixed, and thus an excessive decrease in precision in machining is prevented.

In the example illustrated in FIG. 24, the machine tool 1 includes a base stand 13b, which supports the second robot 6. In the example illustrated in FIG. 24, an upper surface 131b of the base stand 13b is higher than the upper surface of the table 21. In addition, the upper surface 131b of the base stand 13b is higher than the uppermost end of the table apparatus 20. In the example illustrated in FIG. 24, the base stand 13b is not movable relative to the base 10 of the machine tool 1. Alternatively, the base stand 13b may be movable relative to the base 10 of the machine tool 1. In other words, the entirety of the second robot 6 may be movable relative to the base 10.

### (Second Driver 26)

In the example illustrated in FIG. 24, the work holder 2 includes a second driver 26 (for example, a motor), which tilts the table 21 around the second axis AX2. In the example illustrated in FIG. 24, the second driver 26 tilts a block 22 around the second axis AX2, and thus tilts the table 21, which is supported by the block 22, around the second axis AX2. In the example illustrated in FIG. 24, the second axis AX2 is different from the first axis AX1. More particularly, the second axis AX2 is perpendicular to the first axes AX1. The second axis AX2 may be substantially parallel to a horizontal plane.

In a case where the work holder 2 has a tilt axis (in other words, in a case where the table 21 is tiltable around the second axis AX2), it is possible to arrange an inclined surface WS of the workpiece W (see FIG. 26, if necessary) to be perpendicular to the first rotation axis AD1 of the first rotating tool T1. This enables precision machining with the machining head 30 to be applied to the inclined surface WS of the workpiece W. In this case, there is no need for a machine tool other than the machine tool 1 to perform the precision machining on the inclined surface WS of the workpiece W. A reduction in the number of machine tools reduces the installation space of the machine tool in a business place. It is to be noted that the inclined surface WS of the workpiece W is, more specifically, a surface inclined with respect to the first axis AX1 or a surface inclined with respect to the upper surface of the table 21.

In a case where the work holder 2 has a tilt axis (in other words, in a case where the table 21 is tiltable around the second axis AX2), the laser head 173, which is supported by the multi-joint arm 50, and/or the second rotating tool T2, which is supported by the second multi-joint arm 60, easily approach the top surface We of the workpiece W (see FIG. 26, if necessary). It is also possible to machine the top surface We of the workpiece W with the first rotating tool T1, which is supported by the machining head 30.

The work holder 2 (more specifically, the second driver 26) is capable of tilting the table 21 around the second axis AX2 so that the orientation of the workpiece W is changed from a first orientation, in which the inclined surface WS of the workpiece W is inclined with respect to the horizontal plane, to a second orientation, in which the inclined surface WS of the workpiece W is substantially perpendicular to the horizontal plane.

In the example illustrated in FIG. 24, the second driver 26 is preferably capable of tilting the table 21 around the second axis AX2 in a stepless manner. In other words, the machine tool 1 is preferably capable of adjusting the inclination angle of the table 21 in a stepless manner. The second driver 26 may be capable of maintaining the angle between the horizontal plane and the upper surface of the table 21 at any angle between at least equal to or larger than 0 degrees and equal to or smaller than 90 degrees.

The second multi-joint arm 60 is capable of changing the orientation of the second rotating tool T2 to a given orientation, and thus eliminates the need for tilting the workpiece W in the machining with the second robot 6. On the other hand, the machining head 30 is moved by using the plurality of linear movers 4 in principle, and it is impossible to change the orientation of the machining head 30 with respect to the workpiece W. It is needless to say that, as illustrated in FIG. 30, the machine tool 1B according to the second embodiment (or the machine tool 1A according to the first embodiment) may include a tilt driver 35, which tilts the machining head 30 around the tilt axis AT. However, there is also a limit to tilting around the tilt axis AT using the tilt driver 35. In addition, in order to change the orientation of the machining head 30 to a given orientation, at least two tilt axes are needed. The machine tool 1B according to the second embodiment (or the machine tool 1A according to the first embodiment) may include a tilt driver for tilting the machining head 30 around each of the two tilt axes. However, as the number of the tilt axes provided in the machining head 30 increases, the precision in machining with the machining apparatus 3 might decrease.

### (Work Holder 2)

In the example illustrated in FIG. 24, the work holder 2 includes a table apparatus 20. The table apparatus 20 includes: a table 21; a block 22, which supports the table 21 to be turnable around the first axis AX1; a first driver 23, which turns the table 21 around the first axis AX1; and a stationary support 25, which supports the block 22 to be tiltable around the second axis AX2. The table apparatus 20 may include a second driver 26, which tilts the table 21 around the second axis AX2. In the example illustrated in FIG. 24, the first driver 23 is mounted on the block 22, and the first driver 23 is tiltable around the second axis AX2 together with the block 22. In other words, as the table 21 tilts around the second axis AX2, the orientation of the first axis AX1 also changes. Alternatively, the second driver 26 may be mounted on the block 22, which supports the table 21 to be tiltable, and the second driver 26 may be configured to be turnable around the first axis AX1 together with the block 22. In other words, as the table 21 turns around the first axis AX1, the orientation of the second axis AX2 may be configured to be changed.

In the example illustrated in FIG. 24, the stationary support 25 includes: a first stationary support 25a, which supports a first end portion 22a of the block 22 so as to be tiltable around the second axis AX2; and a second stationary support 25b, which supports a second end portion 22b of the block 22 so as to be tiltable.

In the example illustrated in FIG. 24, the block 22 includes: the first end portion 22a, which is supported to be tiltable by the first stationary support 25a; the second end portion 22b, which is supported to be tiltable by the second stationary support 25b; and a central portion 22c between the first end portion 22a and the second end portion 22b. In addition, the block 22 has a recess shape in which the central portion 22c is recessed from the first end portion 22a and the second end portion 22b. In the example illustrated in FIG. 24, the table 21 is disposed directly on the central portion 22c with the upper surface of the table 21 disposed to be parallel to a horizontal plane. In the example illustrated in FIG. 24, in a state in which the upper surface of the table 21 is disposed to be parallel to the horizontal plane, the upper surface of the table 21 is lower than the height of the second axis AX2.

The block 22, which supports the table 21, has an elongated shape with a longitudinal direction in the second direction DR2 when viewed in a direction parallel to the first axis AX1. It is to be noted that the shape of the block 22 is not limited to the shape illustrated in FIG. 24, and may have any shape.

In addition to the table apparatus 20, the work holder 2 may include the guide rail(s) 24, which guide the movement of the table apparatus 20 in the direction parallel to the first direction DR1.

### (Third Driver 18)

The machine tool 1 may include the third driver 18, which moves the table apparatus 20 in the direction parallel to the first direction DR1. In the example illustrated in FIG. 24, the first direction DR1 is substantially parallel to the horizontal plane, and is substantially perpendicular to the second axis AX2.

The machine tool 1 may include the fourth driver 19d (see FIG. 15 if necessary), which moves the machining apparatus 3 in the direction parallel to the first direction DR1, in addition to the third driver 18 or instead of the third driver 18. Since the third driver 18 and the fourth driver 19d have already been described in the first embodiment, repeated description of these configurations will be omitted.

In an example illustrated in FIG. 31, the table apparatus 20 is movable in the direction parallel to the first direction DR1 at least between the receiving position P1 and the forward position P2 (or the turnable position P3). Since the receiving position P1, the forward position P2, and the turnable position P3 have been described in the first embodiment, repeated description of these positions will be omitted.

In an example illustrated in FIG. 31, the receiving position P1 is set in the vicinity of the workpiece passage opening OP, which is formed in the wall 11. The receiving position P1 is, for example, an end position of the movable range of the table apparatus 20 in the first direction DR1. The forward position P2 is, for example, an end position in the direction opposite to the first direction DR1 or a position close to the end position in the direction opposite to the first direction DR1 in the movable range of the table apparatus 20.

### (Machining Head 30)

Since the machining head 30 has already been described in the first embodiment, repeated description of the machining head 30 will be omitted (see, for example, FIG. 16 for the machining head 30).

### (First Robot 5)

Since the first robot 5 has been described in the first embodiment, repeated description of the first robot 5 will be omitted.

### (Third Robot 101)

As illustrated in FIG. 32, the machine tool system 100 according to the second embodiment includes: the machine tool 1 (for example, the machine tool 1A according to the first embodiment or the machine tool 1B according to the second embodiment); and a third robot 101, which is disposed outside the machine tool 1.

The third robot 101 carries the workpiece W into the machining chamber CB from the outside of the machine tool 1, and/or carries out the workpiece from the table 21 to the outside of the machining chamber CB (that is, carries out the machined workpiece). In an example illustrated in FIG. 32, the wall 11 (more specifically, the fixed wall 11a), which defines the machining chamber CB, is disposed between the third robot 101 and the first robot 5. It is to be noted that the number of robots for carrying in and out the workpieces is not limited to one. In other words, in addition to the third robot 101, the machine tool system 100 may include another robot for carrying in and out the workpiece.

In the example illustrated in FIG. 32, the third robot 101 carries the workpiece W into the machining chamber CB of the machine tool 1 from the outside of the machine tool 1 through the workpiece passage opening OP. More specifically, the third robot 101 carries the workpiece W into the machining chamber CB of the machine tool 1 from the outside of the machine tool 1 through the workpiece passage opening OP, and the table apparatus 20 (more specifically, the table 21) receives the workpiece W from the third robot 101. When the table apparatus 20 is positioned at the receiving position P1, the table apparatus 20 is capable of smoothly receiving the workpiece W from the third robot 101.

In the example illustrated in FIG. 32, the third robot 101 includes a third multi-joint arm 102, and the third multi-joint arm 102 is capable of moving across the workpiece passage opening OP. In addition, the third robot 101 includes a gripper 103, which is capable of gripping the workpiece W or the jig J. The gripper 103 is attached to, for example, a tip end portion of the third multi-joint arm 102.

### (Machining Chamber CB)

In the example illustrated in FIG. 25, the machine tool 1 includes the wall 11, which defines the machining chamber CB. In the example illustrated in FIG. 25, the machining head 30, the multi-joint arm 50 of the first robot 5, and the second multi-joint arm 60 of the second robot 6 are disposed in the machining chamber CB.

In the example illustrated in FIG. 25, the workpiece passage opening OP through which the workpiece W passes is formed in the wall 11, which defines the machining chamber CB. The machine tool 1 also includes the door 12 for opening and closing the workpiece passage opening OP, which is formed in the wall 11.

In the example illustrated in FIG. 25, the wall 11, which defines the machining chamber CB, includes: the first wall 11-1 (for example, the movable wall 11b); and the second wall 11-2, which faces the first wall 11-1. The wall 11 may include the third wall 11-3, and the fourth wall 11-4, which faces the third wall 11-3. Since the first wall 11-1, the second wall 11-2, the third wall 11-3, the fourth wall 11-4, and the movable wall 11b have been described in the first embodiment, repeated description of these walls will be omitted.

### (Coolant Supplier 91)

In an example illustrated in FIG. 31, the machine tool 1 includes the coolant supplier 91, which supplies the coolant liquid toward the workpiece W supported by the table 21. Since the coolant supplier 91 has been described in the first embodiment, repeated description of the coolant supplier 91 will be omitted.

### (Mover of Machining Apparatus 3)

In the example illustrated in FIG. 24, the machining apparatus 3 includes a mover that moves the machining head 30 three-dimensionally. More specifically, the machining apparatus 3 includes a first mover 36, a second mover 37, and a third mover 38.

The first mover 36 is movable together with the machining head 30 in a direction parallel to Y axis. In the example illustrated in FIG. 24, the first mover 36 supports the machining head 30, and is movable in the direction parallel to Y axis. In the example illustrated in FIG. 24, Y axis is, for example, substantially parallel to the first rotation axis AD1, which is the rotation axis of the first rotating tool T1. In addition, Y axis may be substantially parallel to the first direction DR1.

The second mover 37 is movable in a direction parallel to Z axis together with the machining head 30. In the example illustrated in FIG. 24, the second mover 37 supports the machining head 30 via the first mover 36, and is movable in the direction parallel to Z axis. In the example illustrated in FIG. 24, Z axis is substantially parallel to the vertical direction.

The third mover 38 is movable in a direction parallel to X axis together with the machining head 30. In the example illustrated in FIG. 24, the third mover 38 supports the machining head 30 via the first mover 36 and the second mover 37, and is movable in the direction parallel to X axis. The third mover 38 is, for example, a column 38c, which supports the second mover 37 to be movable. In the example illustrated in FIG. 24, X axis is substantially parallel to the horizontal plane. In addition, X axis is substantially perpendicular to Y axis.

In the example illustrated in FIG. 24, the machine tool 1 includes a base 10. Such a base 10 supports the third mover 38 to be movable in the direction parallel to X axis.

### (Plurality of Linear Movers 4)

In the example illustrated in FIG. 24, the machine tool 1 (more specifically, the machining apparatus 3) includes a plurality of linear movers 4, which move the machining head 30 three-dimensionally. In addition, the plurality of linear movers 4 include a first linear mover 41, a second linear mover 44, and a third linear mover 47. The first linear mover 41 moves the machining head 30 in the direction parallel to Y axis. The second linear mover 44 moves the machining head 30 in the direction parallel to Z axis. The third linear mover 47 moves the machining head 30 in the direction parallel to X axis.

The first linear mover 41 includes a driver 42 (for example, a motor), which moves the first mover 36 in the direction parallel to Y axis. The first linear mover 41 preferably includes a first linear guide 43, which guides the movement of the first mover 36 in the direction parallel to Y axis. In the example illustrated in FIG. 24, the first linear guide 43 is disposed on the second mover 37.

The second linear mover 44 includes a driver 45 (for example, a motor), which moves the second mover 37 in the direction parallel to Z axis. The second linear mover 44 preferably includes a second linear guide 46, which guides the movement of the second mover 37 in the direction parallel to Z axis. In the example illustrated in FIG. 24, the second linear guide 46 is disposed on the third mover 38.

The third linear mover 47 includes a driver 48 (for example, a motor), which moves the third mover 38 in the direction parallel to X axis. The third linear mover 47 preferably includes a third linear guide 49, which guides the movement of the third mover 38 in the direction parallel to X axis. In the example illustrated in FIG. 24, the third linear guide 49 supports the third mover 38 to be movable. In addition, the third linear guide 49 is disposed on the base 10 of the machine tool 1.

### (Tool Changer 8)

The machine tool 1 preferably includes at least one tool changer 8. Such at least one tool changer 8 is disposed at any position of the machine tool 1. Such at least one tool changer 8 is capable of changing the first rotating tool T1, which is supported by the machining head 30, to another first rotating tool. Such at least one tool changer 8 is capable of changing the second rotating tool T2, which is supported by the second multi-joint arm 60 of the second robot 6, to another second rotating tool.

In an example illustrated in FIG. 33, such at least one tool changer 8 includes a first tool changer 80a. The first tool changer 80a changes the first rotating tool T1 (for example, a surface machining tool T1-1), which is supported by the machining head 30, to another first rotating tool (for example, a hole forming tool T1-2). In the example illustrated in FIG. 33, the first tool changer 80a changes the first rotating tool T1 (for example, the surface machining tool T1-1), which is supported by the machining head 30, to another first rotating tool (for example, the hole forming tool T1-2), which is taken out of at least one tool stocker 93. The hole forming tool T1-2 may be a drill T1-2a or a tapping tool T1-2b.

In the example illustrated in FIG. 33, the first tool changer 80a includes: a first gripping portion 82a, which is capable of gripping the first rotating tool; and a second gripping portion 83a, which is capable of gripping another first rotating tool.

As illustrated in FIG. 33, the first tool changer 80a may include: a tool change arm 81a; an arm rotator 84a, which rotates the tool change arm 81a; and an arm mover 85a, which linearly moves the tool change arm 81a.

It is to be noted that the machining head 30 may be configured to access the tool stocker 93 and directly change the first rotating tool T1, which is supported by the machining head 30, to another first rotating tool. In this case, a tool changer for changing the tool supported by the machining head 30 will be omitted.

In the example illustrated in FIG. 34, such at least one tool changer 8 includes a second tool changer 80b. The second tool changer 80b changes the second rotating tool T2 (for example, a drill T2-1), which is supported by the second multi-joint arm 60 via the tool holder 63, to another second rotating tool (for example, a tapping tool T2-2). As illustrated in FIG. 34, the second tool changer 80b may change the second rotating tool T2 (for example, the drill T2-1), which is supported by the second multi-joint arm 60 via the tool holder 63, to another second rotating tool (for example, the tapping tool T2-2), which is taken out of at least one tool stocker 93. In the example illustrated in FIG. 34, each second rotating tool T2 is a tool that is not attachable to the machining head 30 of the machining apparatus 3. In the example illustrated in FIG. 33, each first rotating tool T1 is a tool that is not attachable to the tool holder 63 of the second robot 6.

It is to be noted that the tool holder 63 may be configured to access the tool stocker 93 and directly change the second rotating tool T2, which is supported by the tool holder 63, to another second rotating tool. In this case, a tool changer for changing the tool supported by the tool holder 63 will be omitted.

### (Machining of Workpiece W Supported by Table 21 in Non-Tilted State)

As illustrated in FIG. 39, herein, "the table 21 is in a non-tilted state" means a state in which the first axis AX1 is substantially perpendicular to a horizontal plane. It is to be noted that in a case where the table 21 is a table that does not turn around the first axis AX1, herein, "the table 21 is in the non-tilted state" means a state in which the upper surface of the table is substantially parallel to the horizontal plane.

In an example illustrated in FIG. 39, the machining apparatus 3 and the second robot 6 are capable of simultaneously machining the workpiece W supported by the table 21 in the non-tilted state. In other words, when the table 21, which supports the workpiece W, is in the non-tilted state, the machining apparatus 3 and the second robot 6 are capable of simultaneously machining the workpiece W supported by the table 21.

### (Machining of Workpiece W Supported by Table 21 in Tilted State)

As illustrated in FIG. 40, herein, "the table 21 is in a tilted state" means a state in which the first axis AX1 is not parallel to the vertical direction. It is to be noted that in a case where the table 21 is a table that does not turn around the first axis AX1, herein, "the table 21 is in the tilted state" means a state in which the upper surface of the table is inclined with respect to the horizontal plane.

In an example illustrated in FIG. 40, the machining apparatus 3 and the second robot 6 are capable of simultaneously machining the workpieces W supported by the table in the tilted state. In other words, when the table 21, which supports the workpiece W, is in the tilted state, the machining apparatus 3 and the second robot 6 are capable of simultaneously machining the workpiece W supported by the table 21.

In the examples illustrated in FIGs. 39 and 40, in each case of the case where the table 21, which supports the workpiece W, is in the non-tilted state and the case where the table 21, which supports the workpiece W, is in the tilted state, the machining apparatus 3 and the second robot 6 are capable of simultaneously machining the workpiece W supported by the table 21. Thus, it becomes possible to efficiently machine the workpiece W having a complicated shape.

### (Controller 7)

In the example illustrated in FIG. 35, the controller 7 controls the work holder 2, the machining apparatus 3, the first robot 5, and the laser irradiator 17. In a case where the machine tool 1 includes the second robot 6, the controller 7 controls the second robot 6. In a case where the machine tool 1 includes at least one tool changer 8, the controller 7 controls such at least one tool changer 8. In a case where the machine tool 1 includes the third driver 18, which moves the table apparatus 20 in the direction parallel to the first direction DR1, the controller 7 controls the third driver 18. In a case where the machine tool 1 includes the fourth driver 19d (see FIG. 15), which moves the machining apparatus 3 in the direction parallel to the first direction DR1, the controller 7 controls the fourth driver 19d. As in the first embodiment, the controller 7 may be made up of one computer, or may be made up of a plurality of computers. For example, the machine tool 1 may include a first computer for controlling the machining apparatus 3 and the work holder 2, a second computer for controlling the first robot 5, and a third computer for controlling the second robot 6. In addition, these computers may work in cooperation to function as the controller 7 of the machine tool 1.

As illustrated in FIG. 35, the controller 7 includes a hardware processor 70 (hereinafter, simply referred to as a "processor 70"), a memory 72, a communication circuit 74, and an inputter 76 (for example, a display 762 equipped with a touch panel). The processor 70, the memory 72, the communication circuit 74, and the inputter 76 are connected with one another through a bus 78. Data necessary for machining the workpiece W (for example, workpiece data 726 including shape data of the workpiece W and machining position data of the workpiece W) may be input into the controller 7 via the inputter 76, or may be input into the controller 7 from another computer through the communication circuit 74. It is to be noted that the inputter 76 is not limited to the display 762 equipped with the touch panel. For example, the controller 7 may include the inputter 76 such as a button, a switch, a lever, a pointing device, or a keyboard, and a display that displays data that has been input into the inputter 76 or any other information.

By executing a machining program 722, which is stored in the memory 72, the controller 7 generates a plurality of control commands. In addition, the communication circuit 74 transmits a plurality of control commands that have been generated by the controller 7 to a plurality of pieces of to-be-controlled equipment (for example, the work holder 2, the machining apparatus 3, the first robot 5, the laser irradiator 17, the second robot 6, at least one tool changer 8, the third driver 18, and/or the fourth driver 19d, which is illustrated in FIG. 15). In this manner, the controller 7 is capable of controlling the plurality of pieces of to-be-controlled equipment.

In the example illustrated in FIG. 35, the controller 7 may transmit a first operation command E1 to the plurality of arm drivers 59 (for example, the plurality of motors MT) of the first robot 5. The plurality of arm drivers 59 that receive the first operation command E1 from the controller 7 causes the plurality of joints of the multi-joint arm 50 to operate.

In the example illustrated in FIG. 35, the controller 7 may transmit an emission command E2 to the laser irradiator 17. The laser irradiator 17 that receives the emission command E2 from the controller 7 emits a laser beam from the laser emission port 173e of the laser head 173.

In the example illustrated in FIG. 35, the controller 7 may transmit a movement command E3 to the plurality of linear movers 4 of the machining apparatus 3. The plurality of linear movers 4 that receive the movement command E3 from the controller 7 move the machining head 30. More specifically, the controller 7 transmits a first movement command E3-1 to the first linear mover 41. The first linear mover 41 that receives the first movement command E3-1 moves the machining head 30 in the direction parallel to Y axis (for example, the direction parallel to the first rotation axis AD1). The controller 7 transmits a second movement command E3-2 to the second linear mover 44. The second linear mover 44 that receives the second movement command E3-2 moves the machining head 30 in the direction parallel to Z axis (for example, a direction parallel to the vertical direction). The controller 7 also transmits a third movement command E3-3 to the third linear mover 47. The third linear mover 47 that receives the third movement command E3-3 moves the machining head 30 in the direction parallel to X axis (for example, a direction perpendicular to both Y axis and Z axis).

In the example illustrated in FIG. 35, the controller 7 may transmit a first rotation command E4 to the first rotational driver 34 of the machining apparatus 3. The first rotational driver 34 that receives the first rotation command E4 from the controller 7 rotates the first rotating tool T1 about the first rotation axis AD1.

In the example illustrated in FIG. 35, the controller 7 may transmit the second operation command E5 to the plurality of arm drivers 69 (for example, the plurality of motors MT) of the second robot 6. The plurality of arm drivers 69 that receive the second operation command E5 from the controller 7 cause the plurality of joints of the second multi-joint arm 60 to operate.

In the example illustrated in FIG. 35, the controller 7 may transmit a second rotation command E6 to the second rotational driver 64 of the tool holder 63. The second rotational driver 64 that receives the second rotation command E6 from the controller 7 rotates the second rotating tool T2 about the second rotation axis AD2.

In the example illustrated in FIG. 35, the controller 7 may transmit a tool movement command E7 to the tool linear mover 65 of the tool holder 63. The tool linear mover 65 that receives the tool movement command E7 from the controller 7 moves the second rotating tool T2 in the direction parallel to the second rotation axis AD2.

In the example illustrated in FIG. 35, the controller 7 may transmit a turn command E8 to the first driver 23 of the work holder 2. The first driver 23 that receives the turn command E8 from the controller 7 turns the table 21 around the first axis AX1.

In the example illustrated in FIG. 35, the controller 7 may transmit a tilt command E9 to the second driver 26 of the work holder 2. The second driver 26 that receives the tilt command E9 from the controller 7 tilts the table 21 around the second axis AX2.

In the example illustrated in FIG. 35, the controller 7 may transmit a table movement command E10 to the third driver 18. The third driver 18 that receives the table movement command E10 from the controller 7 moves the table apparatus 20 in the direction parallel to the first direction DR1. Alternatively, or additionally, the controller 7 may transmit a machining apparatus movement command E11 to the fourth driver 19d. The fourth driver 19d that receives the machining apparatus movement command E11 from the controller 7 moves the machining apparatus 3 in the direction parallel to the first direction DR1.

In the example illustrated in FIG. 35, the controller 7 may transmit a tool change command E12 to at least one tool changer 8. Such at least one tool changer 8 that receives the tool change command E12 from the controller 7 may change the first rotating tool T1, which is supported by the machining head 30, to another first rotating tool. Such at least one tool changer 8 that receives the tool change command E12 from the controller 7 may change the second rotating tool T2, which is supported by the second multi-joint arm 60, to another second rotating tool.

For example, the controller 7 transmits a first tool change command E12-1 to the first tool changer 80a. The first tool changer 80a that receives the first tool change command E12-1 changes the first rotating tool T1, which is supported by the machining head 30, to another first rotating tool. The controller 7 also transmits a second tool change command E12-2 to the second tool changer 80b. The second tool changer 80b that receives the second tool change command E12-2 changes the second rotating tool T2, which is supported by the second multi-joint arm 60, to another second rotating tool.

### (First Machining Mode M1)

As illustrated in FIG. 19 or FIG. 36, by controlling the first robot 5, the controller 7 is capable of performing a first machining mode M1 of machining the workpiece W supported by the table 21 with the laser beam emitted from the laser head 173, which is supported by the multi-joint arm 50.

More specifically, the controller 7 is capable of performing the first machining mode M1, which includes transmitting a first operation command E1 to the plurality of arm drivers 59 of the first robot 5 and transmitting an emission command E2 to the laser irradiator 17 so as to machine the workpiece W supported by the table 21 with the laser beam emitted from the laser head 173, which is supported by the multi-joint arm 50. In the first machining mode M1, before the workpiece W is irradiated with the laser beam, the position and orientation of the laser head 173 are changed using the multi-joint arm 50. This enables the position and orientation of the laser head 173 to be freely set in accordance with the shape, size, orientation, orientation, and/or another characteristic of the workpiece W, as illustrated in FIGs. 36 and 37. For example, by setting the direction of the laser beam emitted from the laser head 173 to a direction inclined with respect to a vertical plane, the multi-joint arm 50 is capable of machining the inclined surface WS, inclined with respect to the vertical plane, of the workpiece W with the laser beam (see FIG. 36). By setting the direction of the laser beam emitted from the laser head 173 to a direction perpendicular to the vertical plane, the multi-joint arm 50 is capable of machining a surface WV, perpendicular to the vertical plane, of the workpiece W (see FIG. 37).

As illustrated in FIG. 37, the first machining mode M1 may include the first hole forming mode M1-1, which has been described in the first embodiment. The first machining mode M1 may include the trimming mode M1-2, which has been described in the first embodiment (see FIG. 21). As illustrated in FIG. 36, the first machining mode M1 may include the cutout mode M1-3, which has been described in the first embodiment. Alternatively, or additionally, the first machining mode M1 may include the laser marking mode M1-4 (see FIG. 23), which has been described in the first embodiment.

### (Second Machining Mode M2)

As illustrated in FIG. 4 or FIG. 25, by controlling the machining apparatus 3, the controller 7 is capable of performing a second machining mode M2 of machining the workpiece W supported by the table 21 using the first rotating tool T1, which is supported by the machining head 30.

More specifically, the controller 7 is capable of performing the second machining mode M2, which includes transmitting the movement command E3 to the plurality of linear movers 4 and transmitting the first rotation command E4 to the first rotational driver 34 so as to machine the workpiece W supported by the table 21 using the first rotating tool T1, which is supported by the machining head 30. In the second machining mode M2, the first rotating tool T1, which rotates about the first rotation axis AD1, is moved using the plurality of linear movers 4, and thus it becomes possible to machine the workpiece W with high precision.

As illustrated in FIG. 4 (or as illustrated in FIG. 40), the second machining mode M2 may include the surface machining mode M2-1, which has been described in the first embodiment. The controller 7 that performs the surface machining mode M2-1 transmits the movement command E3 to the plurality of linear movers 4, and transmits the first rotation command E4 to the first rotational driver 34 so that the surface machining tool T1-1, which rotates about the first rotation axis AD1, moves in a direction substantially perpendicular to the first rotation axis AD1 while in contact with the workpiece W supported by the table 21. Thus, the surface machining of the workpiece W is performed with high precision.

As illustrated in FIG. 2 (or as illustrated in FIG. 39), the second machining mode M2 may include the second hole forming mode M2-2, which has been described in the first embodiment. The controller 7 that performs the second hole forming mode M2-2 transmits the movement command E3 to the first linear mover 41, and transmits the first rotation command E4 to the first rotational driver 34 so that the hole forming tool T1-2, which rotates about the first rotation axis AD1, moves in the direction along the first rotation axis AD1 while in contact with the workpiece W supported by the table 21. The first linear mover 41 that receives the movement command E3 linearly moves the hole forming tool T1-2 along the first rotation axis AD1. In this manner, a hole is formed in the workpiece W with high precision.

At the time of performing of the second machining mode M2, the controller 7 may use the coolant supplier 91 to supply the coolant liquid toward the workpiece W supported by the table 21.

When the second machining mode M2 is performed, the tip end portion 173a of the laser head 173 may be inserted into the recess portion 141 of the protector 14. In this case, when the second machining mode M2 is performed, the optical component 174 (for example, the lens 174n) disposed inside the laser head 173 and/or the laser emission port 173e of the laser head 173 are protected by the protector 14.

Alternatively, or additionally, when the second machining mode M2 is performed, a region where the first robot 5 is disposed (hereinafter, referred to as a "first region RG1") may be isolated by a shutter 95 from a region where the table 21 of the work holder 2 is disposed (hereinafter, referred to as a "second region RG2"). In an example illustrated in FIG. 41, the machine tool 1 includes the shutter 95, which separates the first region RG1, where the first robot 5 is disposed, from the second region RG2, where the table 21 of the work holder 2 is disposed. The machine tool 1 also includes a shutter driver 96 for opening and closing the shutter 95.

In the example illustrated in FIGs. 41 and 42, the shutter driver 96 moves the shutter 95 between a closed position K2 and an open position K1. When the shutter 95 is positioned at the open position K1, the multi-joint arm 50 of the first robot 5 is capable of causing the laser head 173 to enter the second region RG2 so as to machine the workpiece W with the laser beam emitted from the laser head 173 (see FIG. 42). When the shutter 95 is positioned in the closed position K2, the shutter 95 isolates the first region RG1 from the second region RG2 (see FIG. 41). In this manner, in cutting the workpiece W with the machining apparatus 3 or the second robot 6, the laser head 173 is protected by the shutter 95. More specifically, the shutter 95 prevents the cutting chips and/or the coolant liquid from adhering to the laser head 173.

From the viewpoint of protecting the laser head 173 (for example, the lens 174n, which is disposed inside the laser head 173), the first machining mode M1 and the second machining mode M2 are preferably performed at timings that do not overlap each other. Alternatively, in a case where dry cutting is performed in the first machining mode M1, at least a part of the first machining mode M1 and at least a part of the second machining mode M2 may be performed simultaneously.

### (Third Machining Mode M3)

As illustrated in FIG. 39 or FIG. 41, by controlling the second robot 6, the controller 7 may be capable of performing a third machining mode M3 of machining the workpiece W supported by the table 21 using the second rotating tool T2, which is supported by the second multi-joint arm 60.

More specifically, the controller 7 may be capable of performing the third machining mode M3, which includes at least transmitting a second operation command E5 to the plurality of arm drivers 69 of the second robot 6, transmitting a second rotation command E6 to the second rotational driver 64 of the tool holder 63, and transmitting a tool movement command E7 to the tool linear mover 65 of the tool holder 63 so as to machine the workpiece W supported by the table 21 using the second rotating tool T2, which is supported by the second multi-joint arm 60. In the third machining mode M3, the position and orientation of the second rotating tool T2 are changed using the second multi-joint arm 60 before the second rotating tool T2 comes into contact with the workpiece W. This enables the position and orientation of the second rotating tool T2 to be freely set in accordance with the shape, size, orientation, orientation, and/or another characteristic of the workpiece W.

As illustrated in FIGs. 39 to 41, at least a part of the second machining mode M2 and at least a part of the third machining mode M3 are preferably performed simultaneously. The second machining mode M2 and the third machining mode M3 are performed simultaneously, so that the time needed for machining the workpiece W can be shortened.

When the third machining mode M3 is performed, the controller 7 may use the coolant supplier 91 to supply the coolant liquid toward the workpiece W supported by the table 21.

As illustrated in FIG. 25, when the third machining mode M3 is performed, the tip end portion 173a of the laser head 173 may be inserted into the recess portion 141 of the protector 14. Alternatively, or additionally, as illustrated in FIG. 41, when the third machining mode M3 is performed, the first region RG1, where the first robot 5 is disposed may be isolated by the shutter 95 from the second region RG2, where the table 21 of the work holder 2 is disposed.

From the viewpoint of protecting the laser head 173 (for example, the lens 174n, which is disposed inside the laser head 173), the first machining mode M1 and the third machining mode M3 are preferably performed at timings that do not overlap each other. Alternatively, in the case where dry cutting is performed in the third machining mode M3, at least a part of the first machining mode M1 and at least a part of the third machining mode M3 may be performed simultaneously.

### (Rotation Mode M4)

By controlling the work holder 2 (more specifically, the first driver 23), the controller 7 may be capable of performing the rotation mode M4 of turning the table 21 around the first axis AX1. More specifically, the controller 7 is capable of performing the rotation mode M4, which includes transmitting a turn command E8 to the first driver 23 of the work holder 2 so as to turn the workpiece W supported by the table 21 around the first axis AX1. FIG. 38 illustrates a state after the rotation mode M4 is performed.

The rotation mode M4 may include moving the table apparatus 20 from the forward position P2 (or the receiving position P1) to the turnable position P3, and turning the table 21, which supports the workpiece W around the first axis AX1, while the table apparatus 20 is positioned at the turnable position P3. In this case, the controller 7 transmits a table movement command E10 to the third driver 18, and transmits the turn command E8 to the first driver 23 of the work holder 2 so as to move the table apparatus 20 from the forward position P2 (or the receiving position P1) to the turnable position P3 and to turn the workpiece W around the first axis AX1. It is to be noted that in a case where the workpiece W to be machined is a small-sized one, it is not necessary to move the table apparatus 20 between the forward position P2 (or the receiving position P1) and the turnable position P3 in performing the rotation mode M4.

In the case where the table 21 is in the tilted state, after the state of the table 21 is changed from the tilted state to the non-tilted state, the controller 7 may perform the rotation mode M4. Alternatively, even though the table 21 in the tilted state is turned around the first axis AX1, when the workpiece W and its surrounding structure do not interfere with each other, the table 21 in the tilted state may be turned around the first axis AX1 in the rotation mode M4.

Since the controller 7 is capable of performing the rotation mode M4, the machine tool 1 is capable of changing the orientation of the workpiece W relative to the machining apparatus 3 and the first robot 5. In this manner, the machining apparatus 3 and the first robot 5 are each capable of easily machining the first side surface Wc of the workpiece W (for example, the right side surface of the workpiece W), the second main surface Wb of the workpiece W (for example, the back surface of the workpiece W), and the second side surface Wd of the workpiece W (for example, the left side surface of the workpiece W), in addition to the first main surface Wa of the workpiece W (for example, the front surface of the workpiece W).

### (Tilting Mode M5)

By controlling the work holder 2 (more specifically, the second driver 26), the controller 7 may be capable of performing a tilting mode M5 of tilting the table 21 around the second axis AX2. More specifically, the controller 7 may be capable of performing the tilting mode M5, which includes transmitting a tilt command E9 to the second driver 26 of the work holder 2 so as to tilt the workpiece W supported by the table 21 around the second axis AX2. FIG. 40 illustrates a state in which after the tilting mode M5 is performed, the second machining mode M2 (or the third machining mode M3) is performed.

Since the controller 7 is capable of performing the tilting mode M5, the machine tool 1 is capable of changing the orientation of the workpiece W relative to the machining apparatus 3. Thus, the machining apparatus 3 is capable of easily machining the workpiece W having a complicated shape (see FIGs. 39 and 40).

### (First Tool Changing Mode M6)

As illustrated in FIG. 33, by controlling the tool changer 80 (more specifically, the first tool changer 80a), the controller 7 may be capable of performing a first tool changing mode M6 of changing the first rotating tool T1, which is supported by the machining head 30, to another first rotating tool.

More specifically, the controller 7 is capable of performing the first tool changing mode M6, which includes transmitting a first tool change command E12-1 to the first tool changer 80a so as to change the first rotating tool T1, which is supported by the machining head 30, to another first rotating tool.

Since the controller 7 is capable of performing the first tool changing mode M6, the machining apparatus 3 is capable of performing a plurality of types of machining (examples including surface machining, drilling, tapping, and friction stir welding) on one workpiece W.

### (Second Tool Changing Mode M7)

As illustrated in FIG. 34, by controlling the tool changer 80 (more specifically, the second tool changer 80b), the controller 7 may be capable of performing a second tool changing mode M7 of changing the second rotating tool T2, which is supported by the second multi-joint arm 60, to another second rotating tool.

More specifically, the controller 7 is capable of performing a second tool changing mode M7, which includes transmitting a second tool change command E12-2 to the second tool changer 80b so as to change the second rotating tool T2, which is supported by the second multi-joint arm 60, to another second rotating tool.

Since the controller 7 is capable of performing the second tool changing mode M7, the second robot 6 is capable of performing a plurality of types of machining (examples including drilling and tapping) on one workpiece W.

A first machining cycle is defined to include performing at least one of turning the table 21, which supports the workpiece W, around the first axis AX1, and tilting the table 21, which supports the workpiece W, around the second axis AX2, and then machining the workpiece W supported by the table 21 with the laser beam emitted from the laser head 173, which is supported by the multi-joint arm 50. In such a case, by executing a machining program 722, which is stored in a memory 72, the controller 7 may be configured to repeatedly perform the first machining cycle "N1" times or more. It is to be noted that examples of "N1" include 2, 3, 4, 5, 6, 7, 8, 9, 10, et cetera.

For example, the first machining cycle is defined to include turning the table 21, which supports the workpiece W, around the first axis AX1, and then machining the workpiece W supported by the table 21 with the laser beam emitted from the laser head 173, which is supported by the multi-joint arm 50. In such a case, by executing the machining program 722, which is stored in the memory 72, the controller 7 (more specifically, the controller 7, which controls the first robot 5 and the first driver 23) is configured to repeatedly perform the first machining cycle two times or more. In this manner, it becomes possible to machine the plurality of surfaces (examples including the first main surface Wa and the second main surface Wb) efficiently with the laser beam emitted from the laser head 173.

A second machining cycle is defined to include performing at least one of turning the table 21, which supports the workpiece W, around the first axis AX1, and tilting the table 21, which supports the workpiece W, around the second axis AX2, and then machining the workpiece W supported by the table 21 using at least one first rotating tool T1, which is supported by the machining head 30. In such a case, by executing the machining program 722, which is stored in the memory 72, the controller 7 may be configured to repeatedly perform the second machining cycle "N2" times or more. It is to be noted that examples of "N2" include 2, 3, 4, 5, 6, 7, 8, 9, 10, et cetera.

### (Third Embodiment)

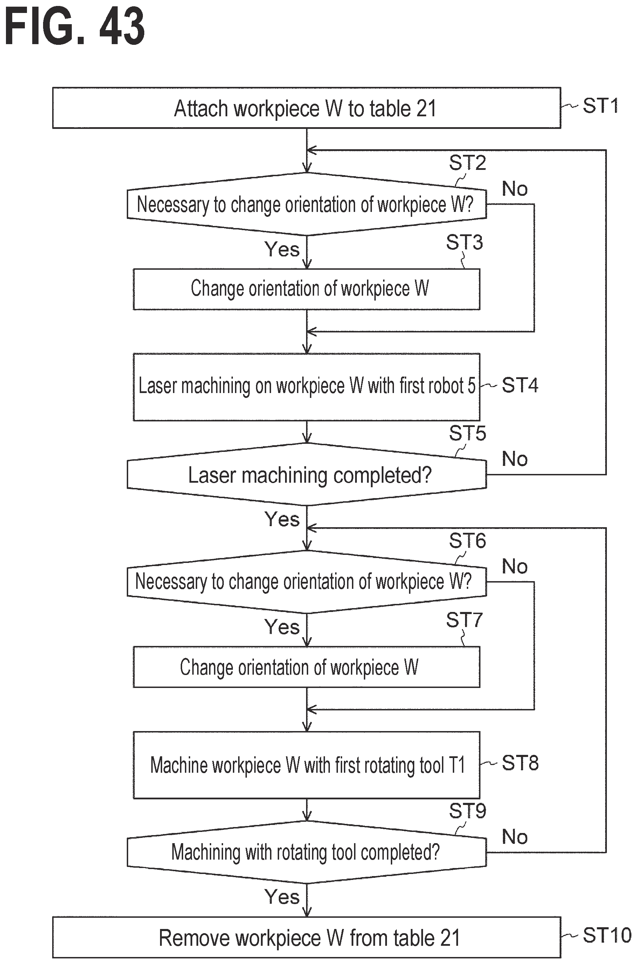

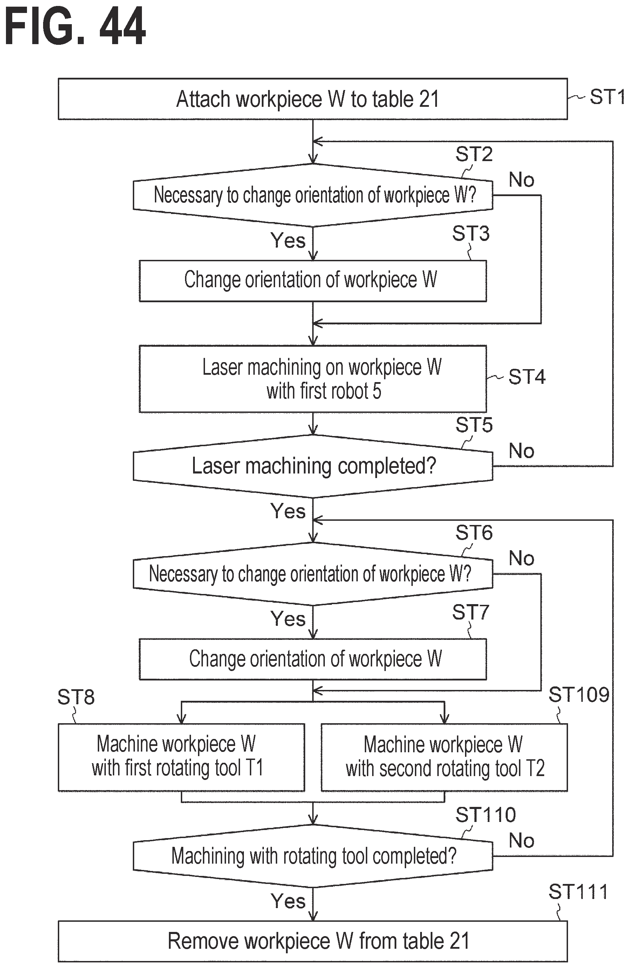

A workpiece machining method according to a third embodiment will be described with reference to FIGs. 1 to 44. FIG. 43 is a flowchart of the workpiece machining method according to the third embodiment, illustrating an example of the workpiece machining method. FIG. 44 is a flowchart of the workpiece machining method according to the third embodiment, illustrating another example of the workpiece machining method.

In the third embodiment, differences from the first embodiment and the second embodiment will be mainly described. On the other hand, in the third embodiment, repeated description of the matters that have been already described in the first embodiment or the second embodiment will be omitted. Therefore, even if not explicitly described in the third embodiment, it is needless to say that the matters that have been described in the first embodiment or the second embodiment are applicable to the third embodiment. On the contrary, the matters to be described in the third embodiment are applicable to each of the first embodiment and the second embodiment.

The workpiece machining method according to the third embodiment may be performed using the machine tool 1A according to the first embodiment, may be performed using the machine tool 1B according to the second embodiment, or may be performed using another machine tool. Since the machine tools 1A and 1B have been described in the first embodiment or the second embodiment, repeated description of the machine tools 1A and 1B will be omitted.

The workpiece machining method according to the third embodiment includes: (1) a step of directly or indirectly attaching the workpiece W to the table 21 of the work holder 2 (see, for example, FIG. 12 or FIG. 32); (2) a first machining step of machining the workpiece W supported by the table 21 with a laser beam emitted from the laser head 173, which is supported by the multi-joint arm 50 of the first robot 5 (see, for example, FIG. 19 or FIG. 36); and (3) a second machining step of machining the workpiece W supported by the table 21 using the first rotating tool supported by the machining head 30, which is movable three-dimensionally (see, for example, FIG. 4 or FIG. 39).

The first machining step includes moving the laser head 173 using the multi-joint arm 50. The second machining step includes moving the machining head 30 using the plurality of linear movers 4.

The workpiece machining method according to the third embodiment has similar effects to the workpiece machining method according to the first embodiment or the workpiece machining method according to the second embodiment.

### (Optional and Additional Configuration)

Next, optional and additional configurations that can be adopted in the third embodiment (or the above-described first embodiment or the above-described second embodiment) will be described with reference to FIGs. 1 to 44.

As illustrated in FIGs. 37 to 39, after the first machining step (see FIG. 37) is performed, the second machining step (see FIG. 39) may be performed. More specifically, after the first machining step (see FIG. 37) is performed, the table 21, which supports the workpiece W, may be turned around the first axis AX1 (see FIG. 38), and after the table 21, which supports the workpiece W, is turned around the first axis AX1, the second machining step (see FIG. 39) may be performed.

In a case where the first machining step is performed prior to the second machining step, there is no adverse effect on the laser head 173 from the cutting chips generated by performing the second machining step or a coolant liquid used in performing the second machining step, or such an adverse effect is reduced.

Alternatively, after the second machining step is performed, the first machining step may be performed. It is to be noted that in a case where the coolant liquid is used in performing the second machining step, the coolant liquid in a mist form drifting in the machining chamber CB is preferably removed from the machining chamber CB before the first machining step is performed. From such a point of view, the machine tool 1 may include a mist collection system 99 (see FIG. 32), which removes the coolant liquid in the mist form drifting in the machining chamber CB from the machining chamber CB. The mist collection system 99 may include a mist collector 99a, which sucks the coolant liquid in the mist form, or may include a blower for blowing off the coolant liquid in the mist form.

In addition, after the first machining step is performed, the second machining step may be performed. After the second machining step is performed, the first machining step may be performed for the second time. It is to be noted that in a case where the coolant liquid is used when the second machining step is performed, the coolant liquid in the mist form drifting in the machining chamber CB is preferably removed from the machining chamber CB using the mist collection system 99 (for example, the mist collector 99a) before the first machining step is performed for the second time.

Alternatively, a part of the first machining step and a part of the second machining step may be performed simultaneously. For example, in a case where dry cutting is performed in the second machining step, a part of the first machining step and a part of the second machining step may be performed simultaneously. In a case where a part of the first machining step and a part of the second machining step are performed simultaneously, the time needed for machining the workpiece W can be shortened.

As illustrated in FIGs. 39 and 40, the workpiece machining method according to the third embodiment may include a third machining step of machining the workpiece W supported by the table 21 using the second rotating tool T2, which is supported by the second multi-joint arm 60. As illustrated in FIGs. 39 and 40, a part of the second machining step and a part of the third machining step may be performed simultaneously. In a case where a part of the second machining step and a part of the third machining step are performed simultaneously, the time needed for machining the workpiece W can be shortened.

One example of the workpiece machining method according to the third embodiment will be described in more detail.

In the first step ST1, the workpiece W is directly or indirectly attached to the table 21 of the work holder 2. The first step ST1 is an attaching step.

In the example illustrated in FIG. 2, in the attaching step (the first step ST1), the workpiece W is attached to the table 21 of the work holder 2 via the jig J. In the example illustrated in FIG. 2, the jig J is fixed to the table 21, and the workpiece W is fixed to the jig J. The jig J may include a chuck (for example, a hydraulic chuck or an electric chuck) for fixing the workpiece W to the jig J.

In the second step ST2, it is determined whether it is necessary to change the orientation of the workpiece W (see FIG. 43). The second step ST2 is a first determining step . The first determining step is performed by the controller 7. More specifically, the controller 7 determines whether it is necessary to change the orientation of the workpiece W, based on the machining program 722, which is stored in the memory 72.

In the first determining step (the second step ST2), in a case where the controller 7 determines that it is necessary to change the orientation of the workpiece W (the second step ST2: Yes), the orientation of the workpiece W is changed in the third step ST3 (more specifically, as illustrated in FIGs. 13 and 14, the table 21, which supports the workpiece W, is turned around the first axis AX1). The third step ST3 is a first orientation changing step.

The first orientation changing step (the third step ST3) may be performed in combination with a moving step of moving the table apparatus 20. For example, in a case where the controller 7 determines that a linear movement of the workpiece W and turning of the workpiece W around the first axis AX1 are both necessary, the table apparatus 20 is linearly moved and the table 21 is turned around the first axis AX1.

In a case where the controller 7 determines that it is not necessary to change the orientation of the workpiece W (the second step ST2: No), or in a case where the orientation change of the workpiece W is completed, the processing proceeds to the fourth step ST4. In the fourth step ST4, the workpiece W, which is supported by the table 21, is machined with the laser beam emitted from the laser head 173, which is supported by the multi-joint arm 50 of the first robot 5. The fourth step ST4 is a first machining step.

The first machining step (the fourth step ST4) includes at least one sub-step. As illustrated in FIG. 20, the first machining step (the fourth step ST4) may include, as one sub-step, forming a hole HL1 in the workpiece W with the laser beam emitted from the laser head 173. As illustrated in FIG. 21, the first machining step (the fourth step ST4) may include, as one sub-step, removing a burr Bu from the workpiece W with the laser beam emitted from the laser head 173. As illustrated in FIG. 22, the first machining step (the fourth step ST4) may include, as one sub-step, cutting out a portion Wk of the workpiece W from the workpiece W with the laser beam emitted from the laser head 173. As illustrated in FIG. 23, the first machining step (the fourth step ST4) may include, as one sub-step, engraving at least one of a character, a symbol, and a barcode on a surface of the workpiece W with the laser beam emitted from the laser head 173.

It is to be noted that in a case where the first machining step (the fourth step ST4) includes a plurality of sub-steps, the plurality of sub-steps may be performed in any order.

In the fifth step ST5, it is determined whether the laser beam machining of the workpiece W with the first robot 5 is completed. The fifth step ST5 is a second determining step. The second determining step is performed by the controller 7. More specifically, the controller 7 determines whether the laser beam machining of the workpiece W with the first robot 5 is completed, based on the machining program 722, which is stored in the memory 72.

In the second determining step (the fifth step ST5), in a case where the controller 7 determines that the laser beam machining of the workpiece W with the first robot 5 is completed (the fifth step ST5: Yes), the processing proceeds to the sixth step ST6. In a case where the controller 7 determines that the laser beam machining of the workpiece W with the first robot 5 is not completed (the fifth step ST5: No), the processing returns to the second step ST2 (the first determining step).

The second step ST2 to the fifth step ST5 are repeatedly performed until the controller 7 determines that the laser beam machining of the workpiece W with the first robot 5 is completed. For example, in the example illustrated in FIGs. 36 and 37, the workpiece machining method includes: (1) machining the first surface (for example, the first main surface Wa) of the workpiece W supported by the table 21 with the laser beam emitted from the laser head 173, which is supported by the multi-joint arm 50 (the fourth step ST4); (2) changing the orientation of the workpiece W (the third step ST5) in response to the controller 7 determining that the laser beam machining of the workpiece W with the first robot 5 is not completed (the fifth step ST2: No) and the controller 7 determining that it is necessary to change the orientation of the workpiece W (the second step ST3: Yes); and (3) machining the second surface (for example, the second main surface Wb) of the workpiece W supported by the table 21 with the laser beam emitted from the laser head 173, which is supported by the multi-joint arm 50 (the fourth step ST4).

In the sixth step ST6, it is determined whether it is necessary to change the orientation of the workpiece W (see FIG. 43). The sixth step ST6 is a third determining step. The third determining step is performed by the controller 7. More specifically, the controller 7 determines whether it is necessary to change the orientation of the workpiece W, based on the machining program stored in the memory 72.

In the third determining step (the sixth step ST6), in a case where the controller 7 determines that it is necessary to change the orientation of the workpiece W, the orientation of the workpiece W is changed in the seventh step ST7 (more specifically, at least one of turning the table 21, which supports the workpiece W, around the first axis AX1, and tilting the table 21, which supports the workpiece W around the second axis AX2, is performed). The seventh step ST7 is a second orientation changing step.

For example, in the third determining step (the sixth step ST6), in a case where the controller 7 determines that at least the turning of the workpiece W around the first axis AX1 is necessary, the table 21, which supports the workpiece W, is turned around the first axis AX1 (a turning step).

For example, in the third determining step (the sixth step ST6), in a case where the controller 7 determines that tilting of the workpiece W around the second axis AX2 is at least necessary, the table 21, which supports the workpiece W, is tilted around the second axis AX2 (a tilting step).

The second orientation changing step may be performed in combination with the moving step of moving the table apparatus 20. More specifically, in a case where the controller 7 determines that the linear movement of the workpiece W and the orientation change of the workpiece W are both necessary, the table apparatus 20 is linearly moved, and in addition, the table 21 is either turned or tilted.

In a case where the controller 7 determines that the orientation change of the workpiece W is not necessary (the sixth step ST6: No), or in a case where the orientation change of the workpiece W is completed, the processing proceeds to the eighth step ST8.

In the eighth step ST8, the workpiece W supported by the table 21 is machined with at least one first rotating tool T1, which is supported by the machining head 30. The eighth step ST8 is a second machining step. There may be 10 or more, 20 or more, or 30 or more to-be-machined portions in the workpiece W to be machined with at least one first rotating tool T1.

In the example illustrated in FIG. 39, at least one first rotating tool T1, which is supported by the machining head 30, includes the hole forming tool T1-2 (for example, a drill or a tapping tool). Alternatively, or additionally, at least one first rotating tool T1, which is supported by the machining head 30 may include the surface machining tool T1-1 (see FIG. 33, if necessary) and/or a friction stir welding tool T1-3 (see FIG. 33, if necessary). The first rotating tool T1 (for example, the hole forming tool T1-2), which is supported by the machining head 30, is changed to another first rotating tool (for example, the surface machining tool T1-1 or the friction stir welding tool T1-3) by using, for example, the first tool changer 80a (see FIG. 33).

The first machining step (the eighth step ST8) includes moving the machining head 30 by using the plurality of linear movers 4 while the first rotating tool T1 is in contact with the workpiece W supported by the table 21. In a case where the workpiece W is machined by moving the machining head 30 using the plurality of linear movers 4, it becomes possible to machine the workpiece W with high precision.

In the ninth step ST9, it is determined whether machining (more specifically, cutting) the workpiece W with the machining apparatus 3 is completed. The ninth step ST9 is a fourth determining step. The fourth determining step is performed by the controller 7. More specifically, the controller 7 determines whether machining (more specifically, cutting) the workpiece W with the machining apparatus 3 is completed, based on the machining program 722, which is stored in the memory 72.

In the fourth determining step (the ninth step ST9), in a case where the controller 7 determines that machining the workpiece W with the machining apparatus 3 is completed (the ninth step ST9: Yes), the processing proceeds to the tenth step ST10. In a case where the controller 7 determines that machining the workpiece W with the machining apparatus 3 is not completed (the ninth step ST9: No), the processing returns to the sixth step ST6 (the third determining step).

The sixth step ST6 to the ninth step ST9 are repeatedly performed until the controller 7 determines that machining the workpiece W with the machining apparatus 3 is completed. For example, in the example illustrated in FIGs. 39 and 40, the workpiece machining method includes: (1) machining the first surface (for example, the first main surface Wa) of the workpiece W supported by the table 21 using at least one first rotating tool T1 (for example, the hole forming tool T1-2) , which is supported by the machining head 30 (the eighth step ST8); (2) changing the orientation of the workpiece W (the seventh step ST7) in accordance with the controller 7 determining that cutting the workpiece W with the machining apparatus 3 is not completed (the ninth step ST9: No) and the controller 7 determining that it is necessary to change the orientation of the workpiece W (the sixth step ST6: Yes); and (3) machining the second surface (for example, the second main surface Wb) of the workpiece W supported by the table 21 with at least one first rotating tool T1 (for example, the surface machining tool T1-1), which is supported by the machining head 30 (the eighth step ST8).

In the tenth step ST10, the workpiece W is removed from the table 21. The tenth step ST10 is a removing step. The removing step (the tenth step ST10) may include moving the door 12 from the closed position to the open position, and moving the workpiece W from the machining chamber CB across the workpiece passage opening OP to the outside of the machining chamber CB.

Immediately before the removing step (the tenth step ST10) is performed, the table apparatus 20 may be moved in a direction approaching the workpiece passage opening OP. This movement is carried out by using the third driver 18. When the table apparatus 20 is moved in the direction approaching the workpiece passage opening OP, the workpiece W is easily removed from the table 21 in the removing step.

### (Modification of Workpiece Machining Method)

A workpiece machining method according to a modification will be described with reference to FIGs. 1 to 42 and 44. Since the first step ST1 to the eighth step ST8 are similar to the above-described first step ST1 to the above-described eighth step ST8, repeated description of these steps will be omitted.

In the ninth step ST109, the workpiece W supported by the table 21 is machined with at least one second rotating tool T2, which is supported by the second multi-joint arm 60. The ninth step ST9 is a third machining step. There may be 10 or more, 20 or more, or 30 or more to-be-machined portions in the workpiece W to be machined with at least one second rotating tool T2.

In the example illustrated in FIG. 39, at least one second rotating tool T2, which is supported by the second multi-joint arm 60, includes the drill T2-1. Alternatively, or additionally, at least one second rotating tool T2, which is supported by the second multi-joint arm 60, may include the tapping tool T2-2 (see FIG. 34, if necessary) and/or the friction stir welding tool. The second rotating tool T2 (for example, the drill T2-1), which is supported by the machining head 30, is changed to another second rotating tool (for example, the tapping tool T2-2 or the friction stir welding tool) by using, for example, the second tool changer 80b (see FIG. 34).

As illustrated in FIG. 29, the third machining step (the ninth step ST109) may include moving, by the tool holder 63, which is attached to the multi-joint arm 50, the second rotating tool T2, which rotates about the second rotation axis AD2, in a direction parallel to the second rotation axis AD2 using the tool linear mover 65. When moving the second rotating tool T2 using the tool linear mover 65, it becomes possible to move the second rotating tool T2 with high precision.

As illustrated in FIG. 39, a part of the second machining step (the eighth step ST8) and a part of the third machining step (the ninth step ST109) may be performed simultaneously. A part of the second machining step (the eighth step ST8) may be performed while the third machining step is not performed. In addition, a part of the third machining step (the ninth step ST109) may be performed while the second machining step is not performed.

In the tenth step ST110, it is determined whether machining (more specifically, cutting) the workpiece W with the machining apparatus 3 and the second robot 6 is completed. The tenth step ST110 is a fourth determining step. The fourth determining step is performed by the controller 7. More specifically, the controller 7 determines whether machining (more specifically, cutting) the workpiece W with the machining apparatus 3 and the second robot 6 is completed, based on the machining program 722, which is stored in the memory 72.

In the fourth determining step (the tenth step ST110), in a case where the controller 7 determines that machining the workpiece W with the machining apparatus 3 and the second robot 6 is completed (the tenth step ST110: Yes), the processing proceeds to the eleventh step ST111. In a case where the controller 7 determines that machining the workpiece W with the machining apparatus 3 and the second robot 6 is not completed (the tenth step ST110: No), the processing returns to the sixth step ST6 (the third determining step).

The sixth step ST6 to the tenth step ST110 are repeatedly performed until the controller 7 determines that machining the workpiece W with the machining apparatus 3 and the second robot 6 is completed. For example, in an example illustrated in FIGs. 39 and40, the workpiece machining method includes: (1) machining the first surface (for example, the first main surface Wa) of the workpiece W supported by the table 21 using at least one first rotating tool T1 (for example, the hole forming tool T1-2), which is supported by the machining head 30 (the eighth step ST8); (2) machining the third surface (for example, the first side surface Wc) of the workpiece W supported by the table 21 using at least one second rotating tool T2 (for example, the drill T2-1), which is supported by the second multi-joint arm 60 (the ninth step ST109); (3) changing the orientation of the workpiece W (the seventh step ST7) in accordance with the controller 7 determining that machining the workpiece W with the machining apparatus 3 and the second robot 6 is not completed (the tenth step ST110: No) and the controller 7 determining that it is necessary to change the orientation of the workpiece W (the sixth step ST6: Yes); (4) machining the second surface (for example, the second main surface Wb) of the workpiece W supported by the table 21 using at least one first rotating tool T1 (for example, the surface machining tool T1-1), which is supported by the machining head 30 (the eighth step ST8); and (5) machining the fourth surface (for example, the second side surface Wd) of the workpiece W supported by the table 21 using at least one second rotating tool T2 (for example, the tapping tool T2-2), which is supported by the second multi-joint arm 60 (the ninth step ST109).

In the eleventh step ST111, the workpiece W is removed from the table 21. The eleventh step ST111 is a removing step. The removing step (the eleventh step ST111) may include moving the door 12 from the closed position to the open position, and moving the workpiece W from the machining chamber CB across the workpiece passage opening OP to the outside of the machining chamber CB.

Immediately before the removing step (the eleventh step ST111) is performed, the table apparatus 20 may be moved in the direction approaching the workpiece passage opening OP. This movement is carried out by using the third driver 18. When the table apparatus 20 moves in the direction approaching the workpiece passage opening OP, the workpiece W is easily removed from the table 21 in the removing step.

The present invention is not limited to the above-described embodiments or modifications, and it is apparent that the embodiments or modifications can be appropriately modified or changed within the scope of the technical idea of the present invention. In addition, various techniques used in each embodiment or each modification are applicable to other embodiments or other modifications as long as a technical contradiction does not occur. Furthermore, any additional configuration in each embodiment or each modification can be omitted as appropriate.

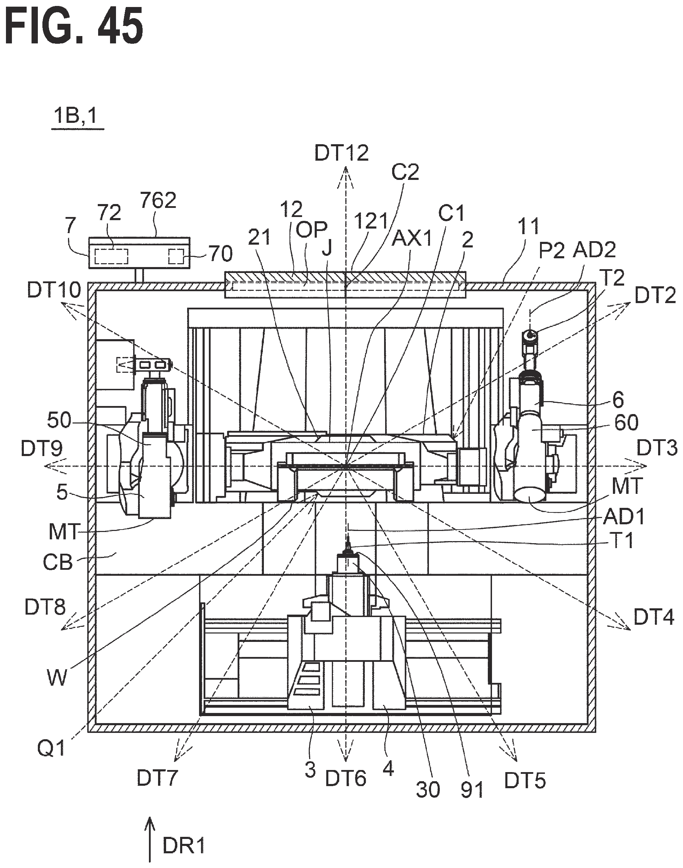

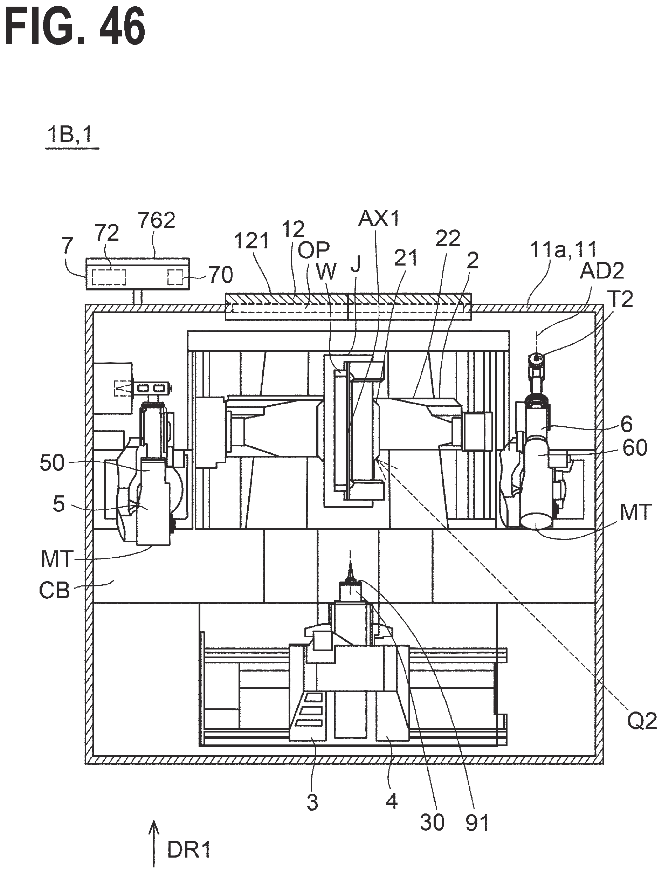

In examples illustrated in FIGs. 45 and 46, the work holder 2 is capable of indexing the table 21 to each of a plurality of different indexing angular positions (Q1 and Q2) around the first axis AX1. For example, the work holder 2 is capable of indexing the table 21 to a first indexing angular position Q1 around the first axis AX1, and is also capable of indexing the table 21 to a second indexing angular position Q2 around the first axis AX1. In the examples illustrated in FIGs. 45 and 46, the second indexing angular position Q2 denotes a position different from the first indexing angular position Q1 by 90 degrees around the first axis AX1. Alternatively, the second indexing angular position Q2 may be a position different from the first indexing angular position Q1 by any predetermined angle around the first axis AX1. The work holder 2 may be capable of indexing the table 21 to at least each of the plurality of indexing angular positions different by 90 degrees from each other around the first axis AX1. The work holder 2 may be capable of indexing the table 21 to at least each of the plurality of indexing angular positions different by 45 degrees from each other around the first axis AX1.

In the examples illustrated in FIGs. 45 and 46, the first robot 5 and the machining apparatus 3 are respectively disposed at two different angular positions around the work holder 2 in a plan view. In the examples illustrated in FIGs. 45 and 46, the machining head 30 and the multi-joint arm 50 are capable of approaching the workpiece W supported by the table 21 from angles different by approximately 90 degrees from each other in the plan view. Therefore, interference between the machining apparatus 3 and the first robot 5 is effectively prevented.

In the examples illustrated in FIGs. 45 and 46, the first robot 5, the machining apparatus 3, and the workpiece passage opening OP are respectively disposed at three different angular positions around the work holder 2 in the plan view. In this case, it becomes possible to easily carry the workpiece W into and out of the machining chamber CB. In addition, an increase in the installation space of the machine tool 1 is prevented. Furthermore, by viewing the inside of the machine through the workpiece passage opening OP, it is possible to easily check the situations of the first rotating tool T1 and the laser head 173. It is to be noted that a window 121, through which the inside of the machining chamber CB is visually recognizable from the outside of the machining chamber CB, is preferably provided in the door 12. In this case, by viewing the inside of the machine through the window 121, it becomes possible to easily check the situations of the first rotating tool T1 and the laser head 173.

In the examples illustrated in FIGs. 45 and 46, the first robot 5, the second robot 6, the machining apparatus 3, and the workpiece passage opening OP are disposed at four different angular positions around the work holder 2 in the plan view. In this case, it becomes easy to simultaneously cut the workpiece W with the machining apparatus 3 and the second robot 6 without allowing the machining apparatus 3 and the second robot 6 to interfere with each other. In the examples illustrated in FIGs. 45 and 46, the machining head 30 and the multi-joint arm 50 are respectively capable of approaching the workpiece W supported by the table 21 from angles different by approximately 90 degrees from each other in the plan view. In addition, the machining head 30 and the second multi-joint arm 60 are capable of approaching the workpiece W supported by the table 21 from angles different by approximately 90 degrees from each other in the plan view. Therefore, interference among the machining apparatus 3, the first robot 5, and the second robot 6 is effectively prevented.

In addition, since the first robot 5, the second robot 6, the machining apparatus 3, and the workpiece passage opening OP are respectively disposed at four different angular positions around the work holder 2 in the plan view, it becomes possible to easily carry the workpiece W into and out of the machining chamber CB. In addition, an increase in the installation space of the machine tool 1 is prevented. Furthermore, by viewing the inside of the machine through the workpiece passage opening OP or the window 121, it is possible to easily check the situations of the first rotating tool T1, the second rotating tool T2, and the laser head 173.

As illustrated in FIG. 45, a first center C1 is defined as the area center of the table 21 when the table 21 is present at the position closest to the machining apparatus 3 (more specifically, the area center of the upper surface of the table 21 when the table 21 is present at the position closest to the machining apparatus 3). It is to be noted that the table 21 may be a table that is movable in a direction away from the machining apparatus 3, or may be a table that does not move in the direction away from the machining apparatus 3.

As illustrated in FIG. 45, a 12 o'clock direction DT12 is defined as a direction from the first center C1 toward a center C2 of the workpiece passage opening OP in a plan view (more specifically, the area center of the workpiece passage opening OP in the plan view). The machining apparatus 3 is disposed, for example, at a position that overlaps at least one of a half line DT5, which extends from the first center C1 in a 5 o'clock direction, a half line DT6, which extends from the first center C1 in a 6 o'clock direction, and a half line DT7, which extends from the first center C1 in a 7 o'clock direction in the plan view. For example, in the plan view, the first robot 5 is disposed at a position that overlaps at least one of a half line DT2, which extends from the first center C1 in the 2 o'clock direction, a half line DT3, which extends from the first center C1 in the 3 o'clock direction, a half line DT4, which extends from the first center C1 in a 4 o'clock direction, a half line DT8, which extends from the first center C1 in an 8 o'clock direction, a half line DT9, which extends from the first center C1 in a 9 o'clock direction, and a half line DT10, which extends from the first center C1 in a 10 o'clock direction. One of the first robot 5 and the second robot 6 may be disposed at a position that overlaps at least one of the half line DT8, which extends from the first center C1 in the 8 o'clock direction, the half line DT9, which extends from the first center C1 in the 9 o'clock direction, and the half line DT10, which extends from the first center C1 in the 10 o'clock direction in the plan view. The other one of the first robot 5 and the second robot 6 may be disposed at a position that overlaps at least one of the half line DT2, which extends from the first center C1 in the 2 o'clock direction, the half line DT3, which extends from the first center C1 in the 3 o'clock direction, and the half line DT4, which extends from the first center C1 in the 4 o'clock direction.

In the examples illustrated in FIGs. 1 and 24, the first rotation axis AD1, which is the rotation axis of the first rotating tool T1, is substantially parallel to a horizontal plane. The first rotating tool T1 is supported by the machining head 30. Alternatively, the first rotation axis AD1 may be substantially parallel to the vertical direction, or may be inclined with respect to both the horizontal plane and the vertical direction.

### Reference Signs List

1, 1A, 1B ... Machine tool, 2 ... Work holder, 3 ... Machining apparatus, 4 ... Linear mover, 5 ... First robot, 6 ... Second robot, 7 ... Controller, 8 ... Tool changer, 10 ... Base, 11 ... Wall, 11-1 ... First wall, 11-2 ... Second wall, 11-3 ... Third wall, 11-4 ... Fourth wall, 11a ... Fixed wall, 11b ... Movable wall, 11b-1 ... First movable wall, 11b-2 ... Second movable wall, 12 ... Door, 13a ... Base stand, 13b ... Base stand, 14 ... Protector, 16 ... Mover, 17 ... Laser irradiator, 18 ... Third driver, 19d ... Fourth driver, 19r ... Guide rail(s), 20 ... Table apparatus, 21 ... Table, 22 ... Block, 22a ... First end portion, 22b ... Second end portion, 22c ... Central portion, 23 ... First driver, 24 ... Guide rail(s), 25 ... Stationary support, 25a ... First stationary support, 25b ... Second stationary support, 26 ... Second driver, 30 ... Machining head, 31 ... Spindle, 32 ... Support, 33 ... Bearing, 34 ... First rotational driver, 35 ... Tilt driver, 36 ... First mover, 37 ... Second mover, 38 ... Third mover, 38c ... Column, 41 ... First linear mover, 42 ...Driver, 43 ... First linear guide, 44 ... Second linear mover, 45 ... Driver, 46 ... Second linear guide, 47 ... Third linear mover, 48 ... Driver, 49 ... Third linear guide, 50 ... Multi-joint arm, 51a ... First portion, 51b ... Second portion, 51c ... Third portion, 51d ... Fourth portion, 51e ... Fifth portion, 51f ... Sixth portion, 52 ... Wrist, 59 ... Arm driver, 60 ... Second multi-joint arm, 61a ... First portion, 61b ... Second portion, 61c ... Third portion, 61d ... Fourth portion, 61e ... Fifth portion, 61f ... Sixth portion, 62 ... Wrist, 63 ... Tool holder, 64 ... Second rotational driver, 65 ... Tool linear mover, 66 ... Fixed part, 66r ... Linear guide, 67 ... Movable portion, 69 ... Arm driver, 70 ... Processor, 72 ... Memory, 74 ... Communication circuit, 76 ... Inputter, 78 ... Bus, 80 ... Tool changer, 80a ... First tool changer, 80b ... Second tool changer, 81a ... Tool change arm, 82a ... First gripping portion, 83a ... Second gripping portion, 84a ... Arm rotator, 85a ... Arm mover, 91 ... Coolant supplier, 91n ... Nozzle, 93 ... Tool stocker, 95 ... Shutter, 96 ... Shutter driver, 99 ... Mist collection system, 99a ... Mist collector, 100 ... Machine tool system, 101 ... Third robot, 102 ... Third multi-joint arm, 103 ... Gripper, 121 ... Window, 131a ... Upper surface, 131b ... Upper surface, 141 ... Recess portion, 141a ... Opening, 143 ... Wall, 151 ... Cover, 156 ... Support, 173 ... Laser head, 173a ... Tip end portion, 173e ... Laser emission port, 173f ... Flange, 173p ... Gas flow channel, 174 ... Optical component, 174n ... Lens, 176 ... Laser light source, 177 ... Gas supplier, 178 ... Component for transmitting laser beam to laser head, 178f ... Optical fiber, 722 ... Machining program, 726 ... Workpiece data, 762 ... Display equipped with touch panel, AD1 ... First rotation axis, AD2 ... Second rotation axis, AT ... Tilt axis, AX1 ... First axis, AX2 ... Second axis, Bu ... Burr, C1 ... First center, C2 ... Center of workpiece opening passage, CB ... Machining chamber, CD ... Second chamber, DR1 ... Fiirst direction, DR2 ... Second direction, DT12 ... 12 o'clock direction, DT2, DT3, DT4, DT5, DT6, DT7, DT8, DT9, DT10 ... Half line, Dp ... Depression, Dp-1 ... Character, E1 ... First operation command, E2 ... Emission command, E3 ... Movement command, E3-1 ... First movement command, E3-2 ... Second movement command, E3-3 ... Third movement command, E4 ... First rotation command, E5 ... Second operation command, E6 ... Second rotation command, E7 ... Tool movement command, E8 ... Turn command, E9 ... Tilt command, E10 ... Table movement command, E11 ... Machining apparatus movement command, E12 ... Tool change command, E12-1 ... First tool change command, E12-2 ... Second tool change command, F1 ... Extended position, F2 ... Retracted position, HL1, HL2, HL3 ... Hole, J ... Jig, K1 ... Open position, K2 ... Closed position, LB ... Laser beam, M1 ... First machining mode, M1-1 ... First hole forming mode, M1-2 ... Trimming mode, M1-3 ... Cutout mode, M1-4 ... Laser marking mode, M2 ... Second machining mode, M2-1 ... Surface machining mode, M2-2 ... Second hole forming mode, M3 ... Third machining mode, M4 ... Rotation mode, M5 ... Tilting mode, M6 ... First tool changing mode, M7 ... Second tool changing mode, MT ... Motor, OB ... Closed orbit, OP ... Workpiece passage opening, P1 ... Receiving position, P2 ... Forward position, P3 ... Turnable position, P4 ... Forward position, P5 ... Backward position, Q1 ... First indexing angular position, Q2 ... Second indexing angular position, RG1 ... First region, RG2 ... Second region, RT1 ... First rotary axis, RT2 ... First tilt axis, RT3 ... Second tilt axis, RT4 ... Second rotary axis, RT5 ... Third tilt axis, RT6 ... Third rotary axis, RX1 ... First rotary axis, RX2 ... First tilt axis, RX3 ... Second tilt axis, RX4 ... Second rotary axis, RX5 ... Third tilt axis, RX6 ... Third rotary axis, T1 ... First rotating tool, T1-1 ... Surface machining tool, T1-2 ... Hole forming tool, T1-2a ... Drill, T1-2b ... Tapping tool, T1-3 ... Friction stir welding tool, T2 ... Second rotating tool, T2-1 ... Drill, T2-2 ... Tapping tool, W ... Workpiece, WS ... Inclined surface, WV ... Surface perpendicular to vertical plane, Wa ... First main surface, Wb ... Second main surface, Wc ... First side surface, Wd ... Second side surface, We ... Top surface, Wk ... Portion of workpiece

## Claims

1. A machine tool comprising:
a work holder comprising a table that supports a workpiece;
a machining apparatus comprising: a machining head capable of supporting a first rotating tool for machining the workpiece supported by the table; and a plurality of linear movers configured to move the machining head three-dimensionally; and
a first robot comprising: a laser head configured to irradiate the workpiece supported by the table; and a multi-joint arm configured to change a position and an orientation of the laser head, the first robot being configured to machine the workpiece with the laser beam.

2. The machine tool according to claim 1, further comprising a second robot comprising a second multi-joint arm configured to change a position and an orientation of a second rotating tool, the second robot being configured to machine the workpiece supported by the table using the second rotating tool.

3. The machine tool according to claim 2, wherein the machining apparatus, the first robot, and the second robot are disposed around the work holder in a plan view.

4. The machine tool according to one of claims 1 to 3, further comprising:
a wall that defines a machining chamber; and
a door configured to open and close a workpiece passage opening formed in the wall,
wherein the work holder is disposed between the machining apparatus and the workpiece passage opening in a plan view, and
wherein the workpiece passage opening, the first robot, and the machining apparatus are disposed around the work holder in a plan view.

5. The machine tool according to one of claims 1 to 4, further comprising a protector that protects a tip end portion of the laser head,
wherein a recess portion for receiving the tip end portion is defined in the protector.

6. The machine tool according to claim 5, further comprising a coolant supplier configured to supply a coolant liquid toward the workpiece supported by the table,
wherein the tip end portion of the laser head is taken out of the recess portion before the laser beam is emitted from the laser head.

7. The machine tool according to one of claims 1 to 6, further comprising:
a shutter that separates a first region where the first robot is disposed from a second region where the table is disposed; and
a shutter driver configured to open and close the shutter.

8. The machine tool according to one of claims 1 to 7, wherein the work holder comprises a first driver configured to turn the table around a first axis.

9. The machine tool according to claim 8, further comprising a controller configured to control the first robot and the first driver,
wherein in a case where a first machining cycle is defined to comprise turning the table, which supports the workpiece, around the first axis, and then machining the workpiece supported by the table with the laser beam emitted from the laser head supported by the multi-joint arm, the controller is configured to repeatedly perform the first machining cycle at least two times.

10. The machine tool according to claim 8 or 9, wherein the work holder comprises a second driver configured to tilt the table around a second axis, which is different from the first axis.

11. The machine tool according to one of claims 1 to 10, wherein in a case where a first direction is defined as a direction approaching the work holder from the machining apparatus in a plan view, the machine tool further comprising a third driver configured to move the work holder in a direction parallel to the first direction.

12. The machine tool according to one of claims 1 to 8, further comprising a controller configured to control the machining apparatus and the first robot,
wherein the controller is capable of performing:
a first machining mode of controlling the first robot to machine the workpiece supported by the table with the laser beam emitted from the laser head supported by the multi-joint arm; and
a second machining mode of controlling the machining apparatus to machine the workpiece supported by the table using the first rotating tool supported by the machining head,
wherein the first machining mode comprises at least one of:
a first hole forming mode of forming a hole in the workpiece with the laser beam emitted from the laser head;
a trimming mode of removing a burr from the workpiece with the laser beam emitted from the laser head;
a cutout mode of cutting out a portion of the workpiece from the workpiece with the laser beam emitted from the laser head; and
a laser marking mode of engraving at least one item selected from a group consisting of a character, a symbol, and a barcode on a surface of the workpiece with the laser beam emitted from the laser head, and
wherein the second machining mode comprises at least one of:
a surface machining mode of performing surface machining on the workpiece with the first rotating tool; and
a second hole forming mode of forming a hole in the workpiece with the first rotating tool.

13. A workpiece machining method comprising:
an attaching step of attaching a workpiece either directly or indirectly to a table of a work holder;
a first machining step of machining the workpiece supported by the table with a laser beam emitted from a laser head supported by a multi-joint arm of a first robot; and
a second machining step of machining the workpiece supported by the table using a first rotating tool supported by a machining head movable three-dimensionally,
wherein the first machining step comprises moving the laser head using the multi-joint arm, and
wherein the second machining step comprises moving the machining head using a plurality of linear movers.

14. The workpiece machining method according to claim 13, wherein after the first machining step is performed, the second machining step is performed.

15. The workpiece machining method according to claim 13, wherein a part of the first machining step and a part of the second machining step are performed simultaneously.
